# EUROPEAN PATENT SPECIFICATION

(11) **EP 1 389 040 B1**
(45) Date of publication and mention of the grant of the patent: **19.05.2010**
(21) Application number: 02747849.4
(22) Date of filing: 21.05.2002
(51) Int. Cl.: A01N 25/30, A01N 57/20

(54) **PESTICIDE CONCENTRATES CONTAINING ETHERAMINE SURFACTANTS**
ETHERAMIN-TENSIDE ENTHALTENDE PESTIZIDKONZENTRATE
CONCENTRES PESTICIDES CONTENANT DES AGENTS DE SURFACE D'ETHERAMINE

(30) Priority: 21.05.2001 WO PCT/US01/16550; 19.11.2001 US 988340
(43) Date of publication of application: 18.02.2004
(73) Proprietor: Monsanto Technology LLC, St. Louis, MO 63167 (US)
(72) Inventor: AGBAJE, Henry, E., St. Louis, MO 63146 (US); BECHER, David, Z., St. Louis, MO 63141 (US); BATES, Christopher, I., Ballwin, MO 63021 (US); SEIFERT-HIGGINS, Simone, House Spirngs, MO (US); BRINKER, Ronald, J., Ellisville, MO 63021 (US)
(74) Representative: Bosch, Henry
(86) International application number: PCT/US2002/015977
(87) International publication number: WO 2002/102153

(56) References cited:
- WO-A-00/59302
- WO-A-01/11957
- WO-A-97/32476
- DE-A- 4 019 362
- US-A- 5 668 085
- US-A- 5 750 468
- WYRILL J B ET AL: "GLYPHOSATE TOXICITY TO COMMON MILKWEED AND HEMP DOGBANE AS INFLUENCED BY SURFACTANTS" WEED SCIENCE, WEED SCIENCE SOCIETY OF AMERICA, CHAMPAIGN, IL, US, vol. 25, no. 3, 1 May 1977 (1977-05-01), pages 275-287, XP002034447 ISSN: 0043-1745 cited in the application

## Description

### BACKGROUND OF THE INVENTION

Glyphosate is well known in the art as an effective post-emergent foliar-applied herbicide. In its acid form, glyphosate has a structure represented by formula (1): 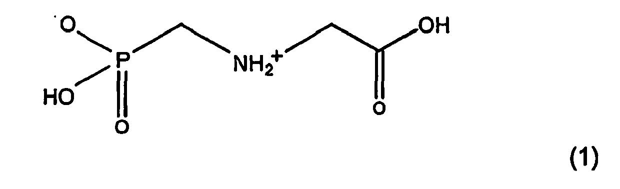 and is relatively insoluble in water (1.16% by weight at 25 °C). For this reason it is typically formulated as a water-soluble salt.

Monobasic, dibasic and tribasic salts of glyphosate can be made. However, it is generally preferred to formulate glyphosate and apply glyphosate to plants in the form of a monobasic salt, although various dibasic formulations are also known. The most widely used salt of glyphosate is the mono(isopropylammonium), often abbreviated to IPA, salt. Commercial herbicides of Monsanto Company having the IPA salt of glyphosate as active ingredient include Roundup®, Roundup® UltraMax, Roundup® Ultra, Roundup® Xtra and Rodeo® herbicides. All of these are aqueous solution concentrate (SL) formulations and are generally diluted in water by the user prior to application to plant foliage. Another glyphosate salt which have been commercially formulated as SL formulations include the trimethylsulfonium, often abbreviated to TMS, salt, used for example in Touchdown® herbicide of Zeneca (Syngenta).

Various salts of glyphosate, methods for preparing salts of glyphosate, formulations of glyphosate or its salts and methods of use of glyphosate or its salts for killing and controlling weeds and other plants are disclosed in U.S. Patent No. 4,507,250 to Bakel, U.S. Patent No. 4,481,026 to Prisbylla, U.S. Patent No. 4,405,531 to Franz, U.S. Patent No. 4,315,765 to Large, U.S. Patent No. 4,140,513 to Prill, U.S. Patent No. 3,977,860 to Franz, U.S. Patent No. 3,853,530 to Franz, and U.S. Patent No. 3,799,758 to Franz.

Among the water soluble salts of glyphosate known in the literature, but never used commercially before the priority filing date hereof, is the potassium, salt, having a structure represented by formula (2): 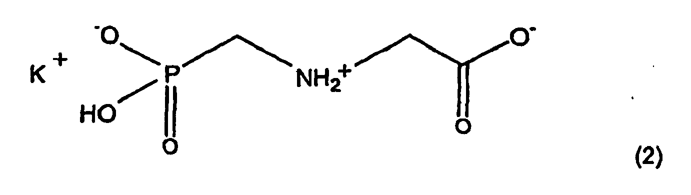 in the ionic form predominantly present In aqueous solution at a pH of about 4. Glyphosate potassium salt has a molecular weight of 207. This salt is disclosed, for example, by Franz in U.S. Patent No. 4,405,531 cited above, as one of the "alkali metal" salts of glyphosate useful as herbicides, with potassium being specifically disclosed as one of the alkali metals, along with lithium, sodium, cesium and rubidium. Example C discloses the preparation of the monopotassium salt by reacting the specified amounts of glyphosate acid and potassium carbonate in an aqueous medium.

Very few herbicides have been commercialized as their potassium salts. The Pesticide Manual, 11th Edition, 1997, lists as potassium salts the auxin type herbicides 2,4-DB ((2,4-dichlorophenoxy)butanoic acid), dicamba (3,6-dichloro-2-methoxybenzoic acid), dichlorprop (2-(2,4-dichlorophenoxy)propanoic acid), MCPA ((4-chloro-2-methylphenoxy)acetic acid), and picloram (4-amino-3,5,6-trichloro-2-pyridinecarboxylic acid), the active ingredient of certain herbicide products sold by Dow Agrosciences under the trademark Tordon.

The solubility of glyphosate potassium salt in water is recorded in pending application Serial No. 09/444,766, filed November 22, 1999. As disclosed therein, glyphosate potassium salt has a solubility In pure water at 20 °C of about 54% by weight, that is, about 44% glyphosate acid equivalent (a.e.) by weight. This is very similar to the solubility of the IPA salt. Concentrations expressed as percent by weight herein relate to parts by weight of salt or acid equivalent per 100 parts by weight of solution. Thus a simple aqueous solution concentrate of glyphosate potassium salt can readily be provided at a concentration of, for example, 44% a.e. by weight, comparable to that commercially obtainable with glyphosate IPA salt, as in the aqueous solution concentrate available from Monsanto Company under the name Roundup® D-Pak™. Somewhat higher concentrations can be obtained by slight overneutralization, 5 to 10% for example, of an aqueous solution of glyphosate potassium salt with potassium hydroxide.

A major advantage of the IPA salt over many other salts of glyphosate has been the good compatibility in aqueous solution concentrate formulations of that salt with a wide range of surfactants. As used herein, the term "surfactant" is intended to include a wide range of adjuvants that can be added to herbicidal glyphosate compositions to enhance the herbicidal efficacy thereof, as compared to the activity of the glyphosate salt in the absence of such adjuvant, stability, formulability or other beneficial solution property, irrespective of whether such adjuvant meets a more traditional definition of "surfactant."

Glyphosate salts generally require the presence of a suitable surfactant for best herbicidal performance. The surfactant can be provided in the concentrate formulation, or it can be added by the end user to the diluted spray composition. The choice of surfactant has a major bearing on herbicidal performance. For example, in an extensive study reported in Weed Science, 1977, volume 25, pages 275-287, Wyrill and Burnside found wide variation among surfactants in their ability to enhance the herbicidal efficacy of glyphosate, applied as the IPA salt.

Beyond some broad generalizations, the relative ability of different surfactants to enhance the herbicidal effectiveness of glyphosate is highly unpredictable.

Surfactants tending to give the most useful enhancement of glyphosate herbicidal effectiveness are generally but not exclusively cationic surfactants, including surfactants which form cations in aqueous solution or dispersion at pH levels of around 4-5 characteristic of SL formulations of monobasic salts of glyphosate. Examples are long-chain (typically C₁₂ to C₁₈) tertiary alkylamine surfactants and quaternary alkylammonium surfactants. An especially common tertiary alkylamine surfactant used in aqueous solution concentrate formulations of glyphosate IPA salt has been the very hydrophilic surfactant polyoxyethylene (15) tallowamine, *i*.*e*., tallowamine having in total about 15 moles of ethylene oxide in two polymerized ethylene oxide chains attached to the amine group as shown in formula (3): 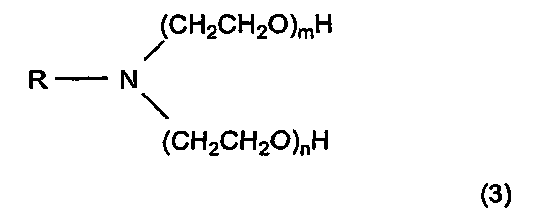 wherein R is a mixture of predominantly C₁₆ and C₁₈ alkyl and alkenyl chains derived from tallow and the total of m+n is an average number of about 15.

For certain applications, it has been found desirable to use a somewhat less hydrophilic alkylamine surfactant, such as one having less than about 10 moles of ethylene oxide, as suggested in U.S. Patent No. 5,668,085 to Forbes et al., for example polyoxyethylene (2) cocoamine. That patent discloses illustrative aqueous compositions comprising such a surfactant together with the IPA, ammonium or potassium salts of glyphosate. The highest concentration of glyphosate in the potassium salt formulations shown in Table 3 of the '085 patent is 300 g glyphosate a.e./l, with a weight ratio of glyphosate a.e. to surfactant of 2:1.

A class of alkoxylated alkylamines is disclosed in WO 00/59302 for use in herbicidal spray compositions. Potassium glyphosate solutions including various Jeffamine™ EO/PO propylamines or propyldiamines are described therein.

A wide variety of quaternary ammonium surfactants have been disclosed as components of aqueous solution concentrate formulations of glyphosate IPA salt. Illustrative examples are N-methylpolyoxyethylene (2) cocoammonium chloride, disclosed in European Patent No. 0274369, N-methylpolyoxyethylene (15) cocoammonium chloride, disclosed in U.S. Patent No. 5,317,003, and various quaternary ammonium compounds having formula (4):

(R¹)(R²)(R³)N⁺-CH₂CH₂O-(CH₂CH(CH₃)O)ₙH Cl⁻ (4)

where R¹, R²and R³ are each C₁₋₃ alkyl groups and n is an average number from 2 to 20, disclosed in U.S. Patent No. 5,464,807.

PCT Publication No. WO 97/16969 discloses aqueous solution concentrate compositions of glyphosate, in the form of the IPA, methylammonium and diammonium salts, comprising a quaternary ammonium surfactant and an acid salt of a primary, secondary or tertiary alkylamine compound.

Other cationic surfactants which have been indicated as useful in aqueous solution concentrate compositions of glyphosate salts include those disclosed in PCT Publication No. WO 95/33379. It is further disclosed in PCT Publication No. WO 97/32476 that highly concentrated aqueous compositions of glyphosate salts can be made with certain of these same cationic surfactants, with the further addition of a defined component that enhances stability of the compositions. Glyphosate salts exemplified therein are the IPA salt and the mono- and diammonium salts.

Among amphoteric or zwitterionic surfactants reported to be useful components of aqueous solution concentrate formulations of glyphosate IPA salt are alkylamine oxides such as polyoxyethylene (10-20) tallowamine oxide, disclosed in U.S. Patent No. 5,118,444.

Nonionic surfactants are generally reported to be less compatible with glyphosate than cationic or amphoteric surfactants when used as the sole surfactant component of SL formulations of glyphosate. Exceptions appear to include certain alkyl polyglucosides, as disclosed for example in Australian Patent No. 627503. Other nonionics that have been disclosed as useful with glyphosate include polyoxyethylene (10-100) C₁₆₋₂₂ alkylethers, as disclosed in PCT Publication No. WO 98/17109. Anionic surfactants, except in combination with cationic surfactants as disclosed in U.S. Patent No. 5,389,598 and U.S. Patent No. 5,703,015, are generally of little interest in SL formulations of glyphosate. The '015 patent discloses a surfactant blend of a dialkoxylated alkylamine and an anionic eye irritancy reducing compound. The surfactant blend is disclosed as being suitable for preparation of aqueous solution concentrate formulations of various glyphosate salts, the potassium salt being included in the list of salts mentioned. Concentrates of the '015 patent contain from about 5 to about 50%, preferably about 35% to about 45% glyphosate a.i. and from about 5 to about 25% surfactant. Further, PCT Publication No. WO 00/08927 discloses the use of certain polyalkoxylated phosphate esters in combination with certain polyalkoxylated amidoamines in glyphosate containing formulations. Potassium is identified as one of several salts of glyphosate noted as being "suitable."

Recently, a class of alkyletheramine, alkyletherammonium salt and alkyletheramine oxide surfactants has been disclosed in U.S. Patent No. 5,750,468 to be suitable for preparation of aqueous solution concentrate formulations of various glyphosate salts, the potassium salt being included in the list of salts mentioned. It is disclosed therein that an advantage of the subject surfactants when used in an aqueous composition with glyphosate salts is that these surfactants permit the glyphosate concentration of the composition to be increased to very high levels.

It is likely that serious consideration of glyphosate potassium salt as a herbicidal active ingredient has been inhibited by the relative difficulty in formulating this salt as a highly concentrated SL product together with preferred surfactant types. For example, a widely used surfactant in glyphosate IPA salt compositions, namely polyoxyethylene (15) tallowamine of formula (3) above, is highly incompatible in aqueous solution with glyphosate potassium salt. Further, PCT Publication No. WO 00/15037 notes the low compatibility of alkoxylated alkylamine surfactants in general with high-strength glyphosate concentrates. As disclosed therein, in order to "build in" an effective level of surfactant, an alkylpolyglycoside surfactant is required in combination with an alkoxylated alkylamine surfactant to obtain high-strength concentrates containing the potassium salt of glyphosate.

The addition of such alkylpolyglycosides resulted in higher viscosity formulations (as compared to formulations without alkylpolyglycosides). Such an increase in the viscosity of these high-strength formulations is undesirable for various reasons. In addition to being more difficult to conveniently pour from the container or to wash residues therefrom, the deleterious effects resulting from higher viscosity formulations is more dramatically observed with respect to pumping requirements. Increasing volumes of liquid aqueous glyphosate products are being purchased by end-users in large refillable containers sometimes known as shuttles, which typically have an integral pump or connector for an external pump to permit transfer of liquid. Liquid aqueous glyphosate products are also shipped in bulk, in large tanks having a capacity of up to about 100,000 liters. The liquid is commonly transferred by pumping to a storage tank at a facility operated by a wholesaler, retailer or cooperative, from which it can be further transferred to shuttles or smaller containers for onward distribution. Because large quantities of glyphosate formulations are purchased and transported in early spring, the low temperature pumping characteristics of such formulations are extremely important.

When such alkylpolyglycosides (e.g., Agrimul™ APG-2067 and 2-ethylhexyl glucoside) are added to a glyphosate concentrate, the formulated product is dark brown in color. It is desirable for a formulated glyphosate product to be lighter in color than the alkylpolyglycoside-containing products as disclosed in WO 00/15037, which have a color value of 14 to 18 as measured by a Gardner colorimeter. When dye is added to a formulated glyphosate product having a Gardner color greater than about 10, the concentrate remains dark brown in color. Concentrates having a Gardner color value of 10 are difficult to dye a wide variety of colors, for example blue, green, red or yellow, as is often desired to distinguish the glyphosate product from other herbicidal products.

It would be desirable to provide a storage-stable aqueous concentrate composition (i.e. formulation) of the potassium salt of glyphosate, or other glyphosate salts other than IPA glyphosate, having an agriculturally useful surfactant content, or that is "fully loaded" with surfactant. These formulations exhibit a reduced viscosity such that they may be pumped with standard bulk pumping equipment at 0°C at rates of at least 7.5 gallons per minute, usually more than 10 gallons per minute and preferably greater than 12.5 gallons per minute. An "agriculturally useful surfactant content" means containing one or more surfactants of such a type or types and in such an amount that a benefit is realized by the user of the composition in terms of herbicidal effectiveness by comparison with an otherwise similar composition containing no surfactant. By "fully loaded" is meant having a sufficient concentration of a suitable surfactant to provide, upon conventional dilution in water and application to foliage, herbicidal effectiveness on one or more important weed species without the need for further surfactant to be added to the diluted composition.

By "storage-stable," in the context of an aqueous concentrate composition of glyphosate salt further containing a surfactant, is meant not exhibiting phase separation on exposure to temperatures up to about 50 °C for 14-28 days, and preferably not forming crystals of glyphosate or salt thereof on exposure to a temperature of about 0 °C for a period of up to about 7 days (i.e., the composition must have a crystallization point of 0 °C or lower). For aqueous solution concentrates, high temperature storage stability is often indicated by a cloud point of about 50 °C or more. Cloud point of a composition is normally determined by heating the composition until the solution becomes cloudy, and then allowing the composition to cool, with agitation, while its temperature is continuously monitored. A temperature reading taken when the solution clears is a measure of cloud point. A cloud point of 50 °C or more is normally considered acceptable for most commercial purposes for a glyphosate SL formulation. Ideally the cloud point should be 60 °C or more, and the composition should withstand temperatures as low as about -10 °C for up to about 7 days without crystal growth, even in the presence of seed crystals of the glyphosate salt.

A surfactant that is described herein as "compatible" with a glyphosate salt at specified surfactant and glyphosate a.e. concentrations is one that provides a storage-stable aqueous concentrate as defined immediately above containing that surfactant and salt at the specified concentrations.

Users of liquid herbicidal products typically meter the dosage by volume rather than by weight, and such products are usually labeled with directions for suitable use rates expressed in volume per unit area, e.g., liters per hectare (l/ha) or fluid ounces per acre (oz/acre). Thus the concentration of herbicidal active ingredient that matters to the user is not percent by weight, but weight per unit volume, e.g., grams per liter (g/l) or pounds per gallon (lb/gal). In the case of glyphosate salts, concentration is often expressed as grams of acid equivalent per liter (g a.e./l).

Historically, surfactant-containing glyphosate IPA salt products such as Roundup® and Roundup® Ultra herbicides of Monsanto Company have most commonly been formulated at a glyphosate concentration of about 360 g a.e./I. The surfactant-containing glyphosate TMS salt product Touchdown® of Zeneca has been formulated at a glyphosate concentration of about 330 g a.e./l. Products at lower a.e. concentration, *i*.*e*., more dilute, are also sold in some markets, but carry a cost penalty per unit of glyphosate they contain, primarily reflecting packaging, shipping and warehousing costs.

Further benefits in cost savings and in convenience to the user are possible if a "fully loaded" aqueous concentrate composition, or at least one having an agriculturally useful surfactant content, can be provided at a glyphosate concentration of at least about 320 g a.e./l, 340 g a.e./l, or significantly more than 360 g a.e./l, for example at least about 420 g a.e./l or more, or at least 440, 450, 460, 470, 480, 490, 500, 510, 520, 530, 540, 550 or 600 g a.e./l or more.

At very high glyphosate a.e. concentrations such as these, a significant problem normally occurs. This is the difficulty in pouring and/or pumping of the aqueous concentrate arising from the high viscosity of the concentrate, especially as manifested at low temperatures. It would therefore be highly desirable to have a highly concentrated aqueous solution of glyphosate potassium salt fully loaded with an agriculturally useful surfactant, such formulation preferably being less viscous than glyphosate potassium salt formulations containing alkylpolyglycoside surfactants, such as those disclosed in PCT Publication No. WO 00/15037.

There is a continuing need for surfactants which are compatible with a pesticidal formulation, such as an aqueous glyphosate herbicidal concentrate. The surfactants of the invention include novel surfactants as well as known surfactants not previously used in pesticidal formulations. Surfactants that are particularly compatible with potassium glyphosate or other glyphosate salts other than IPA glyphosate have been identified for formulating concentrates having improved viscosity, storage stability and loading as compared to known glyphosate concentrates.

As will be clear from the disclosure that follows, these and other benefits are provided by the present invention.

### SUMMARY OF THE INVENTION

Among the several features of this invention, therefore, may be noted the provision of a high load liquid pesticidal composition useful in agriculture wherein the pesticide can be formulated in a concentration as high as about 500 grams a.e./liter, preferably at high as about 600 grams a.e./liter, the provision of such a composition with a viscosity less than about 1000 centipoise at 0°C, preferably less than about 500 centipoise at 0°C; the provision of such a composition that will remain homogeneous after storage for at least 7 days at 50°C; the provision of such a composition that will not exhibit crystallization after at least 7 days at about 0°C, preferably -10°C; and the provision of such a composition that has a broad weed control spectrum that is relatively easy to use.

A first embodiment of the present invention is directed to an aqueous pesticidal composition comprising glyphosate or a salt or ester thereof and an agriculturally useful amount of a cationic surfactant composition for use in an aqueous pesticidal formulation which comprises a first surfactant selected from the group consisting of the first surfactant as per claim 1 and a second surfactant as per claim 1.

Another embodiment is directed to a herbicidal method as per claim 29 or 30.

### DETAILED DESCRIPTION OF THE PREFERRED EMBODIMENTS

Aqueous pesticide concentrates are often difficult to formulate because many surfactants can be incompatible with water-soluble herbicides. This is especially true of some glyphosate salts, such as potassium glyphosate. It has been discovered that cationic etheramine surfactants enhance the efficacy of such pesticide compositions. While certain etheramines are exceptionally compatible with glyphosate formulations, it is not always possible to make a fully loaded formulation with very high pesticide loadings. A hydrotrope can be added to such compositions to stabilize them against phase separation. Ordinary hydrotropes, however, add to the cost and reduce the total possible loading without increasing biological performance. It has been discovered that various diamine, triamine and other polyamine surfactants are effective in stabilizing pesticide compositions and in compatibilizing etheramine surfactants within the compositions.

The pesticide compositions of the invention comprise a water-soluble pesticide and a cationic surfactant composition. The cationic surfactant composition comprises at least two surfactants. Preferably, one surfactant is an etheramine surfactant, and the other is preferably a compatibilizing surfactant. The compatibilizing surfactant is preferably a diamine, triamine or polyamine.

The compatibilizing surfactants may also function as co-surfactants with the etheramine surfactants. Hence, the compatibilizing surfactants may advantageously function as both surfactants and hydrotropes. This property is especially beneficial because it affords a net reduction in excipient loading with a concomitant increase in active loading capacity.

In one embodiment of the invention, it has been found that in an aqueous concentrate formulation, an unexpectedly high weight/volume concentration of glyphosate potassium salt can be obtained in the presence of the surfactant composition of the invention, with the resulting composition exhibiting acceptable, or in some instances improved, viscosity and storage stability characteristics, and with herbicidal efficacy similar to or greater than commercial glyphosate formulations.

The first surfactant component of the composition is one or more of the following:
(a) dialkoxylated amines or quaternary ammonium salts having the formulae: 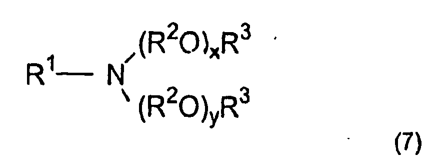 or 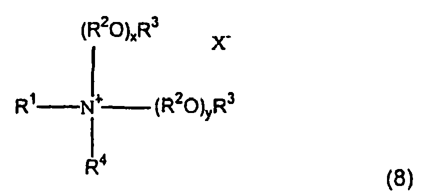 wherein R¹ and R⁴ are independently hydrogen or hydrocarbyl or substituted hydrocarbyl having from 1 to 30 carbon atoms, -R⁵SR⁶, or -(R²O)_{z}R³, R² in each of the x (R²O), y (R²O) and z (R²O) groups is independently C₂-C₄ alkylene, R³ is hydrogen, or a linear or branched alkyl group having from 1 to about 22 carbon atoms, R⁵ is a linear or branched alkyl group having from 6 to 30 carbon atoms, R⁶ is a linear or branched alkyl group having from 4 to 15 carbon atoms, x, y and z are independently an average number from 1 to 40, and X- is an agriculturally acceptable anion. In this context, preferred R¹ and R⁴ hydrocarbyl groups are hydrogen, linear or branched alkyl, linear or branched alkenyl, linear or branched alkynyl, aryl, or aralkyl groups. Preferably, R¹ and R⁴ are independently hydrogen, a linear or branched alkynyl, aryl, or aralkyl group having from about 1 to about 30 carbon atoms, R² in each of the x (R²O), y (R²O) and z (R²O) groups is independently C₂-C₄ alkylene, R³ is hydrogen, methyl or ethyl, and x and y are independently an average number from 1 to 20. More preferably, R¹ and R⁴ are independently hydrogen or a linear or branched alkynyl, aryl, or aralkyl group having from 8 to 25 carbon atoms, R² in each of the x (R²O), y (R²O) and z (R²O) groups is independently ethylene or propylene, R³ is hydrogen or methyl, and x and y are independently an average number from 1 to 30. Even more preferably, R¹ is hydrogen or a linear or branched alkynyl, aryl, or aralkyl group having from 8 to 22 carbon atoms, R² in each of the x (R²O), y (R²O) and z (R²O) groups is independently ethylene or propylene, R³ is hydrogen or methyl, and x and y are independently an average number from 1 to 5.
   In another preferred embodiment, R¹ is hydrogen, R² in each of the x(R²O) and y(R²O) groups is independently ethylene or propylene, R³ is C12-18 linear or branched alkyl, and x and y are independently an average number from 1 to 10;
(b) aminated alkoxylated alcohol having the formula: 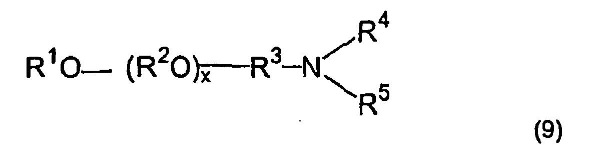 or 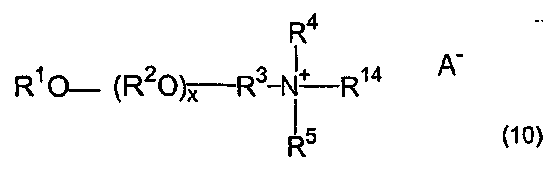 wherein R¹ is hydrogen or hydrocarbyl or substituted hydrocarbyl having from 1 to 30 carbon atoms; R² in each of the x (R²O) and y (R²O) groups is independently C₂-C₄ alkylene; R³ and R⁶ are each independently hydrocarbylene or substituted hydrocarbylene having from 1 to 6 carbon atoms; R⁴ is hydrogen, hydrocarbyl or substituted hydrocarbyl having from 1 to about 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, -(R⁶)ₙ-C(O)OR⁷, or -C(=S)NR¹²R¹³; R⁵ is -(R⁶)ₙ-C(O)OR⁷ or -(R⁸)ₙ-(R²O)_{y}R¹; R⁷ is hydrogen or a linear or branched alkyl group having 1 to about 4 carbon atoms; R¹¹, R¹² and R¹³ are hydrogen, hydrocarbyl or substituted hydrocarbyl, R¹⁴ is hydrogen, hydrocarbyl or substituted hydrocarbyl having from 1 to 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, or -C(=S)NR¹²R¹³, n is 0 or 1, x and y are independently an average number from 1 to 60, and A- is an agriculturally acceptable anion. In this context, preferred R¹, R³, R⁴, R⁵, R⁶, R¹¹, R¹², R¹³ and R¹⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. In one embodiment, R³ is linear alkylene, preferably ethylene, and R¹, R², R⁴ and R⁵ are as previously defined. In another embodiment, R⁴ is H, alkyl, or -R²OR⁷ and R¹, R², R³, R⁵ and R⁷ are as previously defined. In yet another embodiment, R¹ is hydrogen or a linear or branched alkyl or linear or branched alkenyl group having from 8 to 25 carbon atoms, R² in each of the x (R²O) groups is independently C₂-C₄ alkylene, R³ is a linear or branched alkylene group having from 1 to 6 carbon atoms, R⁴ is hydrogen or a linear or branched alkyl group having from 1 to 6 carbon atoms, and x is an average number from 2 to 30. More preferably, R¹ is hydrogen or a linear or branched alkyl group having from 12 to 22 carbon atoms, R² in each of the x (R²O) groups is independently ethylene or propylene, R³ is a linear or branched alkylene group having from 1 to about 4 carbon atoms, R⁴ is hydrogen, methyl, or tris(hydroxymethyl)methyl, and x is an average number from 2 to 30. Even more preferably, R¹ is a linear or branched alkyl group having from 12 to 18 carbon atoms, R² in each of the x (R²O) groups is independently ethylene or propylene, R³ is ethylene, R⁴ is hydrogen or methyl, and x is an average number from 4 to 20. Most preferably, R¹ is a linear or branched alkyl group having from 12 to 18 carbon atoms, R² in each of the x (R²O) groups is independently ethylene or propylene, R³ is ethylene, R⁴ is methyl, and x is an average number from 4 to 20. Compounds of formula (10) have the preferred groups as described above and R¹⁴ is preferably hydrogen or a linear or branched alkyl or alkenyl group, more preferably alkyl, and most preferably methyl. Preferred monoalkoxylated amines include PEG 13 or 18 C₁₄₋₁₅ ether propylamines and PEG 7, 10, 15 or 20 C₁₆₋₁₈ ether propylamines (from Tomah) and PEG 13 or 18 C₁₄₋₁₅ ether dimethyl propylamines and PEG 10, 15 or 20 or 25 C₁₆₋₁₈ ether dimethyl propylamines (from Tomah).
(c) etheramines or ether quaternary ammonium salts having the formulae: 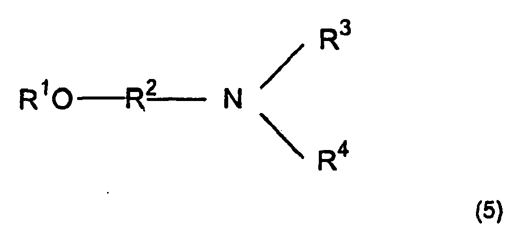 or 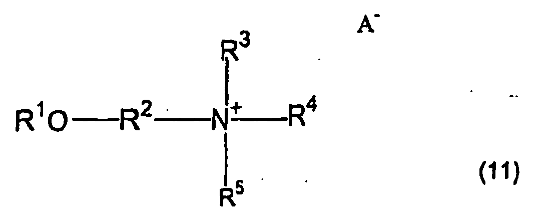 wherein R¹ is hydrogen or a hydrocarbyl or substituted hydrocarbyl having from 1 to 30 carbon atoms; R² is hydrocarbylene or substituted hydrocarbylene having from 2 to 30 carbon atoms; R³, R⁴ and R⁵ are independently hydrogen, hydrocarbyl or substituted hydrocarbyl having from 1 to 30 carbon atoms, or -(R⁶O)ₓR⁷, R⁶ in each of the x(R⁶O) groups is independently C₂-C₄ alkylene, R⁷ is hydrogen, or a linear or branched alkyl group having from 1 to 4 carbon atoms, x is an average number from 1 to 50, and A- is an agriculturally acceptable anion. In this context, preferred R¹, R², R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is hydrogen or a linear or branched alkyl, linear or branched alkenyl, linear or branched alkynyl, aryl, or aralkyl group having from 8 to 25 carbon atoms, R² is a linear or branched alkylene or alkenylene group having from 2 to 30 carbon atoms, R³, R⁴ and R⁵ are independently hydrogen, a linear or branched alkyl, linear or branched alkenyl, linear or branched alkynyl, aryl, or aralkyl group having from 1 to about 30 carbon atoms, or -(R⁶O)ₓR⁷, R⁶ in each of the x (R⁶O) groups is independently C₂-C₄ alkylene, R⁷ is hydrogen, methyl or ethyl, and x is an average number from 1 to about 30. More preferably, R¹ is a linear or branched alkyl or alkenyl group having from 8 to 22 carbon atoms, R² is a linear or branched alkylene or alkenylene group having from 2 to 6 carbon atoms, R³, R⁴ and R⁵ are independently hydrogen, a linear or branched alkyl or alkenyl group having from 1 to 6 carbon atoms, or -(R⁶O)ₓR⁷, R⁶ in each of the x (R⁵ O) groups is independently ethylene or propylene, R⁷ is hydrogen or methyl, and x is an average number from 1 to 15. Most preferably, R¹ is a linear or branched alkyl or alkenyl group having from 8 to 18 carbon atoms, R² is ethylene or propylene, R³, R⁴ and R⁵ are independently hydrogen, methyl, or -(R⁶O)ₓR⁷, R⁶ in each of the x (R⁶O) groups is independently ethylene or propylene, R⁷ is hydrogen, and x is an average number from 1 to 5.
(d) a monoalkoxylated amine or quaternary ammonium salt having the formulae: 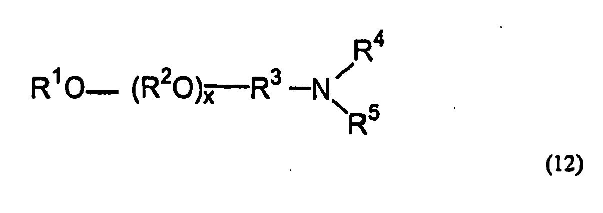 or 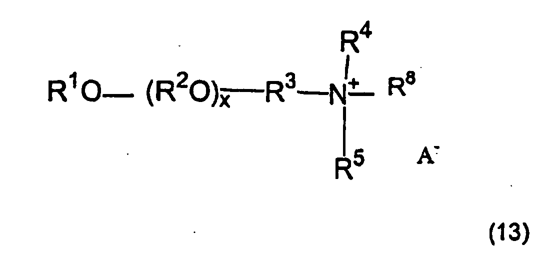 wherein R¹ is hydrogen or hydrocarbyl or substituted hydrocarbyl having from 1 to 30 carbon atoms; R² in each of the x (R²O) and y (R²O) groups is independently C₂-C₄ alkylene; R³ is hydrocarbylene or substituted hydrocarbylene having from 2 to 30 carbon atoms; R⁴, R⁵ and R⁸ are each independently hydrogen, hydrocarbyl or substituted hydrocarbyl having from 1 to 30 carbon atoms, -(R⁶)ₙ-(R²O)_{y}R⁷, or R⁴ and R⁵, together with the nitrogen atom to which they are attached, form a cyclic or heterocyclic ring; R⁶ is hydrocarbylene or substituted hydrocarbylene having from 1 to 30 carbon atoms; R⁷ is hydrogen or a linear or branched alkyl group having 1 to 4 carbon atoms, n is 0 or 1, x and y are independently an average number from 1 to 60, and A- is an agriculturally acceptable anion. In this context, preferred R¹, R³, R⁴, R⁵, R⁶ and R⁸ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl group having from 8 to 25 carbon atoms, R² in each of the x (R²O) groups is independently C₂-C₄ alkylene, R³ is a linear or branched alkylene group having from 2 to 20 carbon atoms, R⁴, R⁵ and R⁸ are each independently hydrogen or a linear or branched alkyl group having from 1 to 6 carbon atoms, and x is an average number from 1 to 30. More preferably, R¹ is a linear or branched alkyl group having from 12 to 22 carbon atoms, R² in each of the x (R²O) groups is independently ethylene or propylene, R³ is a linear or branched alkylene group having from 2 to 6 carbon atoms, R⁴, R⁵ and R⁸ are each independently hydrogen, methyl, or tris(hydroxymethyl)methyl, and x is an average number from 2 to 30. Even more preferably, R¹ is a linear or branched alkyl group having from 12 to 18 carbon atoms, R² in each of the x (R²O) groups is independently ethylene or propylene, R³ is ethylene or propylene, R⁴, R⁵ and R⁸ are each independently hydrogen, methyl or tris(hydroxymethyl)methyl, and x is an average number from 4 to 20. Most preferably, R¹ is a linear or branched alkyl group having from 12 to 18 carbon atoms, R² in each of the x (R²O) groups is independently ethylene or propylene, R³ is ethylene, R⁴, R⁵ and R⁸ are methyl, and x is an average number from 4 to 20. Preferred monoalkoxylated amines include PEG 13 or 18 C₁₄₋₁₅ ether propylamines and PEG 7,10, 15 or 20 C₁₆₋₁₈ ether propylamines (from Tomah) and PEG 13 or 18 C₁₄₋₁₅ ether dimethyl propylamines and PEG 10, 15 or 20 or 25 C₁₆₋₁₈ ether dimethyl propylamines (from Tomah) and Surfonic™ AGM-550 from Huntsman.
(e) alkoxylated poly(hydroxyalkyl)amines having the formula: 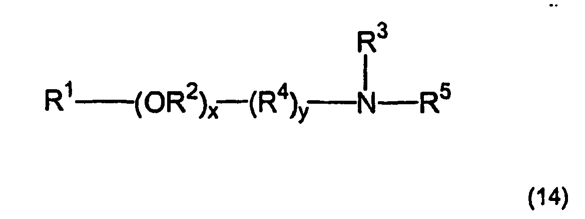 wherein R¹ and R³ are independently hydrogen, hydrocarbyl or substituted hydrocarbyl having from 1 to 30 carbon atoms, R² in each of the x (R²O) groups is independently C₂-C₄ alkylene; R⁴ is hydrocarbylene or substituted hydrocarbylene having from 1 to 30 carbon atoms, R⁵ is hydroxyalkyl, polyhydroxyalkyl, or poly(hydroxyalkyl)alkyl; x is an average number from 0 to 30, and y is 0 or 1. In this context, preferred R¹, R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) group.
(f) monoalkoxylated amines having the formula: 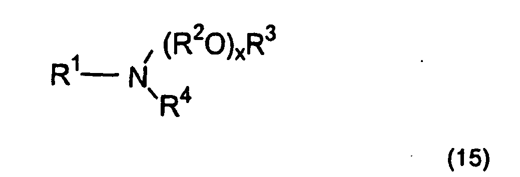 wherein R¹ and R⁴ are independently hydrocarbyl or substituted hydrocarbyl groups having from 1 to 30 carbon atoms or -R⁵SR⁶, R² in each of the x (R²O) groups is independently C₂-C₄ alkylene, R³ is hydrogen, or a linear or branched alkyl group having from 1 to 4 carbon atoms, R⁵ is a linear or branched alkyl group having from 6 to 30 carbon atoms, R⁶ is a hydrocarbyl or substituted hydrocarbyl group having from 4 to 15 carbon atoms and x is an average number from 1 to 60. In this context, preferred R¹, R⁴, and R⁶ hydrocarbyl groups are linear or branched alkyl, linear or branched alkenyl, linear or branched alkynyl, aryl, or aralkyl groups. In one embodiment, R¹ includes from 7 to 30 carbon atoms, preferably from 8 to 22 carbon atoms, and the remaining groups are as described above. Preferably, R¹ and R⁴ are independently a linear or branched alkyl or linear or branched alkenyl group having from 1 to about 25 carbon atoms, R² in each of the x (R²O) groups is independently C₂-C₄ alkylene, R³ is hydrogen, methyl or ethyl, and x is an average number from 1 to 40. More preferably, R¹ and R⁴ are independently a linear or branched alkyl group having from 1 to 22 carbon atoms, R² in each of the x (R²O) groups is independently ethylene or propylene, R³ is hydrogen or methyl, and x is an average number from 1 to 30. Even more preferably, R¹ is a linear or branched alkyl group having from 8 to 22 carbon atoms and R⁴ is a linear or branched alkyl group having from 1 to 22 carbon atoms, R² in each of the x (R²O) groups is independently ethylene or propylene, R³ is hydrogen or methyl, and x is an average number from 1 to 10. Most preferably, R¹ is a linear or branched alkyl group having from 16 to 22 carbon atoms and R⁴ is methyl, R² in each of the x (R²O) groups is ethylene, R³ is hydrogen, and x is an average number from 1 to 5, or R¹ is a linear or branched alkyl group having from 8 to 15 carbon atoms and R⁴ is methyl, R² in each of the x (R²O) groups is ethylene, R³ is hydrogen, and x is an average number from 5 to 10.
(g) monoalkoxylated quaternary ammonium salts having the formula: 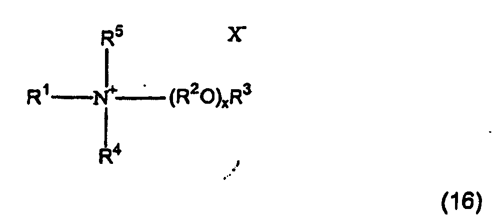 wherein R¹ and R⁵ are independently hydrogen or hydrocarbyl or substituted hydrocarbyl having from 1 to 30 carbon atoms, R⁴ is hydrocarbyl or substituted hydrocarbyl having from 1 to 30 carbon atoms, R² in each of the x (R²O) groups is independently C₂-C₄ alkylene, R³ is hydrogen, or a linear or branched alkyl group having from 1 to 30 carbon atoms, x is an average number from 1 to 60, and X- is an agriculturally acceptable anion;
(h) an amine having the formula: 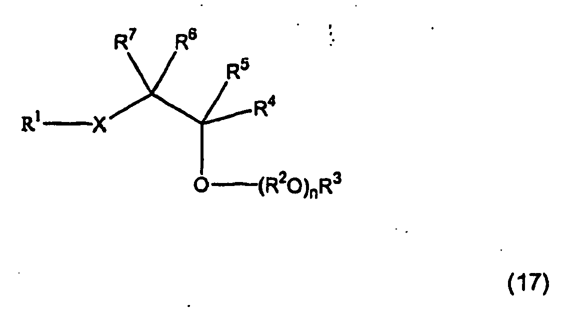 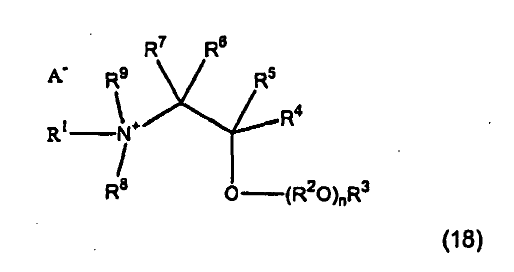 or 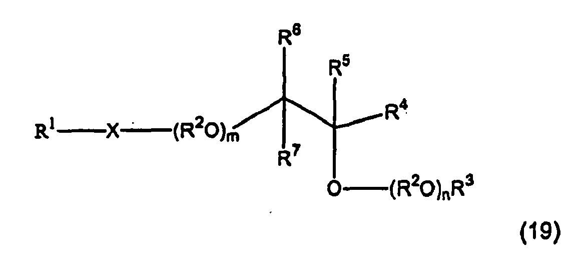 or 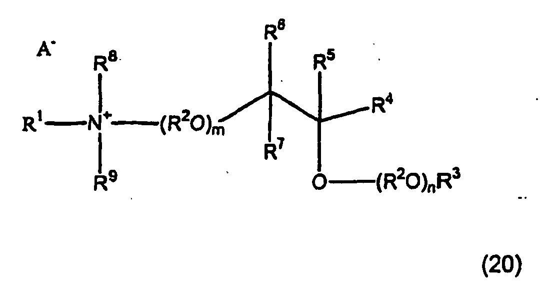 wherein R¹ and R⁹ are independently hydrocarbyl or substituted hydrocarbyl having from 1 to 30 carbon atoms, or -(R²O)ₚR¹³; R² in each of the m (R²O), n (R²O), p (R²O) and q (R²O) groups is independently C₂-C₄ alkylene; R³, R⁸, R¹³ and R¹⁵ are independently hydrogen, or a hydrocarbyl or substituted hydrocarbyl having from 1 to 30 carbon atoms; R⁴ is -(CH₂)_{y}OR¹³ or -(CH₂)_{y}O(R²O)_{q}R³; R⁵, R⁶ and R⁷ are independently hydrogen, hydrocarbyl or substituted hydrocarbyl having from 1 to 30 carbon atoms, or R⁴; R¹⁴ is hydrogen, hydrocarbyl or substituted hydrocarbyl having from 1 to 30 carbon atoms, or -(CH₂)_{z}O(R²O)ₚR³; m, n, p and q are independently an average number from 1 to 50; X is -O-, -N(R¹⁴)-, -C(O)-, -C(O)O-, -OC(O)-, -N(R¹⁵)C(O)-, -C(O)N(R¹⁵)-, -S-, -SO-, or -SO₂-; t is 0 or 1; A- is an agriculturally acceptable anion; and y and z are independently an integer from 0 to 30. In this context, preferred R¹, R³, and R⁵-R¹⁵ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R⁹, and R¹² are independently linear or branched alkyl or alkenyl groups having from 1 to 22 carbon atoms, or -(R²O)ₚR¹³; R² In each of the m (R²O), n (R²O), p (R²O) and q (R²O) groups is independently C₂-C₄ alkylene; R³ is hydrogen, methyl or ethyl; R⁴ is -(CH₂)_{y}OR¹³ or -(CH₂)_{y}O(R²O)_{q}R³; R⁸, R¹¹, R¹³ and R¹⁵ are independently hydrogen, or linear or branched alkyl or alkenyl groups having from 1 to 22 carbon atoms: R⁴ is -(CH₂)_{y}OR¹³ or -(CH₂)_{y}O(R²O)_{q}R³; R⁵, R⁶ and R⁷ are independently hydrogen, linear or branched alkyl or alkenyl groups having from 1 to 22 carbon atoms, or R⁴; R¹⁰ is a linear or branched alkylene or alkenylene group having from 2 to 18 carbon atoms; R¹⁴ is a linear or branched alkyl or alkenyl group having from 1 to 22 carbon atoms, or -(CH₂)_{z}O(R²O)ₚR³; m, n, p and q are independently an average number from 1 to 30; X is -O-, -N(R¹⁴)-, -C(O)-, -C(O)O-, -OC(O)-, -N(R¹⁵)C(O)-, -C(O)N(R¹⁵)-, -S-, -SO-, or -SO₂-, t is 0 or 1; A- is an agriculturally acceptable anion; and y and z are independently an integer from 0 to 30. More preferably, R¹ is a linear or branched alkyl or alkenyl groups having from 8 to 18 carbon atoms, or -(R²O)ₚR¹³; R⁹ and R¹² are independently linear or branched alkyl or alkenyl groups having from 1 to 22 carbon atoms, or -(R²O)ₚR¹³; R² in each of the m (R²O), n (R²O), p (R²O) and q (R²O) groups is independently ethylene or propylene; R³ is hydrogen or methyl; R⁴ is -(CH₂)_{y}OR¹³ or -(CH₂)_{y}O(R²O)_{q}R³; R⁸, R¹¹, R¹⁵ are independently hydrogen, or linear or branched alkyl or alkenyl groups having from 1 to 22 carbon atoms; R⁴ is -(CH₂)_{y}OR¹³ or -(CH₂)_{y}O(R²O)_{q}R³; R⁵, R⁶ and R⁷ are independently hydrogen, linear or branched alkyl or alkenyl groups having from 1 to 22 carbon atoms, or R⁴; R¹⁰ is a linear or branched alkylene or alkenylene group having from 2 to 6 carbon atoms; R¹³ is hydrogen, or linear or branched alkyl or alkenyl groups having from 6 to 22 carbon atoms; R¹⁴ is a linear or branched alkyl or alkenyl group having from 1 to 22 carbon atoms, or -(CH₂)_{z}O(R²O)ₚR³; m, n, p and q are independently an average number from 1 to 20; X is -O-, -N(R¹⁴)-, -C(O)-, -C(O)O-, -OC(O)-, -N(R¹⁵)C(O)-, -C(O)N(R¹⁵)-, -S-, -SO-, or -SO₂-, t is 0 or 1; A- is an agriculturally acceptable anion; and y and z are independently an integer from 0 to 10. Most preferably, R¹ is a linear or branched alkyl or alkenyl groups having from 12 to 18 carbon atoms, or -(R²O)ₚR¹³; R⁹ and R¹² are independently linear or branched alkyl or alkenyl groups having from 1 to 6 carbon atoms, or -(R²O)ₚR¹³; R² in each of the m (R²O), n (R²O), p (R²O) and q (R²O) groups is independently ethylene or propylene; R³ is hydrogen; R⁴ is -(CH₂)_{y}OR¹³ or -(CH₂)_{y}O(R²O)_{q}R³; R⁸, R¹¹, R¹⁵ are independently hydrogen, or linear or branched alkyl or alkenyl groups having from 1 to 6 carbon atoms; R⁴ is -(CH₂)_{y}OR¹³ or -(CH₂)_{y}O(R²O)_{q}R³; R⁵, R⁶ and R⁷ are independently hydrogen, linear or branched alkyl or alkenyl groups having from 1 to 22 carbon atoms, or R⁴; R¹⁰ is a linear or branched alkylene or alkenylene group having from 2 to 6 carbon atoms; R¹³ is hydrogen, or linear or branched alkyl or alkenyl groups having from 6 to 22 carbon atoms; R¹⁴ is a linear or branched alkyl or alkenyl group having from 1 to 22 carbon atoms, or -(CH₂)_{z}O(R²O)ₚR³; m, n, p and q are independently an average number from 1 to 5; X is -O- or -N(R¹⁴)-, t is 0 or 1; A- is an agriculturally acceptable anion; and y and z are independently an integer from 0 to 30.

The compatibilizing surfactant of the invention is a diamine, triamine or other polyamine including the following:
(a) alkoxylated diamines having the formula: 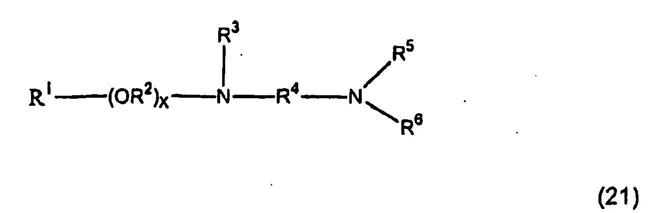 wherein R¹ is hydrocarbyl or substituted hydrocarbyl having from 8 to 30 carbon atoms; R² in each of the x (R²O) groups and the y (R²O) groups is independently C₂-C₄ alkylene; R³, R⁵ and R⁶ are independently hydrogen, hydrocarbyl or substituted hydrocarbyl having from 1 to 30 carbon atoms, or -(R²O)_{y}R⁷; R⁴ is hydrocarbylene or substituted hydrocarbylene having from 2 to 6 carbon atoms, -C(=NR¹¹)NR¹²R¹³-, -C(=O)NR¹²R¹³-, -C(=S)NR¹²R¹³-, -C(=NR¹²)-, -C(S)-, or -C(O)-; R⁷ is hydrogen, or a linear or branched alkyl group having from 1 to 4 carbon atoms; R¹¹, R¹² and R¹³ are hydrogen, hydrocarbyl or substituted hydrocarbyl having from 1 to about 30 carbon atoms, x is an average number from 0 to 30; and y is an average number from 1 to 50. In this context, preferred R¹, R³, R⁴, R⁵ and R⁶ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl group having from 8 to 22 carbon atoms, R² in each of the x (R² O) groups and the y (R² O) groups is independently C₂-C₄ alkylene, R³, R⁵ and R⁶ are independently hydrogen, a linear or branched alkyl or linear or branched alkenyl group having from 1 to 22 carbon atoms, or -(R²O)_{y}R⁷, R⁴ is a linear or branched alkylene, linear or branched alkenylene group having from 2 to 6 carbon atoms, R⁷ is hydrogen, methyl or ethyl, x is an average number from 1 to 20, and y is an average number from 1 to 20. More preferably, R¹ is a linear or branched alkyl or linear or branched alkenyl group having from 8 to 18 carbon atoms, R² in each of the x (R²O) groups and the y (R² O) groups is independently ethylene or propylene, R³, R⁵ and R⁶ are independently hydrogen, a linear or branched alkyl group having from 1 to 6 carbon atoms, or -(R²O)_{y}R⁷, R⁴ is ethylene, propylene, or 2-hydmxypmpylene, R⁷ is hydrogen or methyl, x is an average number from 1 to 15, and y is an average number from 1 to 10. Most preferably, R¹ is a linear or branched alkyl or linear or branched alkenyl group having from 8 to 18 carbon atoms; R² in each of the x (R²O) groups and the y (R²O) groups is independently ethylene or propylene; R³, R⁵ and R⁶ are independently hydrogen, methyl, or -(R²O)_{y}R⁷; R⁴ is ethylene, propylene, or 2-hydroxypropylene, R⁷ is hydrogen, x is an average number from 1 to 10; and y is an average number from 1 to 5.
(b) diamines having the formula: 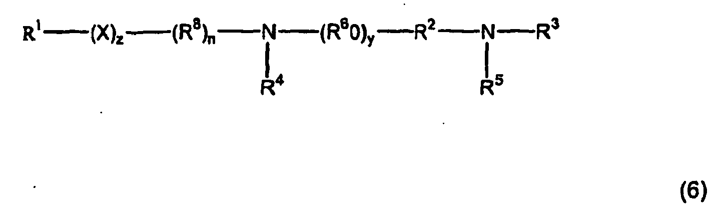 wherein R¹, R³, R⁴ and R⁵ are Independently hydrogen, hydrocarbyl or substituted hydrocarbyl having from 1 to 30 carbon atoms, or -(R⁶O)ₓR⁷; R² and R⁸ are independently hydrocarbylene or substituted hydrocarbylene having from 2 to 30 carbon atoms, R⁶ in each of the x (R⁶O) and y (R⁶O) groups Is independently C₂-C₄ alkylene, R⁷ is hydrogen, or a linear or branched alkyl group having from 1 to 30 carbon atoms, x is an average number from 1 to 30, X is -O-, -N(R⁶)-, -C(O)-, -C(O)O-, -OC(O)-, -N(R⁹)C(O)-, -C(O)N(R⁹). -S-, -SO-, or -SO₂-, y is 0 or an average number from 1 to 30, n and z are independently 0 or 1, and R⁹ is hydrogen or hydrocarbyl or substituted hydrocarbyl. In this context, preferred R¹, R², R³, R⁴, R⁵ and R⁹ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ and R⁴ are independently a linear or branched alkyl or linear or branched alkenyl group having from 1 to 22 carbon atoms, R² and R⁸ are independently linear or branched alkylene groups having from 2 to 25 carbon atoms, R³ and R⁵ are each independently hydrogen or a linear or branched alkyl group having from 1 to 6 carbon atoms and n, y and z are 0; or R¹, R², R³ and R⁴ are independently hydrogen or a linear or branched alkyl or alkenyl group having from 1 to 6 carbon atoms, R² is a linear or branched alkylene or alkenylene group having from 8 to 25 carbon atoms, and n, y and z are 0; or R¹, R², R³ and R⁴ are independently hydrogen or a linear or branched alkyl or alkenyl group having from 1 to 6 carbon atoms, R² is a linear or branched alkylene or alkenylene group having from 1 to 6 carbon atoms, R⁶ in each of the y (R⁶O) groups is independently C₂-C₄ alkylene, y is an average number from 1 to 20 and n and z are 0; or R¹ and R³ are independently a linear or branched alkyl or linear or branched alkenyl group having from 8 to 22 carbon atoms, R² is a linear or branched alkylene group having from 2 to 25 carbon atoms; and R⁴ and R⁵ are each independently hydrogen, a linear or branched alkyl or alkenyl group having from 1 to 6 carbon atoms, or -(R⁶O)ₓR⁷, R⁶ in each of the x (R⁶O) groups is independently C₂-C₄ alkylene, R⁷ is hydrogen, or a linear or branched alkyl group having from 1 to 4 carbon atoms, x is an average number from 1 to 30, and n, y and z are 0; or R¹ is a linear or branched alkyl or linear or branched alkenyl group having from 1 to 22 carbon atoms, R² is a linear or branched alkylene group having from 2 to 25 carbon atoms, R³, R⁴ and R⁵ are each independently hydrogen or a linear or branched alkyl group having from 1 to 6 carbon atoms, X is -C(O)- or -SO₂-, n and y are 0 and z is 1. More preferably, R¹ and R⁴ are independently a linear or branched alkyl or linear or branched alkenyl group having from 4 to 18 carbon atoms, R² is a linear or branched alkylene group having from 2 to 6 carbon atoms, R³ and R⁵ are each independently hydrogen or a linear or branched alkyl group having from 1 to 6 carbon atoms, and n, y and z are 0; or R¹, R², R³ and R⁴ are independently hydrogen or a linear or branched alkyl group having from 1 to 6 carbon atoms, R² is a linear or branched alkylene group having from 8 to 25 carbon atoms, and y is 0; or R¹, R², R³ and R⁴ are independently hydrogen or a linear or branched alkyl group having from 1 to 6 carbon atoms, R² is a linear or branched alkylene group having from 1 to 6 carbon atoms, R⁶ in each of the y (R⁶O) groups is independently ethylene or propylene, y is an average number from 1 to 10 and n and z is 0; or R¹ and R³ are independently a linear or branched alkyl group having from 8 to 22 carbon atoms, R² is a linear or branched alkylene group having from 2 to 6 carbon atoms, and R⁴ and R⁵ are each independently hydrogen, a linear or branched alkyl group having from 1 to 6 carbon atoms, or -(R⁶O)ₓR⁷, R⁶ in each of the x (R⁶O) groups is independently ethylene or propylene, R⁷ is hydrogen or methyl, x is an average number from 1 to 15, and n, y and z are 0; or R¹ is a linear or branched alkyl group having from 1 to 22 carbon atoms, R² is a linear or branched alkylene group having from 2 to 6 carbon atoms, R³, R⁴ and R⁵ are each independently hydrogen, X is - C(O)- or -SO₂-, n and y are 0 and z is 1. Preferred diamines include Gemini 14-2-14, Gemini 14-3-14, Gemini 10-2-10, Gemini 10-3-10, Gemini 10-4-10, and Gemini 16-2-16 (C₁₀, C₁₄ or C₁₆ ethylene, propylene or butylene N-methyl diamines from Monsanto), Ethoduomeens™, and Jeffamine™ EDR-148.
(c) diamines having the formula: 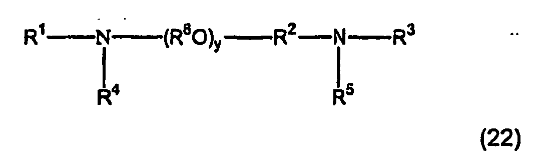 wherein R¹, R³, R⁴ and R⁵ are independently hydrogen, hydrocarbyl or substituted hydrocarbyl having from 1 to 30 carbon atoms, or -(R⁶O)ₓR⁷, R² is hydrocarbylene or substituted hydrocarbylene having from 2 to 30 carbon atom, R⁶ in each of the x (R⁶O) and y (R⁶O) groups is independently C₂-C₄ alkylene, R⁷ is hydrogen, or a linear or branched alkyl group having from 1 to 30 carbon atoms, x is an average number from 1 to 30, and y is an average number from 3 to 60. In this context, preferred R¹, R², R³, R⁴, and R⁵ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R³, R⁴ and R⁵ are independently hydrogen or a linear or branched alkyl or alkenyl group having from 1 to 22 carbon atoms or -(R⁶O)ₓR⁷, R² is a linear or branched alkylene or alkenylene group having from 1 to 6 carbon atoms, R⁶ in each of the x(R⁶O) and y (R⁶O) groups is independently C₂-C₄ alkylene, R⁷ is hydrogen, or a linear or branched alkyl group having from 1 to 4 carbon atoms, x is an average number from 1 to 30, and y is an average number from 1 to 60. More preferably, R¹, R³, R⁴ and R⁵ are independently hydrogen or a linear or branched alkyl group having from 1 to 18 carbon atoms or -(R⁶O)ₓR⁷, R² is a linear or branched alkylene group having from 1 to 6 carbon atoms, R⁶ in each of the x (R⁶O) and y (R⁶O) groups is independently ethylene or propylene, R⁷ is hydrogen, or a linear or branched alkyl group having from 1 to 4 carbon atoms, x is an average number from 1 to 10, and y is an average number from 1 to 60. Most preferably, R¹ and R³ are independently linear or branched alkyl groups having from 8 to 18 carbon atoms and R⁴ and R⁵ are independently hydrogen, R² is a linear or branched alkylene group having from 1 to 6 carbon atoms, R⁶ in each of the x (R⁶O) and y (R⁶O) groups is independently ethylene or propylene, R⁷ is hydrogen, or a linear or branched alkyl group having from 1 to 4 carbon atoms, x is an average number from 1 to 10, and y is an average number from 10 to 50.
(d) diamines having the formula: 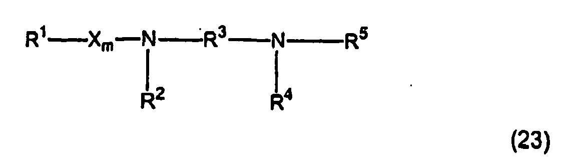 wherein R¹, R² and R⁵ are independently hydrogen or hydrocarbyl or substituted hydrocarbyl having from 1 to 30 carbon atoms or -R⁸(OR⁹)ₙOR¹⁰, R³ is hydrocarbylene or substituted hydrocarbylene having from 2 to 18 carbon atoms, R⁸ and R⁹ are individually hydrocarbylene or substituted hydrocarbylene having from 2 to 4 carbon atoms, R⁴ and R¹⁰ are independently hydrogen or hydrocarbyl or substituted hydrocarbyl having from 1 to 30 carbon atoms, m is 0 or 1, n is an average number from 0 to 40, X is -C(O)- or -SO₂-, and A⁻ is an agriculturally acceptable anion. In this context, preferred R¹, R³, R⁴ and R⁵ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably. R¹, R², R⁴ and R⁵ are independently hydrogen, a linear or branched alkyl or alkenyl group having from 1 to 6 carbon atoms, and R³ is a linear or branched alkylene having from 2 to 6 carbon atoms. More preferably, R¹, R², R⁴ and R⁵ are independently hydrogen, or a linear or branched alkyl group having from 1 to 6 carbon atoms, and R³ is a linear or branched alkylene having from 1 to 6 carbon atoms. Most preferably, R¹, R², R⁴, and R⁵ are independently hydrogen or methyl, and R³ is ethylene or propylene.
(e) diamine or diammonium salts having the formula: 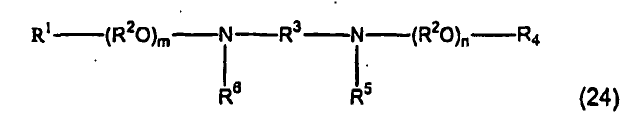 wherein R¹, R⁴, R⁵ and R⁶ are independently hydrogen or hydrocarbyl or substituted hydrocarbyl having from 1 to 30 carbon atoms, R² in each of the m (R²O) and n (R²O) groups and R⁷ are independently C₂-C₄ alkylene, R³ is hydrocarbylene or substituted hydrocarbylene having from 2 to 6 carbon atoms or -(R²O)ₚR⁷-, m and n are individually an average number from 0 to 50, and p is an average number from 0 to 60. In this context, preferred R¹, R³ R⁴, R⁵ and R⁶ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. In one embodiment of formula (DA), R³ is hydrocarbylene having from 2 to 6 carbon atoms, and the remaining groups are as defined above.
(f) di-poly(hydroxyalkyl)amines having the formula: 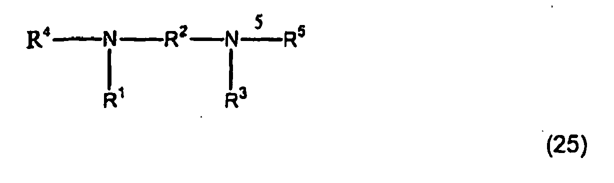 wherein R¹ and R³ are independently hydrogen or hydrocarbyl or substituted hydrocarbyl having from 1 to 22 carbon atoms, R² is hydrocarbylene or substituted hydrocarbylene having from 2 to 18 carbon atoms, R⁴ and R⁵ are independently hydroxyalkyl, polyhydroxyalkyl, or poly(hydroxyalkyl)alkyl. In this context, preferred R¹, R² and R³ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferred di-poly(hydroxyalkyl)amines have the formula: 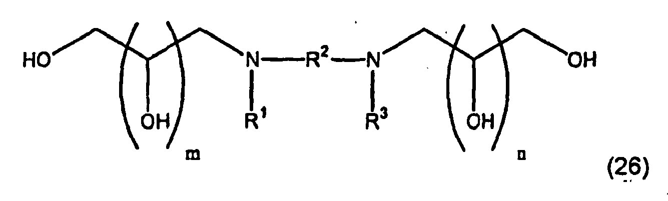 wherein R¹ and R³ are independently hydrogen or hydrocarbyl or substituted hydrocarbyl having from 1 to 22 carbon atoms, R² is hydrocarbylene or substituted hydrocarbylene having from 2 to 18 carbon atoms, and m and n are independently integers from 1 to 8. In this context, preferred R¹, R² and R³ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. In one embodiment, R¹ and R³ are independently hydrogen or a linear or branched alkyl group having from 1 to 6 carbon atoms, R² is a linear or branched alkylene, linear or branched alkenylene, linear or branched alkynylene, arylene, and alkylarylene group having from 9 to 18 carbon atoms, and m and n are as defined above. In another embodiment, R¹ and R³ are independently hydrogen or a linear or branched alkyl group having from 2 to 22 carbon atoms, R² is a linear or branched alkylene, linear or branched alkenylene, linear or branched alkynylene, arylene, and alkylarylene group having from 2 to 7 carbon atoms, and m and n are as defined above. Preferably, R¹ and R³ are independently hydrogen or a linear or branched alkyl group having from 1 to 18 carbon atoms, R² is a linear or branched alkylene or linear or branched alkenylene group having from 2 to 18 carbon atoms, and m and n are independently integers from 1 to 8. More preferably, R¹ and R³ are independently hydrogen or a linear or branched alkyl group having from 6 to 12 carbon atoms, R² is a linear or branched alkylene group having from 2 to 6 carbon atoms, and m and n are independently integers from 4 to 8; or R¹ and R³ are independently hydrogen or a linear or branched alkyl group having from 1 to 4 carbon atoms, R² is a linear or branched alkylene group having from 2 to 16 carbon atoms, and m and n are independently integers from 4 to 8. Most preferably, R¹ and R³ are independently hydrogen or a linear or branched alkyl group having from 6 to 12 carbon atoms, R² is ethylene or propylene, and m and n are independently integers from 4 to 8; or R¹ and R³ are independently hydrogen or a linear or branched alkyl group having from 1 to 4 carbon atoms, R² is a linear or branched alkylene group having from 2 to 12 carbon atoms, and m and n are independently integers from 4 to 8.
(g) alkoxylated triamines having the formula: 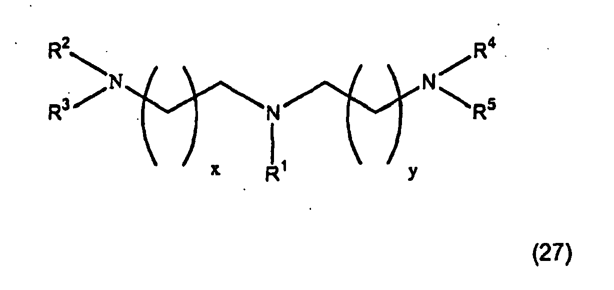 wherein R¹ is hydrocarbyl or substituted hydrocarbyl having from 1 to 30 carbon atoms; R², R³, R⁴ and R⁵ are Independently hydrogen, hydrocarbyl or substituted hydrocarbyl having from 1 to 30 carbon atoms, or -(R⁸)ₛ (R⁷O)ₙR⁶; R⁶ is hydrogen or a linear or branched alkyl group having from 1 to 4 carbon atoms, R⁷ in each of the n (R⁷O) groups is independently C₂-C₄ alkylene; R⁸ is hydrocarbylene or substituted hydrocarbylene having from 1 to 6 carbon atoms, n is an average number from 1 to 10, s is 0 or 1, and x and y are independently an integer from 1 to 4. In this context, preferred R¹, R², R³, R⁴, R⁵, and R⁸ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl groups having from 8 to 30 carbon atoms, R², R³, R⁴ and R⁵ are independently hydrogen, a linear or branched alkyl or linear or branched alkenyl group having from 1 to 30 carbon atoms, or -(R⁷-O)ₙR⁶, R⁶ is hydrogen, methyl or ethyl; R⁷ in each of the n (R⁷O) groups is independently C₂-C₄ alkylene, n is an average number from 1 to 10, and x and y are independently an integer from 1 to 4. More preferably, R¹ is a linear or branched alkyl group having from 8 to 18 carbon atoms, R², R³, R⁴, and R⁵ are independently hydrogen, a linear or branched alkyl group having from 1 to 6 carbon atoms, or -(R⁷-O)ₙR⁶, R⁶ is hydrogen or methyl, R⁷ in each of the n (R⁷O) groups is independently ethylene or propylene, n is an average number from 1 to 5, and x and y are independently an integer from 1 to 4. Most preferably, R¹ is a linear or branched alkyl group having from 8 to 18 carbon atoms, R², R³, R⁴ and R⁵ are independently hydrogen, or -(R⁷-O)ₙR⁶, R⁶ is hydrogen, R⁷ in each of the n (R⁷O) groups is independently ethylene or propylene, n is an average number from 1 to 5, and x and y are independently an integer from 1 to 4. Commercially available triamines include Acros and Clariant Genamin 3119.

The most preferred surfactant composition comprises an etheramine of formula (5) and a compatibilizing surfactant of formula (6).

In a preferred embodiment, the first surfactant(s) and/or the compatibilizing surfactant(s) are such that x (of formula (15) or (16), in group R³, R⁴ and/or R⁵ of formula (6) or (11), in group R³ and/or R⁴ of formula (5), or in group R¹, R³, R⁴ and/or R⁵ of formula (22)), y (in group R⁴, R⁵ and/or R¹⁴ of formula (9) or (10), in group R³, R⁵ and/or R⁶ of formula (21), in group R⁴, R⁵ and/or R⁸ of formula (12) or (13)), x and/or y (of formula (7) or (8)), n (of formula (27) or in group R¹, R² and/or R⁵ of formula (23)), n and/or m (of formula (24)), n, y and/or z (of formula (28)), or n, p and/or q (in group R¹ and/or R⁴ of formula (17) or (19), in group R¹, R⁴ and/or R⁹ of formula (18) or (20)) is an average number from 1 to 10, preferably from 1 to 9, 8, or 7, and more preferably from 1 to 6, 5, or 4, and most preferably from 1 to 3 or 2.

Preferred compatibilizing agents include diamines having the formula: 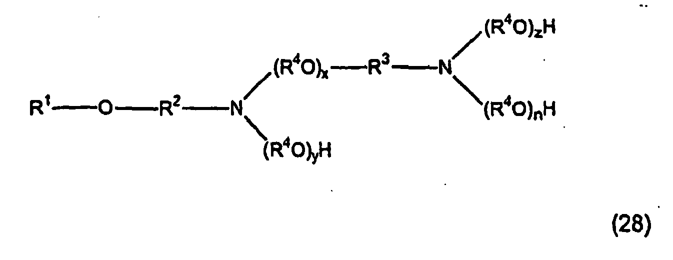 wherein R¹ is hydrogen or a hydrocarbyl or substituted hydrocarbyl having from 6 to 30 carbon atoms, R² and R³ are C₂-C₄ alkylene, R⁴ in each of the x(R⁴O), y(R⁴O), z(R⁴O) and the n(R⁴O) groups is independently C₂-C₄ alkylene, y, z and n are independently an average number from 1 to 40, and x is 0 or an average number from 1 to 40. In this context, preferred R¹ hydrocarbyl groups are linear or branched alkyl, linear or branched alkenyl, linear or branched alkynyl, aryl, or aralkyl groups. Preferably, R¹ is hydrogen or a linear or branched alkynyl, aryl, or aralkyl group having from 8 to 30 carbon atoms, R² and R³ are C₂-C₃ alkylene, R⁴ in each of the x(R⁴O), y(R⁴O), z(R⁴O) and the n(R⁴O) groups is independently C₂-C₄ alkylene, y, z and n are independently an average number from 1 to 20, and x is 0 or an average number from 1, to 20. More preferably, R¹ is hydrogen or a linear or branched alkynyl, aryl, or aralkyl group having from 8 to 22 carbon atoms, R² and R³ are C₂-C₃ alkylene, R⁴ in each of the x(R⁴O), y(R⁴O), z(R⁴O) and the n(R⁴O) groups is independently C₂-C₃ alkylene, y, z and n are independently an average number from 1 to 30, and x is 0 or an average number from 1 to 30. Even more preferably, R¹ is hydrogen, R² and R³ are propyl, R⁴ in each of the x(R⁴O), y(R⁴O), z(R⁴O) and the n(R⁴O) groups is independently C₂-C₃ alkylene, y, z and n are independently an average number from 1 to 5, and x is 0 or an average number from 1 to 5.

The liquid concentrate compositions of the invention preferably comprise glyphosate or a salt or ester thereof in a concentration between 25 and 50% by weight of the composition, a first surfactant component in a concentration between 1 and 30% by weight of the composition, and a compatibilizing surfactant in a concentration between 0.1 and 30% by weight of the composition. Even more preferably, the compositions comprise glyphosate or a salt or ester thereof in a concentration between 30 and 47% by weight of the composition, a first surfactant component in a concentration between 2 and 17% by weight of the composition, and a compatibilizing surfactant in a concentration between 0.2 and 20% by weight of the composition. Most preferably, the compositions comprise glyphosate or a salt or ester thereof in a concentration between 36 and 44% by weight of the composition, a first surfactant component in a concentration between 3 and 15% by weight of the composition, and a compatibilizing surfactant in a concentration between 0.5 and 15% by weight of the composition.

Compositions of the invention preferably have a viscosity of not greater than 1000 cPs at 10 °C, preferably not greater than 900 cPs at 10°C, more preferably not greater than 800, 700, 600, 500, 400 or 300 cPs at 10°C, and even more preferably not greater than 200 cPs at 10°C, at 45/s shear rate.

The present invention takes advantage of the high specific gravity of concentrated aqueous solutions of glyphosate potassium salt. Accordingly, at a given percent concentration by weight, an aqueous concentrate composition of glyphosate potassium salt delivers to the user a significantly higher weight of active ingredient per unit volume of the composition than a corresponding composition of glyphosate IPA salt.

The term "water-soluble" as used herein in relation to a herbicide or salt or ester thereof means having a solubility in deionized water at 20 °C of not less than 50 g/l. Preferred water-soluble herbicides have a solubility in deionized water at 20 °C of not less than 200 g/l. Particularly preferred water-soluble herbicides have a herbicidal active acid or anionic moiety and are most usefully present in a composition of the invention in the form of one or more water-soluble salts. The aqueous phase of the composition can optionally contain, in addition to the water-soluble herbicide, other salts contributing to the ionic strength of the aqueous phase.

A particularly preferred group of water-soluble herbicides are those that are normally applied post-emergence to the foliage of plants. While the invention is not limited to any particular class of foliar-applied water soluble herbicide, it has been found to provide useful benefits for compounds that rely at least in part for their herbicidal effectiveness on systemic movement in plants. Systemic movement in plants can take place via apoplastic (non-living) pathways, including within xylem vessels and in intercellular spaces and cell walls, via symplastic (living) pathways, including within phloem elements and other tissues composed of cells connected symplastically by plasmodesmata, or via both apoplastic and symplastic pathways. For foliar-applied systemic herbicides, the most important pathway is the phloem, and the present invention is believed to provide the greatest benefits where the water-soluble herbicide is phloem-mobile. However, compositions of the invention can also be useful where the water-soluble herbicide is non-systemic, as in the case of paraquat.

Water-soluble herbicides suitable for use in compositions of the invention include acifluorfen, acrolein, amitrole, asulam, benazolin, bentazon, bialaphos, bromacil, bromoxynil, chloramben, chloroacetic acid, clopyralid, 2,4-D, 2,4-DB, dalapon, dicamba, dichlorprop, difenzoquat, diquat, endothall, fenac, fenoxaprop, flamprop, flumiclorac, fluoroglycofen, flupropanate, fomesafen, fosamine, glufosinate, glyphosate, imazameth, imazamethabenz, imazamox, imazapic, imazapyr, imazaquin, imazethapyr, ioxynil, MCPA, MCPB, mecoprop, methylarsonic acid, naptalam, nonanoic acid, paraquat, picloram, quinclorac, sulfamic acid, 2,3,6-TBA, TCA, triclopyr and water-soluble salts thereof.

Phloem-mobile herbicides that are preferred for use in compositions of the invention include but are not limited to aminotriazole, asulam, bialaphos, clopyralid, dicamba, glufosinate, glyphosate, imidazolinones such as imazameth, imazamethabenz, imazamox, imazapic, imazapyr, imazaquin and imazethapyr, phenoxies such as 2,4-D, 2,4-DB, dichlorprop, MCPA, MCPB and mecoprop, picloram and triclopyr. A particularly preferred group of water-soluble herbicides are salts of bialaphos, glufosinate and glyphosate. Another particularly preferred group of water-soluble herbicides are salts of imidazolinone herbicides.

Compositions of the invention can optionally contain more than one water-soluble herbicide in solution in the aqueous phase.

An especially preferred water-soluble herbicide useful in a composition of the present invention is glyphosate, the acid form of which is alternatively known as N-(phosphonornethyl)glycine. For example, glyphosate salts useful in compositions of the present invention are disclosed in U.S. Patents No. 3,799,758 and No. 4,405,531. Glyphosate salts that can be used according to the present invention include but are not restricted to alkali metal, for example sodium and potassium, salts; ammonium salt; C₁₋₆ alkylammonium, for example dimethylammonium and isopropylammonium, salts; C₁₋₆ alkanolammonium, for example monoethanolammonium, salt; C₁₋₆ alkylsulfonium, for example trimethylsulfonium, salts; and mixtures thereof. The N-phosphonomethylglycine molecule has three acid sites having different pKa values; accordingly mono-, di- and tribasic salts, or any mixture thereof, or salts of any intermediate level of neutralization, can be used. Especially preferred glyphosate salts include the potassium salt, isopropylamine salt, ammonium salt, diammonium salt, monoethanolamine salt, and trimethylsulfonium salt. The potassium salt is most preferred.

The relative amount of potassium glyphosate loading in the herbicidal composition of the present invention will vary depending upon many factors including the surfactant system and stabilizers employed, the rheological characteristics of the composition, and the temperature range at which the composition will be exposed. The potassium glyphosate loading in the herbicidal compositions of the invention is preferably at least 320 g a.e./L, and more preferably at least 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690 or 700 g a.e./L.

The surfactant compositions as described herein has been found to exhibit good efficacy when formulated with glyphosate. Efficacious glyphosate:surfactant ratios of 1:1, 2:1, 4:1, 6:1, 8:1, 10:1, 12:1, 14:1, 16:1, 18:1 and up to as high as 20:1 may be realized.

The weight ratio of the first surfactant to the compatibilizing surfactant is preferably bebmeen 20:1 to 1:10, preferably between 10:1 to 1:4, and most preferably between 8:1 to 1:3. This surfactant composition enables high load glyphosate compositions to be formulated with active loadings of preferably at least 360 grams a.e./liter, and more preferably at least 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690 or 700 grams a.e./liter.

The high load formulations of the invention exhibit elevated cloud point temperatures and improved cold temperature stability. Cloudpoint values preferably at least 40 °C, more preferably at least 50, 60, 70 or 80 °C, and most preferably in excess of 90 °C may be achieved. Moreover, two week temperature stabilities are preferably at least 0 °C, more preferably at least -5 °C, and most preferably at least -10 °C. Thus the high load compositions of the present invention provide concentrated formulations with extended shelf life and improved tolerance to field temperature extremes often encountered in early spring and late fall.

It is preferred that the surfactant components are selected such that the composition has a viscosity of not greater than 1000 centipoise at 10 °C, a cloud point not lower than 50 C, and preferably exhibits substantially no crystallization of glyphosate or salt thereof when stored at a temperature of about 0 °C for a period of up to 7 days. More preferably, the composition has a viscosity of not greater than 500 centipoise at 45 reciprocal seconds at 10°C, with not greater than 400, 300, 200, or 100 centipoise being most preferred. However, higher viscosities may be acceptable in certain circumstances, such as, for example, where low temperature pumping considerations are not important. The surfactant component, as added to the aqueous herbicidal concentrate composition, is in solution or is a stable suspension, emulsion, or dispersion.

The word "predominantly" in the above context means that at least about 50%, preferably at least about 75% and more preferably at least about 90%, by weight of the glyphosate, expressed as a.e., is present as the potassium salt. The balance can be made up of other salts and/or glyphosate acid but it is preferred that the viscosity, cloud point, and non-crystallization properties of the composition remain within the limits indicated.

Compositions of the invention can optionally contain one or more water-insoluble herbicides in suspension in a concentration that is biologically effective when the composition is diluted in a suitable volume of water and applied to the foliage of a susceptible plant. Preferred water-insoluble herbicide is selected from the group consisting of acetochlor, aclonifen, alachlor, ametryn, amidosulfuron, anilofos, atrazine, azafenidin, azimsulfuron, benfluralin, benfuresate, bensulfuron-methyl, bensulide, benzfendizone, benzofenap, bromobutide, bromofenoxim, butachlor, butafenacil, butamifos, butralin, butroxydim, butylate, cafenstrole, carfentrazone-ethyl, carbetamide, chlorbromuron, chloridazon, chlorimuron-ethyl, chlorotoluron, chlomitrofen, chlorotoluron, chlorpropham, chlorsulfuron, chlorthal-dimethyl, chlorthiamid, cinidon-ethyl, cinmethylin, cinosulfuron, clethodim, clodinafop-propargyl, clomazone, clomeprop, cloransulam-methyl, cyanazine, cycloate, cyclosulfamuron, cycloxydim, cyhalofop-butyl, daimuron, desmedipham, desmetryn, dichlobenil, diclofop-methyl, diflufenican, dimefuron, dimepiperate, dimethachlor, dimethametryn, dimethenamid, dinitramine, dinoterb, diphenamid, dithiopyr, diuron, EPTC, esprocarb, ethalfluralin, ethametsulfuron-methyl, ethofumesate, ethoxysulfuron, etobenzanid, fenoxaprop-ethyl, fenuron, flamprop-methyl, flazasulfuron, fluazifop-butyl, fluazifop-P-butyl, fluazoate, fluchloralin, flumetsulam, flumiclorac-pentyl, flumioxazin, fluometuron, fluorochloridone, flupoxam, flurenol, fluridone, fluroxypyr-1-methylheptyl, flurtamone, fluthiacet-methyl, graminicides, halosulfuron, haloxyfop, hexazinone, imazosulfuron, indanofan, isoproturon, isouron, isoxaben, isoxaflutole, isoxapyrifop, lenacil, linuron, mefenacet, metamitron, metazachlor, methabenzthiazuron, methyldymron, metobenzuron, metobromuron, metolachlor, S-metolachlor, metosulam, metoxuron, metribuzin, metsulfuron, molinate, monolinuron, naproanilide, napropamide, neburon, nicosulfuron, norflurazon, orbencarb, oryzalin, oxadiargyl, oxadiazon, oxasulfuron, pebulate, pendimethalin, pentanochlor, pentoxazone, phenmedipham, piperophos, pretilachlor, primisulfuron, prodiamine, profluazol, prometon, prometryn, propachlor, propanil, propaquizafop, propazine, propham, propisochlor, propyzamide, prosulfocarb, prosulfuron, pyraflufen-ethyl, pyrazogyl, pyrazolynate, pyrazosulfuron-ethyl, pyrazoxyfen, pyributicarb, pyridate, pyriminobac-methyl, quinclorac, quinmerac, quizalofop, quizalofop-P, rimsulfuron, sethoxydim, siduron, simazine, simetryn, sulcotrione, sulfentrazone, sulfometuron, sulfosulfuron, tebutam, tebuthiuron, tepraloxydim, terbacil, terbumeton, terbuthylazine, terbutryn, thenylchlor, thiazopyr, thidiazimin, thifensulfuron, thiobencarb, tiocarbazil, tralkoxydim, triallate, triasulfuron, tribenuron, trietazine, trifluralin, triflusulfuron and vemolate.

The density of any glyphosate-containing formulation of the invention is preferably at least 1.3 grams/liter, more preferably at least about 1.305, 1.310, 1.315, 1.320, 1.325, 1.330, 1.335, 1.340, 1.345, 1.350, 1.355, 1.360, 1.365, 1.370, 1.375, 1.380, 1.385, 1.390, 1.395, 1.400, 1.405, 1.410, 1.415, 1.420, 1.425, 1.430, 1.435, 1.440, 1.445, or 1.450 grams/liter.

Other excipient ingredients can optionally be present in a composition of the invention, so long as the herbicide loading, efficacy, cloud point and non-crystallization properties of the composition remain in accordance with the invention. Such additional excipient ingredients include conventional formulation additives such as dyes, thickeners, safeners, stabilizers, crystallization inhibitors, antifreeze agents including glycols, foam moderating agents, antidrift agents, compatibilizing agents, etc.

A type of excipient ingredient often used in glyphosate formulations is an inorganic salt such as ammonium sulfate, included to enhance herbicidal activity, or consistency of herbicidal activity, of the glyphosate. As the content of inorganic salt in the formulation needed to provide such enhancement is typically relatively high, often greater than the amount of glyphosate present, it will seldom be useful to add such salt to a composition of the invention. The amount of ammonium sulfate, for example, that could be accommodated in a storage-stable aqueous composition containing glyphosate potassium salt at a concentration of at least 360 g a.e./l would be so small as to bring no substantial benefit. An alternative, therefore, is to include a small amount of a synergist such as an anthraquinone compound or a phenyl-substituted olefin compound as disclosed in international Publication Nos. WO 98/33384 and WO 98/33385 respectively.

Another ingredient that can optionally be added to the glyphosate herbicidal formulations of the present invention to further improve the herbicidal effectiveness and related herbicidal properties is a dicarboxylic acid or salt of a dicarboxylic acid. Suitable dicarboxylic acids that may be added to the herbicidal formulations comprising glyphosate or a salt or ester thereof and a surfactant as described herein include, for example, oxalic acid, malonic acid, succinic acid, glutaric acid, maleic acid, adipic acid, and fumaric acid, and combinations or mixtures thereof, with oxalic acid being preferred. Also, in addition to, or in place of the di-carboxylic acid, salts of the aforementioned dicarboxylic acids may be incorporated into the herbicidal formulations of the present invention to improve herbicidal performance. Suitable salts include, for example, alkali metal salts such as potassium salts, alkanolamine salts and lower alkylamine salts. Preferred salts include potassium oxalate, dipotassium oxalate, sodium oxalate, disodium oxalate, diammonium oxalate, diethanolamine oxalate, dimethylamine oxalate, alkanolamine salts of oxalic acid, and lower alkylamine salts of oxalic acid.

Formulations containing a dicarboxylic acid such as oxalic acid or a dicarboxylic acid salt such as potassium oxalate, typically contain a sufficient amount of dicarboxylic acid/dicarboxylic acid salt to enhance the resulting efficacy of the herbicidal formulation. Typically, the weight ratio of total surfactant to carboxylic acid/carboxylic acid salt may be from 1:1 to 50:1, more preferably 5:1 to 40:1 and most preferably from 5:1 to 20:1. This ratio of total surfactant to carboxylic acid/carboxylic acid salt significantly enhances the herbicidal performance of the resulting herbicidal formulation.

The dicarboxylic acid or salt thereof which can be added to herbicidal formulations of the present invention to improve efficacy are suitable for use with glyphosate, or salts or esters thereof. Suitable glyphosate salts include those listed above, specifically isopropylamine salt, potassium salt, and trimethylammonium salt. Also provided by the present invention is a herbicidal method comprising diluting with a suitable volume of water a herbicidally effective volume of a concentrate as provided herein to form an application mixture, and applying the application mixture to foliage of a plant or plants.

Herbicidal effectiveness is one of the biological effects that can be enhanced through this invention. "Herbicidal effectiveness," as used herein, refers to any observable measure of control of plant growth, which can include one or more of the actions of (1) killing, (2) inhibiting growth, reproduction or proliferation, and (3) removing, destroying, or otherwise diminishing the occurrence and activity of plants.

The herbicidal effectiveness data set forth herein report "inhibition" as a percentage following a standard procedure in the art which reflects a visual assessment of plant mortality and growth reduction by comparison with untreated plants, made by technicians specially trained to make and record such observations. In all cases, a single technician makes all assessments of percent inhibition within any one experiment or trial. Such measurements are relied upon and regularly reported by Monsanto Company in the course of its herbicide business.

The present invention also includes a method for killing or controlling weeds or unwanted vegetation comprising the steps of diluting a liquid concentrate in a convenient amount of water to form a tank mix and applying a herbicidally effective amount of the tank mix to the foliage of the weeds or unwanted vegetation. Similarly included in the invention is the method of killing or controlling weeds or unwanted vegetation comprising the steps of diluting a solid particulate concentrate in a convenient amount of water to form a tank mix and applying a herbicidally effective amount of the tank mix to the foliage of the weeds or unwanted vegetation.

In a herbicidal method of using a composition of the invention, the composition is diluted in a suitable volume of water to provide an application solution which is then applied to foliage of a plant or plants at an application rate sufficient to give a desired herbicidal effect. This application rate is usually expressed as amount of glyphosate per unit area treated, *e*.*g*., grams acid equivalent per hectare (g a.e./ha). What constitutes a "desired herbicidal effect" is, typically and illustratively, at least 85% control of a plant species as measured by growth reduction or mortality after a period of time during which the glyphosate exerts its full herbicidal or phytotoxic effects in treated plants. Depending on plant species and growing conditions, that period of time can be as short as a week, but normally a period of at least two weeks is needed for glyphosate to exert its full effect.

The selection of application rates that are herbicidally effective for a composition of the invention is within the skill of the ordinary agricultural scientist. Those of skill in the art will likewise recognize that individual plant conditions, weather and growing conditions, as well as the specific active ingredients and their weight ratio in the composition, will influence the degree of herbicidal effectiveness achieved in practicing this invention. With respect to the use of glyphosate compositions, much information is known about appropriate application rates. Over two decades of glyphosate use and published studies relating to such use have provided abundant information from which a weed control practitioner can select glyphosate application rates that are herbicidally effective on particular species at particular growth stages in particular environmental conditions.

The method of the present invention where the water-soluble herbicide is glyphosate, more particularly a water-soluble glyphosate salt, is applicable to any and all plant species on which glyphosate is biologically effective as a herbicide. This encompasses a very wide variety of plant species worldwide. Likewise, compositions of the invention containing a glyphosate salt can be applied to any and all plant species on which glyphosate is biologically effective. Therefore, for example, compositions of the invention containing glyphosate as an herbicidal active ingredient can be applied to a plant in a herbicidally effective amount, and can effectively control one or more plant species of one or more of the following genera without restriction: *Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium* and *Zea*.

Particularly important annual broadleaf species for which glyphosate compositions are used are exemplified without limitation by the following: velvetleaf (*Abutilon theophrasti*), pigweed (*Amaranthus* spp.), buttonweed (*Borreria* spp.), oilseed rape, canola, indian mustard, *etc.* (*Brassica* spp.), commelina (*Commelina* spp.), filaree (*Erodium* spp.), sunflower (*Helianthus* spp.), momingglory (*Ipomoea* spp.), kochia (*Kochia scoparia*), mallow (*Malva* spp.), wild buckwheat, smartweed, *etc.* (*Polygonum* spp.), purslane (*Portulaca* spp.), russian thistle (*Salsola* spp.), sida (*Sida* spp.), wild mustard (*Sinapis arvensis*) and cocklebur (*Xanthium* spp.)

Particularly important annual nanrowleaf species for which glyphosate compositions are used are exemplified without limitation by the following: wild oat (*Avena fatua*), carpetgrass (*Axonopus* spp.), downy brome (*Bromus tectorum*), crabgrass (*Digitaria* spp.), Japanese millet (Echinochloa *crus-galli*), goosegrass (*Eleusine indica*), annual ryegrass (*Lolium multiflorum*), rice (*Oryza* sativa), ottochloa (*Ottochloa nodosa*), bahiagrass (*Paspalum notatum*), canarygrass (*Phalaris* spp.), foxtail (*Setaria* spp.), wheat (*Triticum aestivum*) and corn (Zea *mays*).

Particularly important perennial broadleaf species for which glyphosate compositions are used are exemplified without limitation by the following mugwort (*Artemisia* spp.), milkweed (*Asclepias* spp.), canada thistle (*Cirsium arvense*), field bindweed (*Convolvulus arvensis*) and kudzu (*Pueraria* spp.).

Particularly important perennial narrowleaf species for which glyphosate compositions are used are exemplified without limitation by the following: brachiaria (*Brachiaria* spp.), bermudagrass (*Cynodon dactylon*), yellow nutsedge (*Cyperus esculentus*), purple nutsedge (*C*. *rotundus*), quackgrass (*Elymus repens*), lalang (*Imperata cylindrica*), perennial ryegrass (*Lolium perenne*), guineagrass (*Panicum maximum*), dallisgrass (*Paspalum dilatatum*), reed (*Phragmites* spp.), johnsongrass (*Sorghum halepense*) and cattail (*Typha* spp.).

Other particularly important perennial species for which glyphosate compositions are used are exemplified without limitation by the following: horsetail (*Equisetum* spp.), bracken (*Pteridium aquilinum*), blackberry (*Rubus* spp.) and gorse (*Ulex europaeus*).

Thus, for example, the glyphosate compositions of the present invention, and a process for treating plants with such compositions, can be useful on any of the above species. In a particular contemplated process, a plant treatment composition is formed by diluting a composition of the invention in a suitable volume of water for application to a field. Preferably, a plant treatment composition comprising glyphosate is formed by diluting a composition of the present invention in water and the plant treatment composition is applied to weeds or undesired plants.

Application of plant treatment compositions to foliage of plants is preferably accomplished by spraying, using any conventional means for spraying liquids, such as spray nozzles or spinning-disk atomizers. Compositions of the present invention can be used in precision farming techniques, in which apparatus is employed to vary the amount of exogenous chemical substance applied to different parts of a field, depending on variables such as the particular plant species present, plant growth stage, soil moisture status, *etc.* In one embodiment of such techniques, a global positioning system operated with the spraying apparatus can be used to apply the desired amount of the composition to different parts of a field.

A plant treatment composition is preferably dilute enough to be readily sprayed using standard agricultural spray equipment. Suitable application rates for the present invention vary depending upon such factors as the type and concentration of active ingredient and the plant species involved. Useful rates for applying an aqueous composition to a field of foliage can range from 25 to 1,000 liters per hectare (l/ha), preferably 50 to 300 l/ha, by spray application.

### DEFINITIONS

The terms "hydrocarbon" and "hydrocarbyl" as used herein describe organic compounds or radicals consisting exclusively of the elements carbon and hydrogen. These moieties include alkyl, alkenyl, alkynyl, and aryl moieties. These moieties also include alkyl, alkenyl, alkynyl, and aryl moieties substituted with other aliphatic or cyclic hydrocarbon groups, such as alkaryl, alkenaryl and alkynaryl. Unless otherwise indicated, these moieties preferably comprise 1 to 30 carbon atoms.

The term "hydrocarbylene" as used herein describes radicals joined at two ends thereof to other radicals in an organic compound, and which consist exclusively of the elements carbon and hydrogen. These moieties include alkylene, alkenylene, alkynylene, and arylene moieties. These moieties also include alkyl, alkenyl, alkynyl, and aryl moieties substituted with other aliphatic or cyclic hydrocarbon groups, such as alkaryl, alkenaryl and alkynaryl. Unless otherwise indicated, these moieties preferably comprise 1 to 30 carbon atoms.

The "substituted hydrocarbyl" moieties described herein are hydrocarbyl moieties which are substituted with at least one atom other than carbon, including moieties in which a carbon chain atom is substituted with a hetero atom such as nitrogen, oxygen, silicon, phosphorous, boron, sulfur, or a halogen atom. These substituents include halogen, heterocyclo, alkoxy, alkenoxy, alkynoxy, aryloxy, hydroxy, protected hydroxy, ketal, acyl, acyloxy, nitro, amino, amido, cyano, thiol, acetal, sulfoxide, ester, thioester, ether, thioether, hydroxyalkyl, urea, guanidine, amidine, phosphate, amine oxide, and quaternary ammonium salt.

The "substituted hydrocarbylene" moieties described herein are hydrocarbylene moieties which are substituted with at least one atom other than carbon, including moieties in which a carbon chain atom is substituted with a hetero atom such as nitrogen, oxygen, silicon, phosphorous, boron, sulfur, or a halogen atom. These substituents include halogen, heterocyclo, alkoxy, alkenoxy, alkynoxy, aryloxy, hydroxy, protected hydroxy, ketal, acyl, acyloxy, nitro, amino, amido, cyano, thiol, acetal, sulfoxide, ester, thioester, ether, thioether, hydroxyalkyl, urea, guanidine, amidine, phosphate, amine oxide, and quaternary ammonium salt.

Unless otherwise indicated, the alkyl groups described herein are preferably lower alkyl containing from one to 18 carbon atoms in the principal chain and up to 30 carbon atoms. They may be straight or branched chain or cyclic and include methyl, ethyl, propyl, isopropyl, n-butyl, isobutyl, hexyl, 2-ethylhexyl, and the like.

Unless otherwise indicated, the alkenyl groups described herein are preferably lower alkenyl containing from two to 18 carbon atoms in the principal chain and up to 30 carbon atoms. They may be straight or branched chain or cyclic and include ethenyl, propenyl, isopropenyl, butenyl, isobutenyl, hexenyl, and the like.

Unless otherwise indicated, the alkynyl groups described herein are preferably lower alkynyl containing from two to 18 carbon atoms in the principal chain and up to 30 carbon atoms. They may be straight or branched chain and include ethynyl, propynyl, butynyl, isobutynyl, hexynyl, and the like.

The terms "aryl" as used herein alone or as part of another group denote optionally substituted homocyclic aromatic groups, preferably monocyclic or bicyclic groups containing from 6 to 12 carbons in the ring portion, such as phenyl, biphenyl, naphthyl, substituted phenyl, substituted biphenyl or substituted naphthyl. Phenyl and substituted phenyl are the more preferred aryl.

The term "aralkyl" as used herein denotes a group containing both alkyl and aryl structures such as benzyl.

As used herein, the alkyl, alkenyl, alkynyl, aryl and aralkyl groups can be substituted with at least one atom other than carbon, including moieties in which a carbon chain atom is substituted with a hetero atom such as nitrogen, oxygen, silicon, phosphorous, boron, sulfur, or a halogen atom. These substituents include hydroxy, nitro, amino, amido, nitro, cyano, sulfoxide, thiol, thioester, thioether, ester and ether, or any other substituent which can increase the compatibility of the surfactant and/or its efficacy enhancement in the potassium glyphosate formulation without adversely affecting the storage stability of the formulation.

The terms "halogen" or "halo" as used herein alone or as part of another group refer to chlorine, bromine, fluorine, and iodine. Fluorine substituents are often preferred in surfactant compounds.

Unless otherwise indicated, the term "hydroxyalkyl" includes alkyl groups substituted with at least one hydroxy group, and includes bis(hydroxyalkyl)alkyl, tris(hydroxyalkyl)alkyl and poly(hydroxyalkyl)alkyl groups. Preferred hydroxyalkyl groups include hydroxymethyl (-CH₂OH), and hydroxyethyl (-C₂H₄OH), bis(hydroxymethyl)methyl (-CH(CH₂OH)₂), and tris(hydroxymethyl)methyl (-C(CH₂OH)₃).

The term "cyclic" as used herein alone or as part of another group denotes a group having at least one closed ring, and includes alicyclic, aromatic (arene) and heterocyclic groups.

The terms "heterocyclo" or "heterocyclic" as used herein alone or as part of another group denote optionally substituted, fully saturated or unsaturated, monocyclic or bicyclic, aromatic or nonaromatic groups having at least one heteroatom in at least one ring, and preferably 5 or 6 atoms in each ring. The heterocyclo group preferably has 1 or 2 oxygen atoms, 1 or 2 sulfur atoms, and/or 1 to 4 nitrogen atoms in the ring, and may be bonded to the remainder of the molecule through a carbon or heteroatom. Exemplary heterocyclo include heteroaromatics such as furyl, thienyl, pyridyl, oxazolyl, pyrrolyl, indolyl, quinolinyl, or isoquinolinyl and the like, and non-aromatic heterocyclics such as tetrahydrofuryl, tetrahydrothienyl, piperidinyl, pyrrolidino, etc. Exemplary substituents include one or more of the following groups: hydrocarbyl, substituted hydrocarbyl, keto, hydroxy, protected hydroxy, acyl, acyloxy, alkoxy, alkenoxy, alkynoxy, aryloxy, halogen, amido, amino, nitro, cyano, thiol, thioester, thioether, ketal, acetal, ester and ether.

The term "heteroaromatic" as used herein alone or as part of another group denote optionally substituted aromatic groups having at least one heteroatom in at least one ring, and preferably 5 or 6 atoms in each ring. The heteroaromatic group preferably has 1 or 2 oxygen atoms, 1 or 2 sulfur atoms, and/or 1 to 4 nitrogen atoms in the ring, and may be bonded to the remainder of the molecule through a carbon or heteroatom. Exemplary heteroaromatics include furyl, thienyl, pyridyl, oxazolyl, pyrrolyl, indolyl, quinolinyl, or isoquinolinyl and the like. Exemplary substituents include one or more of the following groups: hydrocarbyl, substituted hydrocarbyl, keto, hydroxy, protected hydroxy, acyl, acyloxy, alkoxy, alkenoxy, alkynoxy, aryloxy, halogen, amido, amino, nitro, cyano, thiol, thioether, thioester, ketal, acetal, ester and ether.

The term "acyl," as used herein alone or as part of another group, denotes the moiety formed by removal of the hydroxyl group from the group - COOH of an organic carboxylic acid, e.g., RC(O)-, wherein R is R¹, R¹O-, R¹R²N-, or R¹S-, R¹ is hydrocarbyl, heterosubstituted hydrocarbyl, or heterocyclo and R² is hydrogen, hydrocarbyl or substituted hydrocarbyl.

The term "acyloxy," as used herein alone or as part of another group, denotes an acyl group as described above bonded through an oxygen linkage (-O-), e.g., RC(O)O- wherein R is as defined in connection with the term "acyl."

When a maximum or minimum "average number" is recited herein with reference to a structural feature such as oxyethylene units or glucoside units, it will be understood by those skilled in the art that the integer number of such units in individual molecules in a surfactant preparation typically varies over a range that can include integer numbers greater than the maximum or smaller than the minimum "average number." The presence in a composition of individual surfactant molecules having an integer number of such units outside the stated range in "average number" does not remove the composition from the scope of the present invention, so long as the "average number" is within the stated range and other requirements are met.

The term "pesticide" includes chemicals and microbial agents used as active ingredients of products for control of crop and lawn pests and diseases, animal ectoparasites, and other pests in public health. The term also includes plant growth regulators, pest repellants, synergists, herbicide safeners (which reduce the phytotoxicity of herbicides to crop plants) and preservatives, the delivery of which to the target may expose dermal and especially ocular tissue to the pesticide.

### EXAMPLES

Effectiveness in greenhouse tests, usually at exogenous chemical rates lower than those normally effective in the field, is a proven indicator of consistency of field performance at normal use rates. However, even the most promising composition sometimes fails to exhibit enhanced performance in individual greenhouse tests. As illustrated in the Examples herein, a pattern of enhancement emerges over a series of greenhouse tests; when such a pattern is identified this is strong evidence of biological enhancement that will be useful in the field.

The compositions of the present invention can be applied to plants by spraying, using any conventional means for spraying liquids, such as spray nozzles, atomizers, or the like. Compositions of the present invention can be used in precision farming techniques, in which apparatus is employed to vary the amount of exogenous chemical applied to different parts of a field, depending on variables such as the particular plant species present, soil composition, and the like. In one embodiment of such techniques, a global positioning system operated with the spraying apparatus can be used to apply the desired amount of the composition to different parts of a field.

The composition at the time of application to plants is preferably dilute enough to be readily sprayed using standard agricultural spray equipment. Preferred application rates for the present invention vary depending upon a number of factors, including the type and concentration of active ingredient and the plant species involved.

Many exogenous chemicals (including glyphosate herbicide) must be taken up by living tissues of the plant and translocated within the plant in order to produce the desired biological (e.g., herbicidal) effect. Thus, it is important that a herbicidal composition not be applied in such a manner as to excessively injure and interrupt the normal functioning of the local tissue of the plant so quickly that translocation is reduced. However, some limited degree of local injury can be insignificant, or even beneficial, in its impact on the biological effectiveness of certain exogenous chemicals.

A large number of compositions of the invention are illustrated in the Examples that follow. Many concentrate compositions of glyphosate have provided sufficient herbicidal effectiveness in greenhouse tests on a wide variety of weed species under a variety of application conditions.

The amount of exogenous chemical was selected to provide the desired rate in grams per hectare (g/ha) when applied in a spray volume of 93 l/ha. Several exogenous chemical rates were applied for each composition. Thus, except where otherwise indicated, when spray compositions were tested, the concentration of exogenous chemical varied in direct proportion to exogenous chemical rate, but the concentration of excipient ingredients was held constant across different exogenous chemical rates.

Concentrate compositions were tested by dilution, dissolution or dispersion in water to form spray compositions. In these spray compositions prepared from concentrates, the concentration of excipient ingredients varied with that of exogenous chemical.

Spray compositions of the Examples contained an exogenous chemical, such as glyphosate potassium salt, in addition to the excipient ingredients listed. The amount of exogenous chemical was selected to provide the desired rate in grams per hectare (g/ha) when applied in a spray volume of 93 l/ha. Several exogenous chemical rates were applied for each composition. Thus, except where otherwise indicated, when spray compositions were tested, the concentration of exogenous chemical varied in direct proportion to exogenous chemical rate, but the concentration of excipient ingredients was held constant across different exogenous chemical rates.

In the following Examples illustrative of the invention, greenhouse and field tests were conducted to evaluate the relative herbicidal effectiveness of glyphosate compositions. Compositions included for comparative purposes included the following:
Composition 570I: which consists 570 g/l of glyphosate IPA salt in aqueous solution with no added surfactant
Composition 41I: which consists of 41% by weight of glyphosate IPA salt in aqueous solution, together with surfactant. This formulation is sold by Monsanto Company under the ROUNDUP ULTRA^{®} trademark.
Composition 725K: which consists of 725 g/l of glyphosate potassium salt in aqueous solution with no added surfactant
Composition 540KS: which consists of 540 g a.e./l of glyphosate potassium salt in solution, together with 135 g/l of ethoxylated etheramine surfactant
Composition 360I: 360 g a.e./ of glyphosate IPA salt in aqueous solution together with a surfactant system as described in U.S. Patent No. 5,652,197
Composition 450IS: 450 g a.e./ of glyphosate IPA salt in aqueous solution together with an etheramine surfactant as described in U.S. Patent No. 5,750,468
Roundup^{®} UltraMax: 50% by weight (445 g a.e./l) of glyphosate IPA salt in aqueous solution, together with surfactant, which is sold by Monsanto Company under the Roundup® UltraMax trademark
Composition 273: 40% by weight (a.e.) of potassium glyphosate salt in aqueous solution, together with 5.5% by weight Witcamine TAM 105 and 4.5% by weight Ethomeen C12 surfactants

Various excipients were used in compositions of the Examples. They may be identified as follows:

**COMPONENT TABLE**

| | | | |
|---|---|---|---|
| C01 | E-17-5 | Tomah | 5 EO ethoxylated alkyl etheramine 5 EO ethoxylated alkyl etheramine |
| C02 | ED-17-5 | Tomah | poly (5) oxyethylene isotridecyloxypropyl 1,3-diaminopropane poly (5) oxyethylene isotridecyloxypropyl 1,3-diaminopropane |
| C03 | | Huntsman Surfonic AGM550 | (C₁₂₋₁₄)O(CHCH3CH2)O-(CHCH3CH2)N (EO)x(EO)y x + y = 5 (C₁₂₋₁₄)O(CHCH3CH2)O-(CHCH3CH2)N (EO)x(EO)y x + y = 5 |
| C04 | M-T4513-2 | Tomah | C₁₄₋₁₅ dimethylated etheramine 13EO C₁₄₋₁₅ dimethylated etheramine 13EO |
| C07 | Affilan 3329 | | 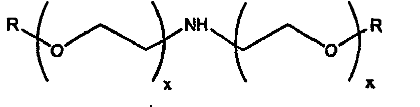 |
| | | | R = C₁₂₋₁₈, x = 5 |
| C09 | EXP-01A | Witco | iso C₁₂ ethoxylated (3 EO) ether diamine |
| C10 | EXP-01 B | Witco | iso C₁₂ ethoxylated (5 EO) ether diamine |
| C12 | T100 | Genamin | Tallow fatty amine ethoxylate (10 EO) |
| C13 | C020 | Genamin | Coco amine ethoxylate (2 EO) |
| C14 | OH 99/127 | | (*iso*C₁₃(EO)ₓ)(*iso*C₁₃(EO)ₓ)NH x = 8 |
| C15 | OH 99/134 | | (*iso*C₁₃(EO)ₓ)(*iso*C₁₃(EO)ₓ)N(3 EO) x = 3 |
| C16 | OH 99/140 | | (*iso*C₁₃(EO)ₓ)(*iso*C₁₃(EO)ₓ)NH x = 15 |
| C17 | Isopar M | Exxon | C12-15 isoparaffinic hydrocarbon |
| C18 | Synergen MPEAE | Clariant | iC₁₃ etheramine EO (5) |
| C19 | EXP-06A | | C₈₋₁₀ ether diamine EO(3) |
| C20 | EXP-06B | | C₈₋₁₀ ether diamine EO(5.9) |
| C21 | EXP-06C | | C₈₋₁₀ ether diamine EO(9.1) |
| C22 | OH01/196 | | iC₁₃O(CH₂)₃N(H)(CH₂)₃NH₂ |
| C23 | AV02/16-1 | | 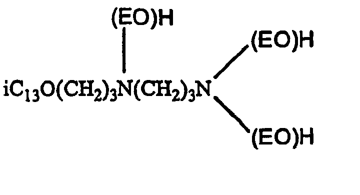 |
| C24 | AV02/16-2 | | 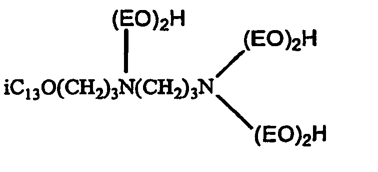 |
| C25 | AV02/16-3 | | 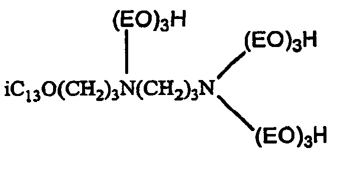 |

The following procedure was used for testing compositions of the Examples to determine herbicidal effectiveness, except where otherwise indicated.

Seeds of the plant species indicated were planted in 88 mm square pots in a soil mix which was previously sterilized and prefertilized with a 14-14-14 NPK slow release fertilizer at a rate of 3.6 kg/m3. The pots were placed in a greenhouse with sub-irrigation. About one week after emergence, seedlings were thinned as needed, including removal of any unhealthy or abnormal plants, to create a uniform series of test pots.

The plants were maintained for the duration of the test in the greenhouse or growth chamber where they received a minimum of 14 hours of light per day. If natural light was insufficient to achieve the daily requirement, artificial light with an intensity of approximately 475 microeinsteins was used to make up the difference. Exposure temperatures were not precisely controlled but averaged about 29 °C during the day and about 21 °C during the night. Plants were subirrigated throughout the test to ensure adequate soil moisture levels.

Pots were assigned to different treatments in a randomized experimental design with 4 replications. A set of pots was left untreated as a reference against which effects of the treatments could later be evaluated.

Application of glyphosate compositions was made by spraying with a track sprayer fitted with a 9501 E nozzle calibrated to deliver a spray volume of 93 liters per hectare (l/ha) at a pressure of 165 kilopascals (kPa). After treatment, pots were returned to the greenhouse until ready for evaluation.

Treatments were made using dilute aqueous compositions. These could be prepared as spray compositions directly from their ingredients, or by dilution with water of preformulated concentrate compositions.

For evaluation of herbicidal effectiveness, all plants in the test were examined by a single practiced technician, who recorded percent control, a visual measurement of the effectiveness of each treatment by comparison with untreated plants. Control of 0% indicates no effect, and control of 100% indicates that all of the plants are completely dead. The reported % control values represent the average for all replicates of each treatment.

Plant tested include: Velvetleaf (Abutilon theophrasti, "ABUTH"), Japanese millet (Echinochloa crus-galli var. frumentae, "ECHCF"), cheeseweed (Malva sylvestris "MALSI"), rigid ryegrass (Lolium rigidum, "LOLRI"), tumip/swede (Brassica rapsa, "RAPSA") and Field violet (Viola arvensis, "VIOAR") plants were grown and treated by the standard procedures above.

### Example 1: Etherdiamine Compatibility Screening

Aqueous concentrate compositions were prepared containing IPA glyphosate salt and excipient ingredients as shown in Tables 1 a and 1b. Tables 1 a and 1 b provide compatibilization data for high load IPA glyphosate formulations containing etherdiamine and secondary etheramine surfactants. Formulations that were homogenous and transparent at room temperature were tested for cloud point (Cloudpt.). Cloudpoint values reported as NH were non-homogeneous. Any formulations that had a cloud point above 40 °C were tested for density, and one and two week seeded stabilities at 0 °C and -10 °C were evaluated.

**Table 1a**

| Trial | [Gly] | Comp. 1 | wt% | Comp. 2 | wt% | Cloudpt. °C |
|---|---|---|---|---|---|---|
| 570A2L1 | 30 | C7 | 3.8 | C10 | 3.8 | >85 |
| 570A9O2 | 30 | C7 | 4.9 | C10 | 2.6 | >85 |
| 570A1Z3 | 30 | C7 | 5.6 | C10 | 1.9 | >85 |
| 570B3D1 | 35 | C7 | 4.4 | C10 | 4.4 | >85 |
| 570B7U2 | 35 | C7 | 5.7 | C10 | 3.1 | >85 |
| 570B1A3 | 35 | C7 | 6.6 | C10 | 2.2 | NH |
| 570C4V1 | 37 | C7 | 4.6 | C10 | 4.6 | >85 |
| 570C7H2 | 37 | C7 | 6 | C10 | 3.2 | >85 |
| 570C3S3 | 37 | C7 | 6.9 | C10 | 2.3 | NH |
| 570D6T1 | 40 | C7 | 5 | C10 | 5 | >85 |
| 570D4U2 | 40 | C7 | 6.5 | C10 | 3.5 | >85 |
| 570D1Q3 | 40 | C7 | 7.5 | C10 | 2.5 | NH |

All samples tested for one and two week stability at 0 °C and -10 °C formed a solid gel or exhibited phase separation.

**Table 1 b**

| Trial | [Gly] | Comp. 1 | wt% | Comp. 2 | wt% | Cloudpt. °C |
|---|---|---|---|---|---|---|
| 569A3W1 | 30 | C7 | 3.8 | C9 | 3.8 | >85 |
| 569A8J2 | 30 | C7 | 4.9 | C9 | 2.6 | >85 |
| 569A2X3 | 30 | C7 | 5.6 | C9 | 1.9 | 62 |
| 569B0Z1 | 35 | C7 | 4.4 | C9 | 4.4 | >85 |
| 569B7Y2 | 35 | C7 | 5.7 | C9 | 3.1 | >85 |
| 569B5T3 | 35 | C7 | 6.6 | C9 | 2.2 | NH |
| 569C7F1 | 37 | C7 | 4.6 | C9 | 4.6 | >85 |
| 569C1A2 | 37 | C7 | 6 | C9 | 3.2 | >85 |
| 569C8R3 | 37 | C7 | 6.9 | C9 | 2.3 | NH |
| 569D2X1 | 40 | C7 | 5 | C9 | 5 | >85 |
| 569D6Y2 | 40 | C7 | 6.5 | C9 | 3.5 | NH |
| 569D2L3 | 40 | C7 | 7.5 | C9 | 2.5 | NH |

Samples 569A3W1 and 569BOZ1 were opaque at 0 °C and -10 °C after one week, and 569C7F1 was opaque at 0 °C after one week. All other samples tested for one week stability at 0 °C and -10 °C formed a solid gel or exhibited phase separation. All samples tested for two week stability at 0 °C and -10 °C formed a solid gel or exhibited phase separation.

### Example 2: Etherdiamine Compatibility Screening

Aqueous concentrate compositions were prepared containing potassium glyphosate salt and excipient ingredients as shown in Tables 2a and 2b. Tables 2a and 2b provide compatibilization data for high load potassium glyphosate formulations containing etherdiamine and secondary etheramine surfactants. Formulations that were homogenous and transparent at room temperature were tested for cloud point (Cloudpt.). Cloudpoint values reported as NH were non-homogeneous. Any formulations that had a cloud point above 40 °C were tested for density, and one and two week seeded stabilities at 0 °C and -10 °C were evaluated.

**Table 2a**

| Trial | [Gly] | Comp. 1 | wt% | Comp. 2 | wt% | Cloudpt. °C |
|---|---|---|---|---|---|---|
| 571A6Y1 | 30 | C7 | 3.8 | C9 | 3.8 | >85 |
| 571A4F2 | 30 | C7 | 4.9 | C9 | 2.6 | >85 |
| 571A7H3 | 30 | C7 | 5.6 | C9 | 1.9 | 41 |
| 571B0W1 | 35 | C7 | 4.4 | C9 | 4.4 | >85 |
| 571B5T2 | 35 | C7 | 5.7 | C9 | 3.1 | 45 |
| 571 B1 Q3 | 35 | C7 | 6.6 | C9 | 2.2 | 26 |
| 571C9I1 | 37 | C7 | 4.6 | C9 | 4.6 | >85 |
| 571C7K2 | 37 | C7 | 6 | C9 | 3.2 | 29 |
| 571 C3Z3 | 37 | C7 | 6.9 | C9 | 2.3 | NH |
| 571D7T1 | 40 | C7 | 5 | C9 | 5 | >85 |
| 571 D9P2 | 40 | C7 | 6.5 | C9 | 3.5 | NH |
| 571 D4R3 | 40 | C7 | 7.5 | C9 | 2.5 | NH |

Sample 571A6Y1 was clear at 0 °C after one week. All other samples tested for one week stability at 0 °C and -10 °C formed a solid gel or exhibited phase separation. All samples tested for two week stability at 0 °C and -10 °C formed a solid gel or exhibited phase separation.

**Table 2b**

| Trial | [Gly] | Comp. 1 | wt% | Comp. 2 | wt% | Cloudpt. °C |
|---|---|---|---|---|---|---|
| 572A2D1 | 30 | C7 | 3.8 | C10 | 3.8 | >85 |
| 572A9T2 | 30 | C7 | 4.9 | C10 | 2.6 | 71 |
| 572A4V3 | 30 | C7 | 5.6 | C10 | 1.9 | 42 |
| 572B6G1 | 35 | C7 | 4.4 | C10 | 4.4 | >85 |
| 572B0E2 | 35 | C7 | 5.7 | C10 | 3.1 | NH |
| 572B6Y3 | 35 | C7 | 6.6 | C10 | 2.2 | NH |
| 572C7L1 | 37 | C7 | 4.6 | C10 | 4.6 | 83 |
| 572C9G2 | 37 | C7 | 6 | C10 | 3.2 | NH |
| 572C7A3 | 37 | C7 | 6.9 | C10 | 2.3 | NH |
| 572D2I1 | 40 | C7 | 5 | C10 | 5 | NH |
| 572D8S2 | 40 | C7 | 6.5 | C10 | 3.5 | NH |
| 572D9W3 | 40 | C7 | 7.5 | C10 | 2.5 | NH |

All samples tested for one and two week stability at 0 °C and -10 °C formed a solid gel or exhibited phase separation.

### Example 3: Etherdiamine Compatibility Screening

Aqueous concentrate compositions were prepared containing potassium glyphosate salt and excipient ingredients as shown in Table 3a. Table 3a provides compatibilization data for high load potassium glyphosate formulations containing etherdiamine and etheramine surfactants. The formulations were prepared by mixing the surfactants, adding 49.8% w/w a.e. aqueous solution of potassium glyphosate to a concentration in w/w% as indicated by [gly] in Table 3a and then taking the total volume to 100% with water. Formulations that were homogenous and transparent at room temperature were tested for cloud point (Cloudpt.). Cloudpoint values reported as NH were non-homogeneous. Any formulations that had a cloud point above 40 °C were tested for density, and one and two week seeded stabilities at 0 °C and -10 °C were evaluated as given in Table 3b.

**Table 3a**

| Trial | [Gly] | Comp. 1 | wt% | Comp. 2 | wt% | Cloudpt. °C |
|---|---|---|---|---|---|---|
| 39E3T1 | 30 | C1 | 7.5 | ----- | ----- | >98 |
| 39E0P2 | 30 | C1 | 3.8 | C9 | 3.8 | >90 |
| 39E4X3 | 30 | C1 | 4.9 | C9 | 2.6 | >90 |
| 39E7I4 | 30 | C1 | 5.6 | C9 | 1.9 | >94 |
| 39F2Z1 | 35 | C1 | 8.8 | ----- | ----- | 89 |
| 39F9K2 | 35 | C1 | 4.4 | C9 | 4.4 | >90 |
| 39F6H3 | 35 | C1 | 5.7 | C9 | 3.1 | >90 |
| 39F1 G4 | 35 | C1 | 6.6 | C9 | 2.2 | >90 |
| 39G5I1 | 37 | C1 | 9.3 | ----- | ----- | 64 |
| 39G2U2 | 37 | C1 | 4.6 | C9 | 4.6 | >90 |
| 39G1Q3 | 37 | C1 | 6 | C9 | 3.2 | >90 |
| 39G0T4 | 37 | C1 | 6.9 | C9 | 2.3 | >99 |
| 39H4A1 | 40 | C1 | 10 | ----- | ----- | NH |
| 39H1Q2 | 40 | C1 | 5 | C9 | 5 | >98 |
| 39H0R3 | 40 | C1 | 6.5 | C9 | 3.5 | 88 |
| 39H3E4 | 40 | C1 | 7.5 | C9 | 2.5 | 68 |

**Table 3b**

| Trial | 1 Week 0°C | 2 Weeks 0°C | 1 Week -10°C | 2 Weeks -10°C |
|---|---|---|---|---|
| 39E3T1 | Pass | Pass | Pass | Frozen |
| 39E0P2 | Pass | Pass | Pass | Pass |
| 39E4X3 | Pass | Pass | Pass | Pass |
| 39E7I4 | Pass | Pass | Pass | Pass |
| 39F2Z1 | Pass | Pass | Pass | Pass |
| 39F9K2 | Pass | Pass | Pass | Pass |
| 39F6H3 | Pass | Pass | Pass | Pass |
| 39F1G4 | Pass | Pass | Pass | Pass |
| 39G5I1 | Pass | Pass | Pass | Pass |
| 39G2U2 | Pass | Pass | Pass | Pass |
| 39G1Q3 | Pass | Pass | Pass | Pass |
| 39G0T4 | Pass | Pass | Pass | Pass |
| 39H1Q2 | Pass | Pass | Pass | Pass |
| 39H0R3 | Pass | Pass | Pass | Pass |
| 39H3E4 | Pass | Pass | Pass | Pass |

The data in tables 3a and 3b demonstrate enhanced compatibility of high load potassium glyphosate formulations containing etheramine and primary etheramine surfactants.

### Example 4: Etherdiamine Compatibility Screening

Aqueous concentrate compositions were prepared containing potassium glyphosate salt and excipient ingredients as shown in Tables 4a and 4c. Table 4a provides compatibilization data for high load potassium glyphosate formulations containing an etherdiamine and a secondary etheramine surfactant. Table 4c provides compatibilization data for high load potassium glyphosate formulations containing etherdiamine and etheramine surfactants. The formulations were prepared by mixing the surfactants followed by glyphosate addition to a concentration in w/w% as indicated by [gly], and then taking the total volume to 100% with water. Table 4a formulations that were homogenous and transparent after standing overnight at 60 °C were tested for cloud point (Cloudpt.) and 24 hour, 1 week and 2 week stability at 0 °C and -10 °C (see table 4b). Table 4c formulations were tested for cloud point (Cloudpt.) and 24 hour, 1 week and 2 week stability at 0 °C and -10 °C (see table 4d). In the tables below stability is reported as Transparent (Transp.), Opaque (Opaq.), Hazy or Non-homogeneous (NH).

**Table 4a**

| Trial | [Gly] | Comp. 1 | wt% | Comp. 2 | wt% | Cloudpt. |
|---|---|---|---|---|---|---|
| 573A5B | 40.1 | C9 | 5 | C14 | 5 | >85 °C |
| 573B7H | 40.1 | C9 | 5 | C15 | 5 | >85 °C |
| 573C9K | 40.1 | C9 | 5 | C7 | 5 | >85 °C |
| 573D4C | 40.1 | C9 | 5 | C16 | 5 | NH |

**Table 4b**

| Trial | 0°C 24 hr | -10°C 24 hr | 0°C 1 wk | -10°C 1 wk | 0°C 2 wks | -10°C 2 wks |
|---|---|---|---|---|---|---|
| 573A5B | Transp | Transp | Transp | Transp | Transp | Transp |
| 573B7H | Transp | Hazy | Transp | Opaq | Hazy | Hazy |
| 573C9K | Opaq | Opaq | Opaq | NH | NH | NH |

The viscosity of 573A5B was greater than the viscosity of 573B7H at 0 °C and -10 °C. 573C9K formed a gel at both temperatures.

Upon warming the 2 week stability samples, samples 573A5B and 573B7H each went from non-homogeneous (phase separation apparent) to homogeneous after about 5 minutes. After 24 hours, sample 573C9K did not become homogeneous.

**Table 4c: The cloudpoint in each trial indicated in Table 4c exceeded 85 °C.**

| Trial | [Gly] | Comp. 1 | wt% | Comp. 2 | wt% | Comp. 3 | wt% |
|---|---|---|---|---|---|---|---|
| 575A2S | 40.2 | C7 | 5 | C9 | 5 | C17 | 2 |
| 575B8J | 40.2 | C7 | 5 | C9 | 5 | C17 | 1 |
| 575C8I | 40.2 | C7 | 5 | C9 | 5 | C17 | 0.5 |
| 575D6T | 40.2 | C7 | 5 | C9 | 5 | C17 | 0.25 |

**Table 4d**

| Trial | 0°C 24 hr | -10°C 24 hr | 0°C 1 wk | -10°C 1 wk | 0°C 2 wks | -10°C 2 wks |
|---|---|---|---|---|---|---|
| 575A2S | Transp | Transp | Transp | Opaq | NH | NH |
| 575B8J | Transp | Transp | Hazy | Opaq | NH | NH |
| 575C8I | Transp | Transp | NH | Opaq | NH | NH |
| 575D6T | Transp | Transp | NH | NH | NH | NH |

Upon warming the 2 week stability samples, each went from non-homogeneous (phase separation apparent) to homogeneous after about 5 minutes.

### Example 5

Aqueous concentrate compositions were prepared containing glyphosate salt and excipient ingredients as shown in Table 5a.

**Table 5a**

| Trial | Salt | g/l | Comp. 1 | wt% | Comp. 2 | wt% | Stability | Cloudpt. °C |
|---|---|---|---|---|---|---|---|---|
| 659B6S | K | 480 | C1 | 9.1 | ----- | ----- | stable | 69 |
| 659C8Q | K | 480 | C1 | 9.1 | ----- | ----- | stable | 59 |
| 659D4B | K | 480 | C2 | 9.1 | ----- | ----- | stable | >90 |
| 664B7E | K | 480 | C1 | 8.2 | C2 | 0.9 | stable | 75 |
| 664A3G | K | 480 | C1 | 7.3 | C2 | 1.8 | stable | 67 |
| 662C1R | K | 480 | C1 | 6.8 | C2 | 2.3 | stable | 77 |
| 662D9S | K | 480 | C1 | 4.5 | C2 | 4.5 | stable | >90 |
| 665A3V | K | 540 | C1 | 5.0 | C2 | 5.0 | stable | 55 |

Velvetleaf (ABUTH) and Japanese millet (ECHCF) plants were grown and treated by the standard procedures above. The compositions of Table 5a and comparative compositions Roundup UltraMax, 540KS and 41I were applied. Results, averaged for all replicates of each treatment, are shown in Table 5b and 5c.

**Table 5b: ABUTH % Control**

| Trial | 100 g a.e./ha | 200 g a.e./ha | 300 g a.e./ha | 400 g a.e./ha |
|---|---|---|---|---|
| Roundup UltraMax | 14.2 | 81.7 | 85.8 | 90.8 |
| 41I | 48.3 | 80.0 | 88.3 | 90.0 |
| 540KS | 40.0 | 74.2 | 85.0 | 89.2 |
| 659B6S | 24.2 | 72.5 | 81.7 | 85.8 |
| 659C8Q | 10.0 | 73.3 | 80.8 | 85.0 |
| 659D4B | 23.3 | 69.2 | 82.5 | 84.2 |
| 664B7E | 12.5 | 75.0 | 82.5 | 85.8 |
| 664A3G | 61.7 | 76.7 | 82.5 | 86.7 |
| 662C1R | 43.3 | 79.2 | 82.5 | 85.0 |
| 662D9S | 74.2 | 79.2 | 81.7 | 85.0 |

**Table 5c: ECHCF % Control**

| Trial | 100 g a.e./ha | 200 g a.e./ha | 300 g a.e./ha | 400 g a.e./ha |
|---|---|---|---|---|
| Roundup UltraMax | 5.0 | 58.3 | 72.5 | 79.2 |
| 41I | 13.3 | 58.3 | 72.5 | 80.0 |
| 540KS | 15.0 | 55.8 | 64.2 | 68.3 |
| 659B6S | 15.0 | 51.7 | 60.0 | 64.2 |
| 659C8Q | 22.5 | 53.3 | 65.0 | 67.5 |
| 659D4B | 27.5 | 60.0 | 59.2 | 66.7 |
| 664B7E | 26.7 | 55.0 | 62.5 | 70.0 |
| 664A3G | 34.2 | 52.5 | 60.0 | 67.5 |
| 662C1R | 32.5 | 55.0 | 66.7 | 70.8 |
| 662D9S | 35.0 | 55.0 | 66.7 | 72.5 |

Results for ABUTH and ECHCF: The formulation of 662D9S was nearly equal in efficacy to the standard of 41I for overall performance.

### Example 6

The synergistic efficacy of high load potassium glyphosate formulations containing secondary etheramine and etherdiamine blends were evaluated versus high load potassium glyphosate formulations containing either an etheramine or etherdiamine surfactant. Table 6a provides the compositions of formulation blends tested with glyphosate a.e.:total surfactant loading of 4:1. Table 6b provides greenhouse test results for the formulations of table 6a, comparative high load potassium glyphosate formulations containing either an etheramine or an etherdiamine surfactant, or an etheramine/etherdiamine blend, each with a glyphosate a.e.:surfactant loading of 4:1, and comparative glyphosate standards.

**Table 6a**

| Form. | Gly Salt | wt% a.e. | Comp. 1 | wt% | Comp. 2 | wt% |
|---|---|---|---|---|---|---|
| 360I | IPA | 30.8 | ----- | ----- | ----- | ----- |
| 570I | IPA | 30.7 | ----- | ----- | ----- | ----- |
| 294 | IPA | 37.7 | ----- | ----- | ----- | ----- |
| 273 | IPA | 40 | ----- | ----- | ----- | ----- |
| 750K | K | 49.8 | ----- | ----- | ----- | ----- |
| 662D1 R | K | 36.3 | C1 | 4.5 | C2 | 4.5 |
| 569D1Z | IPA | 40 | C7 | 5 | C9 | 5 |
| 570D1R | IPA | 40 | C7 | 5 | C10 | 5 |
| 571A2E | K | 30 | C7 | 4.9 | C9 | 2.6 |
| 571A3T | K | 30 | C7 | 5.6 | C9 | 2.9 |
| 571D1W | K | 40 | C7 | 5 | C9 | 5 |
| 572A2S | K | 30 | C7 | 4.9 | C10 | 2.6 |
| 572A3K | K | 30 | C7 | 5.6 | C10 | 2.9 |
| 572C1G | K | 37 | C7 | 4.6 | C10 | 4.6 |

**Table 6b**

| Formulation | Rate (g/ha) | MALSI | LOLRI | VIOAR | RAPSA |
|---|---|---|---|---|---|
| No Treatment | 0 | 0 | 0 | 0 | 0 |
| 576 | 540 | 56.3 | 43.3 | 77 | 56.3 |
| 576 | 720 | 80 | 51.3 | 76.3 | 72.5 |
| 576 | 1080 | 90 | 72.5 | 92.3 | 83.3 |
| 5701 | 540 | 68.8 | 35 | 80.8 | 65 |
| 5701 | 720 | 88.8 | 61.3 | 90 | 81.3 |
| 5701 | 1080 | 93.8 | 65 | 94.8 | 87.5 |
| 662D1 R | 540 | 38.8 | 52.5 | 65 | 42.8 |
| 662D1R | 720 | 67.5 | 60 | 78.8 | 70 |
| 662D1 R | 1080 | 86.3 | 84.5 | 94.5 | 89.5 |
| 569D1Z | 540 | 52.5 | 55 | 82.5 | 71.3 |
| 569D1Z | 720 | 73.8 | 80 | 87.5 | 72.5 |
| 569D1Z | 1080 | 88.8 | 89.3 | 90.8 | 93.8 |
| 570D1 R | 540 | 66.3 | 67.5 | 83.8 | 74.5 |
| 570D1R | 720 | 81.8 | 72.5 | 92 | 77.5 |
| 570D1R | 1080 | 88.8 | 83.8 | 91.3 | 91.3 |
| 571A2E | 540 | 57.5 | 61.3 | 76.3 | 61.3 |
| 571A2E | 720 | 75 | 63.8 | 83.8 | 75 |
| 571A2E | 1080 | 92.5 | 80 | 94.5 | 85 |
| 571A3T | 540 | 61.3 | 53.8 | 73.8 | 71.3 |
| 571A3T | 720 | 81.3 | 76.3 | 88.3 | 80 |
| 571A3T | 1080 | 92.5 | 92 | 92.5 | 85 |
| 571 D1 W | 540 | 61.3 | 42.5 | 78.8 | 57.5 |
| 571 D1 W | 720 | 78.8 | 67.5 | 87 | 75 |
| 571D1W | 1080 | 90 | 90 | 93.8 | 91.3 |
| 572A2S | 540 | 58.8 | 41.3 | 61.3 | 64.5 |
| 572A2S | 720 | 88.8 | 63.8 | 82 | 85 |
| 572A2S | 1080 | 90.8 | 76.3 | 97 | 97.5 |
| 572A3K | 540 | 67.5 | 32.5 | 81.3 | 71.3 |
| 572A3K | 720 | 87.5 | 79 | 81.3 | 87.5 |
| 572A3K | 1080 | 92.5 | 83.8 | 93.3 | 75 |
| 572C1G | 540 | 65 | 57.5 | 85 | 66.3 |
| 572C1G | 720 | 85 | 70 | 76.3 | 77.5 |
| 572C1G | 1080 | 91.3 | 90 | 82.5 | 80 |
| C6 | 540 | 53.8 | 17.5 | 53.8 | 44.5 |
| C9 | 135 | | | | |
| C6 | 720 | 63.8 | 37.5 | 75 | 62.5 |
| C9 | 180 | | | | |
| C6 | 1080 | 88.8 | 65 | 90.8 | 81.3 |
| C9 | 270 | | | | |
| C6 | 540 | 53.8 | 26.7 | 71.3 | 39.5 |
| C10 | 135 | | | | |
| C6 | 720 | 68.8 | 15 | 75 | 58.8 |
| C10 | 180 | | | | |
| C6 | 1080 | 86.3 | 66.3 | 92.5 | 87.8 |
| C10 | 270 | | | | |
| C6 | 540 | 58.8 | 47.5 | 67.5 | 67.5 |
| C7 | 135 | | | | |
| C6 | 720 | 82.5 | 55 | 86.3 | 81.3 |
| C7 | 180 | | | | |
| C6 | 1080 | 92 | 75 | 92 | 82.5 |
| C7 | 270 | | | | |

Formulations containing secondary etheramine and etherdiamine surfactant blends were more efficacious than the formulations containing either surfactant. A secondary etheramine/etherdiamine blend preformed better than a primary etheramine/etherdiamine blend. Etherdiamine surfactant C10 (iso C₁₂ ethoxylated (5 EO) ether diamine) demonstrated superior performance on broadleaves. Etherdiamine surfactant C9 (iso C₁₂ ethoxylated (3 EO) ether diamine) demonstrated superior performance on ryegrass.

### Example 7

The synergistic efficacy of high load potassium glyphosate formulations containing secondary etheramine and etherdiamine blends were further evaluated versus high load potassium glyphosate formulations containing either an etheramine or etherdiamine surfactant. Table 7a provides the compositions of formulation blends tested with glyphosate a.e.:total surfactant loading of 4:1. Table 7b provides greenhouse test results for the formulations of table 7a, comparative high load potassium glyphosate formulations containing either an etheramine or an etherdiamine surfactant, or an etheramine/etherdiamine blend, each with a glyphosate a.e.:surfactant loading of 4:1, and comparative glyphosate standards.

**Table 7a**

| Form. | Gly Salt | wt% a.e. | Comp. 1 | wt% | Comp. 2 | wt% |
|---|---|---|---|---|---|---|
| 360I | IPA | 30.8 | ----- | ----- | ----- | ----- |
| 5701 | IPA | 30.7 | ----- | ----- | ----- | ----- |
| 750K | IPA | 49.8 | ----- | ----- | ----- | ----- |
| 265A4R | IPA | 37.7 | ----- | ----- | ----- | ----- |
| 262A3C | IPA | 40 | C12 | 5.5 | C13 | 4.5 |
| 662D6H | K | 36.3 | C1 | 4.5 | C2 | 4.5 |
| 571D1W | K | 40 | C7 | 5 | C9 | 5 |
| 572C1P | K | 37 | C7 | 4.6 | C10 | 4.6 |

**Table 7b**

| Formulation | Rate (g/ha) | MALSI | LOLRI | VIOAR | RAPSA |
|---|---|---|---|---|---|
| No Treatment | 0 | 0 | 0 | 0 | 0 |
| 360I | 540 | 51.3 | 50 | 51.3 | 46.3 |
| 3601 | 720 | 77.5 | 55 | 71.3 | 62.5 |
| 3601 | 1080 | 86.3 | 76.3 | 83.8 | 82.5 |
| 5701 | 540 | 73.8 | 45 | 77.5 | 76.3 |
| 5701 | 720 | 83.8 | 52.5 | 91.3 | 86.3 |
| 5701 | 1080 | 91.3 | 82.5 | 88.8 | 81.3 |
| 273 | 540 | 60 | 45 | 53.8 | 52.5 |
| 273 | 720 | 72.5 | 51.3 | 73.8 | 62.5 |
| 273 | 1080 | 85 | 68.8 | 83.8 | 81.3 |
| 662D6H | 540 | 53.4 | 37.5 | 57.5 | 53.8 |
| 662D6H | 720 | 82.5 | 62.5 | 78.8 | 76.3 |
| 662D6H | 1080 | 85 | 82.5 | 91.3 | 75 |
| 571D1W | 540 | 61.3 | 56.3 | 71.3 | 60 |
| 571D1W | 720 | 78.8 | 73.8 | 83.8 | 75 |
| 571D1W | 1080 | 88.8 | 85 | 87.5 | 75 |
| 572C1P | 540 | 62.5 | 50 | 68.8 | 53.8 |
| 572C1P | 720 | 83.8 | 70 | 78.8 | 78.8 |
| 572C1P | 1080 | 90 | 88.8 | 88.8 | 86.3 |
| C6 | 540 | 60 | 46.3 | 65 | 61.3 |
| C9 | 135 | | | | |
| C6 | 540 | 52.5 | 45 | 68.8 | 56.3 |
| C10 | 135 | | | | |
| C6 | 540 | 62.5 | 50 | 63.8 | 57.5 |
| C7 | 135 | | | | |
| C6 | 540 | 62.5 | 45 | 63.8 | 71.3 |
| C7 | 67.5 | | | | |
| C9 | 67.5 | | | | |
| C6 | 540 | 62.5 | 45 | 65 | 55 |
| C7 | 45 | | | | |
| C9 | 90 | | | | |
| C6 | 540 | 72.5 | 51.3 | 71.3 | 56.3 |
| C7 | 90 | | | | |
| C9 | 45 | | | | |
| C6 | 540 | 60 | 57.5 | 62.5 | 65 |
| C7 | 67.5 | | | | |
| C10 | 67.5 | | | | |
| C6 | 540 | 63.8 | 58.8 | 68.8 | 55 |
| C7 | 45 | | | | |
| C10 | 90 | | | | |
| C6 | 540 | 67.5 | 52.5 | 63.8 | 63.8 |
| C7 | 90 | | | | |
| C10 | 45 | | | | |
| C6 | 720 | 76.3 | 51.3 | 67.5 | 67.5 |
| C9 | 180 | | | | |
| C6 | 720 | 78.8 | 47.5 | 67.5 | 71.3 |
| C10 | 180 | | | | |
| C6 | 720 | 73.8 | 66.3 | 65 | 72.5 |
| C7 | 180 | | | | |
| C6 | 720 | 77.5 | 62.5 | 75 | 68.8 |
| C7 | 90 | | | | |
| C9 | 90 | | | | |
| C6 | 720 | 76.3 | 73.8 | 78.8 | 80 |
| C7 | 60 | | | | |
| C9 | 120 | | | | |
| C6 | 720 | 82.5 | 61.3 | 80 | 76.3 |
| C7 | 120 | | | | |
| C9 | 60 | | | | |
| C6 | 720 | 83.8 | 73.8 | 78.8 | 73.8 |
| C7 | 90 | | | | |
| C10 | 90 | | | | |
| C6 | 720 | 80 | 75 | 78.8 | 82.5 |
| C7 | 60 | | | | |
| C10 | 120 | | | | |
| C6 | 720 | 82.5 | 72.5 | 81.3 | 78.8 |
| C7 | 120 | | | | |
| C10 | 60 | | | | |
| C6 | 1080 | 83.8 | 67.5 | 82.5 | 85 |
| C9 | 270 | | | | |
| C6 | 1080 | 81.3 | 55 | 82.5 | 81.3 |
| C10 | 270 | | | | |
| C6 | 1080 | 87.5 | 78.8 | 80 | 80 |
| C7 | 270 | | | | |
| C6 | 1080 | 77.5 | 81.3 | 86.3 | 81.3 |
| C7 | 135 | | | | |
| C9 | 135 | | | | |
| C6 | 1080 | 85 | 87.5 | 83.8 | 85 |
| C7 | 90 | | | | |
| C9 | 180 | | | | |
| C6 | 1080 | 85 | 86.3 | 85 | 80 |
| C7 | 180 | | | | |
| C9 | 90 | | | | |
| C6 | 1080 | 86.3 | 85 | 83.8 | 88.8 |
| C7 | 135 | | | | |
| C10 | 135 | | | | |
| C6 | 1080 | 87.5 | 86.3 | 86.3 | 85 |
| C7 | 90 | | | | |
| C10 | 180 | | | | |
| C6 | 1080 | 88.8 | 90 | 87.5 | 83.8 |
| C7 | 180 | | | | |
| C10 | 90 | | | | |

Formulations containing secondary etheramine and etherdiamine surfactant blends were more efficacious than the formulations containing either surfactant. A secondary etheramine/etherdiamine blend preformed better than a primary etheramine/etherdiamine blend. Etherdiamine surfactant C10 (iso C₁₂ ethoxylated (5 EO) ether diamine) was more efficacious than etherdiamine surfactant C9 (iso C₁₂ ethoxylated (3 EO) ether diamine).

### Example 8

The synergistic efficacy of high load potassium glyphosate formulations containing a branched secondary etheramine and etherdiamine blends were evaluated versus high load potassium glyphosate formulations containing either an etheramine or etherdiamine surfactant. Table 8a provides the compositions of formulation blends tested with glyphosate a.e.:total surfactant loading of 4:1. Table 8b provides greenhouse test results for the formulations of table 8a, comparative high load potassium glyphosate formulations containing either an etheramine or an etherdiamine surfactant, or an etheramine/etherdiamine blend, each with a glyphosate a.e.:surfactant loading of 4:1, and comparative glyphosate standards.

**Table 8a**

| Form | Gly Salt | wt% a.e. | Comp. 1 | wt% | Comp. 2 | wt% |
|---|---|---|---|---|---|---|
| 360I | IPA | 30.8 | ----- | ----- | ----- | ----- |
| 5701 | IPA | 30.7 | ----- | ----- | ----- | ----- |
| 750K | K | 49.8 | ----- | ----- | ----- | ----- |
| 662D6H | K | 36.3 | C1 | 4.5 | C2 | 4.5 |
| 569D1Q | IPA | 40 | C7 | 5 | C9 | 5 |
| 570D1P | IPA | 40 | C7 | 5 | C10 | 5 |

**Table 8b**

| Formulation | Rate (g/ha) | MALSI | LOLRI | VIOAR |
|---|---|---|---|---|
| No Treatment | 0 | 0 | 0 | 0 |
| 3601 | 540 | 41.3 | 37.5 | 38.8 |
| 360I | 720 | 78.8 | 68.8 | 70 |
| 3601 | 1080 | 83.8 | 78.8 | 75 |
| 5701 | 540 | 68.8 | 65 | 75 |
| 5701 | 720 | 75 | 82.5 | 90 |
| 570I | 1080 | 88.8 | 83.8 | 94.5 |
| 662D6H | 540 | 47.5 | 41.3 | 50.3 |
| 662D6H | 720 | 71.3 | 60 | 70 |
| 662D6H | 1080 | 82.5 | 72.5 | 82.5 |
| 569D1Q | 540 | 32.5 | 61.3 | 48.8 |
| 569D1Q | 720 | 67.5 | 75 | 73.8 |
| 569D1Q | 1080 | 65 | 88.8 | 90.8 |
| 570D1P | 540 | 62.5 | 72.5 | 75 |
| 570D1P | 720 | 58.8 | 61.3 | 72.5 |
| 570D1P | 1080 | 85 | 95.3 | 94 |
| C6 | 540 | 45 | 33.8 | 31.3 |
| C15 | 135 | | | |
| C6 | 720 | 56.3 | 43.8 | 45 |
| C15 | 180 | | | |
| C6 | 1080 | 72.5 | 56.3 | 56.3 |
| C15 | 270 | | | |
| C6 | 540 | 42.5 | 45 | 30 |
| C15 | 67.5 | | | |
| C9 | 67.5 | | | |
| C6 | 720 | 56.3 | 51.3 | 52.5 |
| C15 | 90 | | | |
| C9 | 90 | | | |
| C6 | 1080 | 80 | 71.3 | 67.5 |
| C15 | 135 | | | |
| C9 | 135 | | | |
| C6 | 540 | 62.5 | 53.8 | 42 |
| C15 | 67.5 | | | |
| C10 | 67.5 | | | |
| C6 | 720 | 71.3 | 63.8 | 68.6 |
| C15 | 90 | | | |
| C10 | 90 | | | |
| C6 | 1080 | 86.3 | 72.5 | 80 |
| C15 | 135 | | | |
| C10 | 135 | | | |
| C6 | 540 | 75 | 50 | 46.3 |
| C14 | 135 | | | |
| C6 | 720 | 78.8 | 66.3 | 71.3 |
| C14 | 180 | | | |
| C6 | 1080 | 88.8 | 85.8 | 81.3 |
| C14 | 270 | | | |
| C6 | 540 | 67.5 | 61.3 | 58.8 |
| C14 | 67.5 | | | |
| C9 | 67.5 | | | |
| C6 | 720 | 76.3 | 67.5 | 72.5 |
| C14 | 90 | | | |
| C9 | 90 | | | |
| C6 | 1080 | 88.8 | 83.8 | 83.8 |
| C14 | 135 | | | |
| C9 | 135 | | | |
| C6 | 540 | 77.5 | 55 | 72.5 |
| C14 | 67.5 | | | |
| C10 | 67.5 | | | |
| C6 | 720 | 83.8 | 73.8 | 85 |
| C14 | 90 | | | |
| C10 | 90 | | | |
| C6 | 1080 | 87.5 | 85 | 94.5 |
| C14 | 135 | | | |
| C10 | 135 | | | |
| C6 | 540 | 47.5 | 32.5 | 52.5 |
| C9 | 135 | | | |
| C6 | 720 | 61.3 | 62.5 | 81.3 |
| C9 | 180 | | | |
| C6 | 1080 | 80 | 68.8 | 81.3 |
| C9 | 270 | | | |
| C6 | 540 | 60.8 | 36.3 | 50 |
| C10 | 135 | | | |
| C6 | 720 | 62.5 | 53.8 | 73.8 |
| C10 | 180 | | | |
| C6 | 1080 | 85 | 67.5 | 85 |
| C10 | 270 | | | |
| C6 | 540 | 58.8 | 55 | 55 |
| C7 | 135 | | | |
| C6 | 720 | 78.8 | 80 | 78.8 |
| C7 | 180 | | | |
| C6 | 1080 | 83.8 | 85 | 85 |
| C7 | 270 | | | |
| C6 | 540 | 60 | 56.3 | 61.3 |
| C7 | 67.5 | | | |
| C9 | 67.5 | | | |
| C6 | 720 | 71.3 | 80 | 82.5 |
| C7 | 90 | | | |
| C9 | 90 | | | |
| C6 | 1080 | 86.3 | 88.3 | 82.5 |
| C7 | 135 | | | |
| C9 | 135 | | | |
| C6 | 540 | 56.3 | 75 | 70 |
| C7 | 67.5 | | | |
| C10 | 67.5 | | | |
| C6 | 720 | 70 | 80 | 72.5 |
| C7 | 90 | | | |
| C10 | 90 | | | |
| C6 | 1080 | 83.8 | 92 | 85 |
| C7 | 135 | | | |
| C10 | 135 | | | |

Formulations containing a branched secondary etheramine (C14) either alone or with etherdiamine (C10) surfactant blends were the most efficacious formulations. Moreover, C14 containing blends outperformed primary etheramine/etherdiamine blends.

### Example 9

The synergistic efficacy of high load potassium glyphosate formulations containing a branched secondary etheramine and etherdiamine blends were evaluated versus high load potassium glyphosate formulations containing either an etheramine or etherdiamine surfactant. Further varying active:surfactant loadings were evaluated. Table 9 provides the compositions of formulation blends tested with glyphosate a.e.:totat surfactant loadings of 4:1 and 6:1. Table 9 also provides greenhouse test results for the formulations branched secondary etheramine and etherdiamine formulations, comparative high load potassium glyphosate formulations containing either an etheramine or an etherdiamine surfactant, or an etheramine/etherdiamine blend, each with a glyphosate a.e.:surfactant loading of 4:1 or 6:1, and comparative glyphosate standards.

**Table 9**

| Formulation | Rate (g/ha) | Gly:Total Surf | LOLRI | MALSI | VIOAR |
|---|---|---|---|---|---|
| No Treatment | 0 | ----- | 0 | 0 | 0 |
| 3601 | 360 | ----- | 77.5 | 73.8 | 57.5 |
| 3601 | 540 | ----- | 83.8 | 77.5 | 70 |
| 3601 | 720 | ----- | 86.3 | 73.8 | 85 |
| 5701 | 360 | ----- | 73.8 | 72.5 | 73.8 |
| 5701 | 540 | ----- | 83.6 | 67.5 | 76.3 |
| 570I | 720 | ----- | 0 | 68.8 | 88.8 |
| C6 | 360 | 6:1 | 60 | 33.8 | 20 |
| C14 | 60 | | | | |
| C6 | 540 | 6:1 | 68.8 | 61.3 | 72.5 |
| C14 | 90 | | | | |
| C6 | 720 | 6:1 | 83.8 | 68.8 | 86.3 |
| C14 | 120 | | | | |
| C6 | 360 | 6:1 | 62.5 | 47.5 | 17.5 |
| C14 | 30 | | | | |
| C9 | 30 | | | | |
| C6 | 540 | 6:1 | 78.8 | 58.8 | 71.3 |
| C14 | 45 | | | | |
| C9 | 45 | | | | |
| C6 | 720 | 6:1 | 88.8 | 70 | 88.8 |
| C14 | 60 | | | | |
| C9 | 60 | | | | |
| C6 | 360 | 4:1 | 58.8 | 41.3 | 40 |
| C14 | 45 | | | | |
| C9 | 45 | | | | |
| C6 | 540 | 4:1 | 77.5 | 61.3 | 65 |
| C14 | 67.5 | | | | |
| C9 | 67.5 | | | | |
| C6 | 720 | 4:1 | 78.8 | 66.3 | 75 |
| C14 | 90 | | | | |
| C9 | 90 | | | | |
| C6 | 360 | 6:1 | 53.8 | 38.8 | 7.5 |
| C14 | 30 | | | | |
| C10 | 30 | | | | |
| C6 | 540 | 6:1 | 65 | 60 | 82.5 |
| C14 | 45 | | | | |
| C10 | 45 | | | | |
| C6 | 720 | 6:1 | 85 | 72.5 | 78.8 |
| C14 | 60 | | | | |
| C10 | 60 | | | | |
| C6 | 360 | 4:1 | 67.5 | 62.5 | 11.3 |
| C14 | 45 | | | | |
| C10 | 45 | | | | |
| C6 | 540 | 4:1 | 76.3 | 60 | 75 |
| C14 | 67.5 | | | | |
| C10 | 67.5 | | | | |
| C6 | 720 | 4:1 | 86.3 | 67.5 | 76.3 |
| C14 | 90 | | | | |
| C10 | 90 | | | | |
| C6 | 360 | 6:1 | 63.8 | 38.8 | 15 |
| C7 | 30 | | | | |
| C9 | 30 | | | | |
| C6 | 540 | 6:1 | 73.8 | 48.8 | 53.8 |
| C7 | 45 | | | | |
| C9 | 45 | | | | |
| C6 | 720 | 6:1 | 83.8 | 65 | 87.5 |
| C7 | 60 | | | | |
| C9 | 60 | | | | |
| C6 | 360 | 4:1 | 55 | 47.5 | 25 |
| C7 | 45 | | | | |
| C9 | 45 | | | | |
| C6 | 540 | 4:1 | 73.6 | 61.3 | 38.8 |
| C7 | 67.5 | | | | |
| C9 | 67.5 | | | | |
| C6 | 720 | 4:1 | 82.5 | 76.3 | 87.5 |
| C7 | 90 | | | | |
| C9 | 90 | | | | |
| C6 | 360 | 6:1 | 60 | 56.3 | 18.8 |
| C7 | 30 | | | | |
| C10 | 30 | | | | |
| C6 | 540 | 6:1 | 75 | 66.3 | 53.8 |
| C7 | 45 | | | | |
| C10 | 45 | | | | |
| C6 | 720 | 6:1 | 85 | 70 | 78.8 |
| C7 | 60 | | | | |
| C10 | 60 | | | | |
| C6 | 360 | 4:1 | 63.8 | 51.3 | 15 |
| C7 | 45 | | | | |
| C10 | 45 | | | | |
| C6 | 540 | 4:1 | 80 | 62.5 | 57.5 |
| C7 | 67.5 | | | | |
| C10 | 67.5 | | | | |
| C6 | 720 | 4:1 | 86.3 | 70 | 82.5 |
| C7 | 90 | | | | |
| C10 | 90 | | | | |
| C6 | 360 | 6:1 | 47.5 | 28.8 | 7.5 |
| C9 | 60 | | | | |
| C6 | 540 | 6:1 | 62.5 | 41.3 | 27.5 |
| C9 | 90 | | | | |
| C6 | 720 | 6:1 | 68.8 | 62.5 | 83.8 |
| C9 | 120 | | | | |
| C6 | 360 | 6:1 | 47.5 | 26.3 | 10 |
| C10 | 60 | | | | |
| C6 | 540 | 6:1 | 58.8 | 57.5 | 32.5 |
| C10 | 90 | | | | |
| C6 | 720 | 6:1 | 76.3 | 70 | 75 |
| C10 | 120 | | | | |
| C6 | 360 | 6:1 | 50 | 35 | 20 |
| C7 | 60 | | | | |
| C6 | 540 | 6:1 | 72.5 | 58.8 | 82.5 |
| C7 | 90 | | | | |
| C6 | 720 | 6:1 | 82.5 | 72.5 | 88.8 |
| C7 | 120 | | | | |

Blends of branched secondary etheramine and etherdiamine surfactants had higher efficacy than each surfactant applied alone.

### Example 10

The synergistic efficacy of high load potassium glyphosate formulations containing secondary etheramine and etherdiamine blends were evaluated versus high load potassium glyphosate formulations containing either an etheramine or etherdiamine surfactant. Table 10a provides the compositions of formulation blends tested containing 480 g a.e./l potassium glyphosate at a glyphosate a.e.:total surfactant loading of 4:1. Tables 10b and c provide greenhouse test results for the formulations of table 10a and comparative glyphosate standards.

**Table 10a**

| Run | Comp 1 | g/l | Comp 2 | wt% |
|---|---|---|---|---|
| 659B4D | C18 | 120.0 | --- | --- |
| 659C7J | C01 | 120.0 | --- | --- |
| 659D2L | C02 | 120.0 | --- | --- |
| 664A0K | C01 | 96.0 | C02 | 24.0 |
| 664B5G | C01 | 108.0 | C02 | 12.0 |
| 662C6F | C01 | 90.0 | C02 | 30.0 |
| 662D9I | C01 | 60.0 | C02 | 60.0 |

The compositions of Table 10a and comparative compositions of Roundup Ultramax^{®}, Roundup Ultra^{®} and 540KS were applied to Velvetleaf (ABUTH) and Japanese millet (ECHCF) plants. Results, averaged for all replicates of each treatment, are shown in Example 10 Tables b and c.

**Table 10b: ABUTH %inhibition**

| Composition | 100 g a.e./ha | 200 g a.e./ha | 300 g a.e./ha | 400 g a.e./ha |
|---|---|---|---|---|
| 659B4D | 24.2 | 72.5 | 81.7 | 85.8 |
| 659C7J | 10.0 | 73.3 | 80.8 | 85.0 |
| 659D2L | 23.3 | 69.2 | 82.5 | 84.2 |
| 664AOK | 61.7 | 76.7 | 82.5 | 86.7 |
| 66485G | 12.5 | 75.0 | 82.5 | 85.8 |
| 662C6F | 43.3 | 79.2 | 82.5 | 85.0 |
| 662D9I | 74.2 | 79.2 | 81.7 | 85.0 |
| Ultramax | 14.2 | 81.7 | 85.8 | 90.8 |
| Ultra | 48.3 | 80.0 | 88.3 | 90.0 |
| 540KS | 40.0 | 74.2 | 85.0 | 89.2 |

**Table 10c: ECHCF %inhibition**

| Composition | 100 g a.e./ha | 200 g a.e./ha | 300 g a.e./ha | 400 g a.e./ha |
|---|---|---|---|---|
| 659B4D | 15.0 | 51.7 | 60.0 | 64.2 |
| 659C7J | 22.5 | 53.3 | 65.0 | 67.5 |
| 659D2L | 27.5 | 60.0 | 59.2 | 66.7 |
| 664A0K | 34.2 | 52.5 | 60.0 | 67.5 |
| 664B5G | 26.7 | 55.0 | 62.5 | 70.0 |
| 662C6F | 32.5 | 55.0 | 66.7 | 70.8 |
| 662D9I | 35.0 | 55.0 | 66.7 | 72.5 |
| Ultramax | 5.0 | 58.3 | 72.5 | 79.2 |
| Ultra | 13.3 | 58.3 | 72.5 | 80.0 |
| 540KS | 15.0 | 55.8 | 64.2 | 68.3 |

A 1:1 ratio of etheramine + dietheramine surfactants was the most efficacious for velvetleaf control and was similar to Roundup^{®} Ultra. Most of the etheramine/di-etheramine blends outperformed the blends over the etheramine and di-etheramine surfactants alone.

### Example 11

Compositions were formulated containing 40 wt% a.e. of potassium glyphosate, C19, 6% water, and the primary and secondary amine surfactants as indicated in table 11a below. Appearance and cloud point for the samples are also reported in table 11a. The surfactants were first mixed followed by glyphosate and water. The completed formulation was mixed by hand.

**Table 11a**

| Run | Comp 1 | wt% | Comp 2 | wt% | Appearance | Cloud pt. |
|---|---|---|---|---|---|---|
| 705A2J | C14 | 5.0 | C09 | 5.0 | homogeneous & transparent | > 80°C |
| 705B7N | C14 | 6.0 | C09 | 4.0 | opaque, phase separation | Not run |
| 705C3K | C14 | 5.5 | C09 | 4.5 | homogeneous & transparent | > 80°C |
| 705D9O | C14 | 5.5 | C19 | 4.5 | opaque, phase separation | Not run |
| 705E5U | C14 | 5.5 | C20 | 4.5 | opaque, phase separation | Not run |
| 705F7T | C14 | 5.5 | C21 | 4.5 | opaque, phase separation | Not run |

### Example 12

The appearance and cloud point of etherdiamine surfactants with varying alkoxylation numbers (moles) were evaluated in aqueous compositions containing 40 wt% a.e. of potassium glyphosate. The composition formulation and associated results are reported in the table below. Runs 217A2B through 217I8W evaluate a combination of primary and secondary amines. Runs 218A3V through 218G6U evaluate secondary amines. Appearance was evaluated overnight at room temperature. For each run, the surfactants were mixed by hand followed by glyphosate and water to 100%. A vortex mixer was used to complete the mixing.

| Run | Comp 1 | wt% | Comp 2 | wt% | Appearance | Cloud pt. °C |
|---|---|---|---|---|---|---|
| 217A2B | C18 | 6.5 | C22 | 3.5 | Homogeneous/ transparent | 60 |
| 217B7H | C18 | 7.5 | C22 | 2.5 | Homogeneous/ transparent | 52 |
| 217C9J | C18 | 6.5 | C23 | 3.5 | Homogeneous/ transparent | 82 |
| 217D4R | C18 | 7.5 | C23 | 2.5 | Homogeneous/ transparent | 68 |
| 217E4L | C18 | 6.5 | C24 | 3.5 | Homogeneous/ transparent | 63 |
| 217F0W | C18 | 6.5 | C25 | 3.5 | Opaque/Phase separation | No test |
| 217G1D | C18 | 6.5 | C09 | 3.5 | Homogeneous/ transparent | 84 |
| 217H8I | C18 | 7.5 | C09 | 2.5 | Homogeneous/ transparent | 67 |
| 217I8W | C18 | 7.5 | C24 | 2.5 | Homogeneous/ transparent | 43 |
| 218A3V | C14 | 5.0 | C22 | 5.0 | Opaque/Phase separation | No test |
| 218B9S | C14 | 5.0 | C23 | 5.0 | Homogeneous/ transparent | >90 |
| 218C7N | C14 | 6.0 | C23 | 4.0 | Opaque/Phase separation | No test |
| 218D0P | C14 | 5.0 | C24 | 5.0 | Opaque/Phase separation | No test |
| 218E3R | C14 | 5.0 | C25 | 5.0 | Opaque/Phase separation | No test |
| 218F2K | C14 | 5.0 | C09 | 5.0 | Homogeneous/ transparent | >90 |
| 218G6U | C14 | 6.0 | C09 | 4.0 | Opaque/Phase separation | No test |

Cloud point data indicates that 3 moles of EO is superior for both the primary and secondary etheramines.

### Example 13

The appearance and cloud point of compositions containing primary etheramine (C18) and etherdiamine (C23) surfactants were evaluated in aqueous compositions containing potassium glyphosate. The composition formulation and associated results are reported in the table below. Appearance was evaluated overnight at room temperature. For each run, the surfactants were mixed by hand followed by glyphosate and water to 100%. A vortex mixer was used to complete the mixing.

| Run | % a.e. Gly | Comp 1 | wt% | Comp 2 | wt% | Appearance | Cloud pt. °C |
|---|---|---|---|---|---|---|---|
| 246A4H | 40 | C18 | 8.0 | --- | --- | Not Transparent | 30 |
| 246B7A | 40 | C18 | 6.0 | C23 | 2.0 | Transparent | 79 |
| 246C5G | 40 | C18 | 6.4 | C23 | 1.6 | Transparent | 71 |
| 246D3K | 40 | C18 | 5.6 | C23 | 2.4 | Transparent | >85 |
| 246E5T | 40 | C18 | 7.2 | C23 | 0.8 | Transparent | 53 |
| 246F6W | 42 | C18 | 5.9 | C23 | 2.5 | Transparent | 67 |
| 246G2V | 42 | C18 | 6.7 | C23 | 1.7 | Transparent | 58 |
| 246H0N | 42 | C18 | 5.0 | C23 | 3.4 | Transparent | 80 |
| 246J8X | 42 | C18 | 7.6 | C23 | 0.8 | Not Transparent | 27 |

Cloudpoint temperature increases as the concentration of etherdiamine surfactant increases.

### Example 14

The appearance and viscosity of compositions containing primary etheramine (C14 or C18) and etherdiamine (C09) surfactants were evaluated in aqueous compositions containing 40 wt% a.e. potassium glyphosate. The composition formulation and associated results are reported in the table below. Appearance was evaluated overnight at room temperature. For each run, the surfactants were mixed by hand followed by glyphosate and water to 100%. A magentic stirrer was used to complete the mixing.

### Example 14 Table a: Components and Appearance

| Run | Comp 1 | wt% | Comp 2 | wt% | Appearance |
|---|---|---|---|---|---|
| 090A9V | C14 | 5.5 | C09 | 5.0 | Homogeneous/transparent |
| 090B5C | C18 | 6.5 | C09 | 3.5 | Homogeneous/transparent |
| 090C2J | C18 | 7.5 | C09 | 2.5 | Homogeneous/transparent |

### Example 14 Table b: Viscosity in cP

| Run | 25°C | 15°C | 10°C | 5°C | 0°C | -5°C |
|---|---|---|---|---|---|---|
| 090A9V | 690 | 1301 | 1823 | 2411 | 2513 | 3086 |
| 090B5C | 456 | 977 | 1227 | 1769 | 2333 | --- |
| 090C2J | 429 | 754 | 1045 | 1583 | --- | --- |

The present invention is not limited to the above embodiments and can be variously modified. The above description of the preferred embodiment is intended only to acquaint others skilled in the art with the invention, its principles, and its practical application so that others skilled in the art may adapt and apply the invention in its numerous forms, as may be best suited to the requirements of a particular use.

With reference to the use of the word(s) "comprise" or "comprises" or "comprising" in this entire specification (including the claims below), Applicants note that unless the context requires otherwise, those words are used on the basis and clear understanding that they are to be interpreted inclusively, rather than exclusively, and that Applicants intend each of those words to be so interpreted in construing this entire specification.

## Claims

1. An aqueous pesticidal composition comprising
(a) glyphosate or a salt or ester thereof; and
(b) an agriculturally useful amount of a cationic surfactant composition comprising a first surfactant selected from the group consisting of:
(a) dialkoxylated amines or quaternary ammonium salts having the formulae: 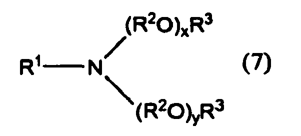 or 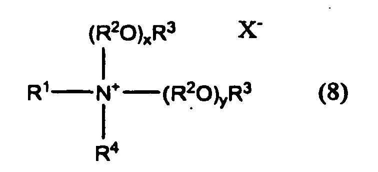 wherein R¹ and R⁴ are independently hydrogen or hydrocarbyl or substituted hydrocarbyl having from 1 to 30 carbon atoms, -R⁵SR⁶, or -(R²O)_{z}R³, R² in each of the x (R²O), y (R²O) and z (R²O) groups is independently C₂-C₄ alkylene, R³ is hydrogen, or a linear or branched alkyl group having from 1 to 22 carbon atoms, R⁵ is a linear or branched alkyl group having from 6 to 30 carbon atoms, R⁶ is a linear or branched alkyl group having from 4 to 15 carbon atoms, x, y and z are independently an average number from 1 to 40, and X- is an agriculturally acceptable anion;
(b) aminated alkoxylated alcohols having the formulae: 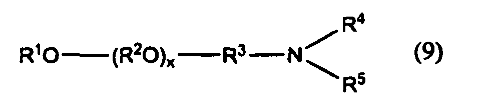 or 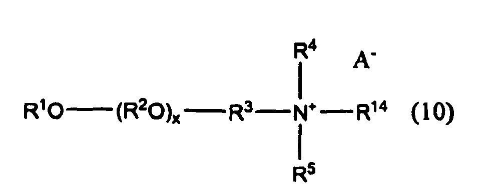 wherein R¹ is hydrogen or hydrocarbyl or substituted hydrocarbyl having from 1 to 30 carbon atoms; R² in each of the x (R²O) and y (R²O) groups is independently C₂-C₄ alkylene; R³ and R⁶ are each independently hydrocarbylene or substituted hydrocarbylene having from 1 to 6 carbon atoms; R⁴ is hydrogen, hydrocarbyl or substituted hydrocarbyl having from 1 to 30 carbon atoms, hydroxy substituted hydrocarbyl, -(R⁶)ₙ-(R²O)_{y}R⁷, - C(=NR¹¹)NR¹²R¹³, -C(=O)NR¹²R¹³, or -C(=S)NR¹²R¹³; R⁵ is -(R⁶)ₙ-(R²O)_{y}R⁷; R⁷ is hydrogen or a linear or branched alkyl group having 1 to 4 carbon atoms; R¹¹, R¹² and R¹³ are hydrogen, hydrocarbyl or substituted hydrocarbyl, R¹⁴ is hydrogen, hydrocarbyl or substituted hydrocarbyl having from 1 to 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, or -C(=S)NR¹²R¹³, n is 0 or 1, x and y are independently an average number from 1 to 60, and A- is an agriculturally acceptable anion;
(c) etheramines or ether quaternary ammonium salts having the formulae: 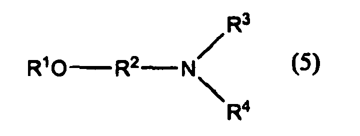 or 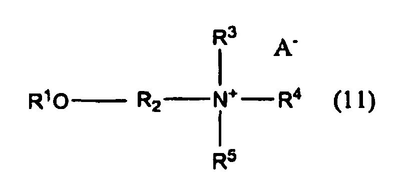 wherein R¹ is hydrogen or a hydrocarbyl or substituted hydrocarbyl having from 1 to 30 carbon atoms; R² is hydrocarbylene or substituted hydrocarbylene having from 2 to 30 carbon atoms; R³, R⁴ and R⁵ are independently hydrogen, hydrocarbyl or substituted hydrocarbyl having from 1 to 30 carbon atoms, or - (R⁶O)ₓR⁷, R⁶ in each of the x (R⁶O) groups is independently C₂-C₄ alkylene, R⁷ is hydrogen, or a linear or branched alkyl group having from 1 to 4 carbon atoms, x is an average number from 1 to 50, and A- is an agriculturally acceptable anion;
(d) monoalkoxylated amines or quaternary ammonium salts having the formulae: 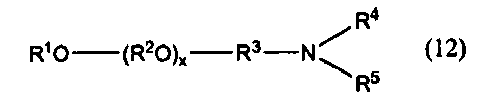 or 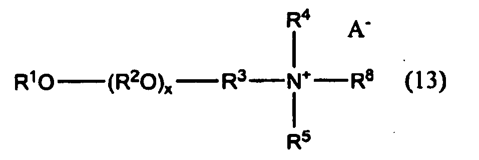 wherein R¹ is hydrogen or hydrocarbyl or substituted hydrocarbyl having from 1 to 30 carbon atoms; R² in each of the x (R²O) and y (R²O) groups is independently C₂-C₄ alkylene; R³ is hydrocarbylene or substituted hydrocarbylene having from 2 to 30 carbon atoms; R⁴, R⁵ and R⁸ are each independently hydrogen, hydrocarbyl or substituted hydrocarbyl having from 1 to 30 carbon atoms, -(R⁶)ₙ-(R²O)_{y}R⁷, or R⁴ and R⁵, together with the nitrogen atom to which they are attached, form a cyclic or heterocyclic ring; R⁶ is hydrocarbylene or substituted hydrocarbylene having from 1 to 30 carbon atoms; R⁷ is hydrogen or a linear or branched alkyl group having 1 to 4 carbon atoms, n is 0 or 1, x and y are independently an average number from 1 to 60, and A- is an agriculturally acceptable anion:
(e) alkoxylated poly(hydroxyalkyl)amines having the formula: 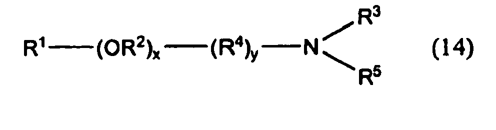 wherein R¹ and R³ are independently hydrogen, hydrocarbyl or substituted hydrocarbyl having from 1 to 30 carbon atoms, R² in each of the x (R²O) groups is independently C₂-C₄ alkylene; R⁴ is hydrocarbylene or substituted hydrocarbylene having from 1 to 30 carbon atoms, R⁵ is hydroxyalkyl, polyhydroxyalkyl, or poly(hydroxyalkyl)alkyl; x is an average number from 0 to 30, and y is 0 or 1;
(f) monoalkoxylated amines having the formula: 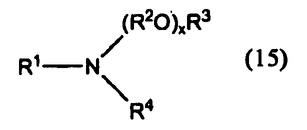 wherein R¹ and R⁴ are independently hydrocarbyl or substituted hydrocarbyl groups having from 1 to 30 carbon atoms or -R⁵SR⁶, R² in each of the x (R²O) groups is independently C₂-C₄ alkylene, R³ is hydrogen, or a linear or branched alkyl group having from 1 to 4 carbon atoms, R⁵ is a linear or branched alkyl group having from 6 to 30 carbon atoms, R⁶ is a hydrocarbyl or substituted hydrocarbyl group having from 4 to 15 carbon atoms and x is an average number from 1 to 60;
(g) monoalkoxylated quaternary ammonium salts having the formula: 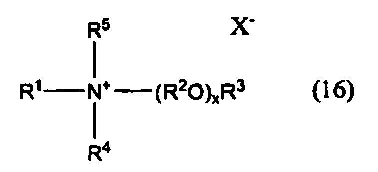 wherein R¹ and R⁵ are independently hydrogen or hydrocarbyl or substituted hydrocarbyl having from 1 to 30 carbon atoms, R⁴ is hydrocarbyl or substituted hydrocarbyl having from 1 to 30 carbon atoms, R² in each of the x (R²O) groups is independently C₂-C₄ alkylene, R³ is hydrogen, or a linear or branched alkyl group having from 1 to 30 carbon atoms, x is an average number from 1 to 60, and X- is an agriculturally acceptable anion; and
(h) amines having the formulae: 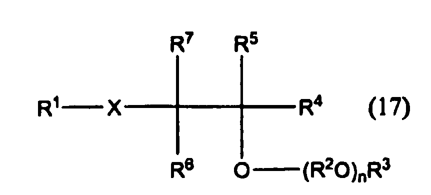 or 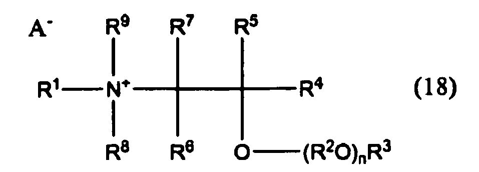 or 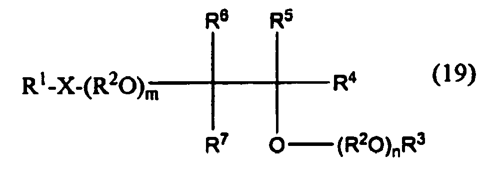 or 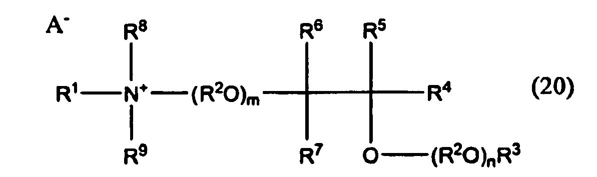 wherein R¹ and R⁹ are independently hydrocarbyl or substituted hydrocarbyl having from 1 to 30 carbon atoms, or -(R²O)ₚR¹³; R² in each of the m (R²O), n (R²O), p (R²O) and q (R²O) groups is independently C₂-C₄ alkylene; R³, R⁸, R¹³ and R¹⁵ are independently hydrogen, or a hydrocarbyl or substituted hydrocarbyl having from 1 to 30 carbon atoms; R⁴ is -(CH₂)_{y}OR¹³ or - (CH₂)_{y}O(R²O)_{q}R³; R⁵, R⁶ and R⁷ are independently hydrogen, hydrocarbyl or substituted hydrocarbyl having from 1 to 30 carbon atoms, or R⁴; R¹⁴ is hydrogen, hydrocarbyl or substituted hydrocarbyl having from 1 to 30 carbon atoms, or -(CH₂)₂O(R²O)ₚR³; m, n, p and q are independently an average number from 1 to 50; X is -N(R¹⁴)-, -N(R¹⁵)C(O)- or -C(O)N(R¹⁵); A- is an agriculturally acceptable anion; and y and z are independently an integer from 0 to 30; and
a second surfactant selected from the group consisting of:
(a) alkoxylated diamines having the formula: 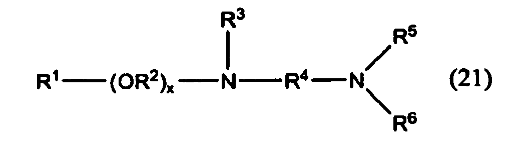 wherein R¹ is hydrocarbyl or substituted hydrocarbyl having from 8 to 30 carbon atoms; R² in each of the x (R² O) groups and the y (R² O) groups is independently C₂-C₄ alkylene; R³, R⁵ and R⁶ are independently hydrogen, hydrocarbyl or substituted hydrocarbyl having from 1 to 30 carbon atoms, or - (R²O)_{y}R⁷; R⁴ is hydrocarbylene or substituted hydrocarbylene having from 2 to 6 carbon atoms, -C(=NR¹¹)NR¹²R¹³-,
-C(=O)NR¹²R¹³-, -C(=S)NR¹²R¹³-, -C(=NR¹²)-, -C(S)-, or -C(O)-; R⁷ is hydrogen, or a linear or branched alkyl group having from 1 to 4 carbon atoms; R¹¹, R¹² and R¹³ are hydrogen, hydrocarbyl or substituted hydrocarbyl having from 1 to 30 carbon atoms, x is 0 or an average number from 1 to 30; and y is an average number from 1 to 50;
(b) diamines having the formula: 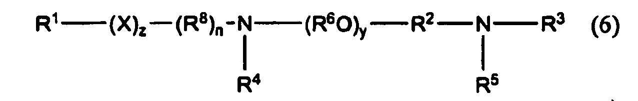 wherein R¹ and R³ are independently a linear or branched alkyl or linear or branched alkenyl group having from 8 to 22 carbon atoms, R² is a linear or branched alkylene group having from 2 to 25 carbon atoms, and R⁴ and R⁵ are each independently hydrogen, a linear or branched alkyl or alkenyl group having from 1 to 6 carbon atoms or -(R⁶O)ₓR⁷, R⁶ in each of the x (R⁶O) groups is independently C₂-C₄ alkylene, R⁷ is hydrogen or a linear or branched alkyl group having from 1 to 4 carbon atoms, x is an average number from 1 to 30, and n, y and z are 0;
(c) diamines having the formula: 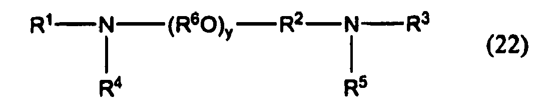 wherein R¹, R³, R⁴ and R⁵ are independently hydrogen, hydrocarbyl or substituted hydrocarbyl having from 1 to 30 carbon atoms, or -(R⁶O)ₓR⁷,R² is hydrocarbylene or substituted hydrocarbylene having from 2 to 30 carbon atoms, R⁶ in each of the x (R⁶O) and y (R⁶O) groups is independently C₂-C₄ alkylene, R⁷ is hydrogen, or a linear or branched alkyl group having from 1 to 30 carbon atoms, x is an average number from 1 to 30, and y is an average number from 3 to 60;
(d) diamines having the formula: 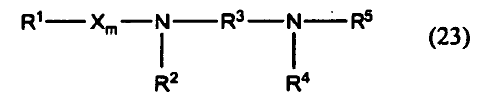 wherein R¹, R² and R⁵ are independently hydrogen or hydrocarbyl or substituted hydrocarbyl having from 1 to 30 carbon atoms or -R⁸(OR⁹)ₙOR¹⁰, R³ is hydrocarbylene or substituted hydrocarbylene having from 2 to 18 carbon atoms, R³ and R⁹ are individually hydrocarbylene or substituted hydrocarbylene having from 2 to 4 carbon atoms, R⁴ and R¹⁰ are independently hydrogen or hydrocarbyl or substituted hydrocarbyl having from 1 to 30 carbon atoms, m is 0 or 1, n is an average number from 0 to 40, X is - C(O)- or -SO₂-;
(e) diamines having the formula: 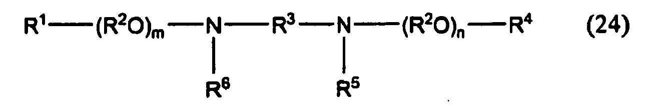 wherein R¹, R⁴, R⁵ and R⁶ are independently hydrogen or hydrocarbyl or substituted hydrocarbyl having from 1 to 30 carbon atoms, R² in each of the m (R²O) and n (R²O) groups and R⁷ are independently C₂-C₄ alkylene, R³ is hydrocarbylene or substituted hydrocarbylene having from 2 to 6 carbon atoms or -(R²O)ₚR⁷-, m and n are individually an average number from 0 to 50, and p is an average number from 0 to 60;
(f) di-poly(hydroxyalkyl)amines having the formula: 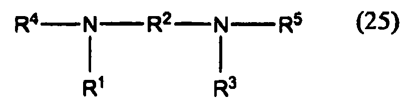 wherein R¹ and R³ are independently hydrogen or hydrocarbyl or substituted hydrocarbyl having from 1 to 22 carbon atoms, R² is hydrocarbylene or substituted hydrocarbylene having from 2 to 18 carbon atoms, R⁴ and R⁵ are independently hydroxyalkyl, polyhydroxyalkyl, or poly(hydroxyalkyl)alkyl; and
(g) alkoxylated triamines having the formula: 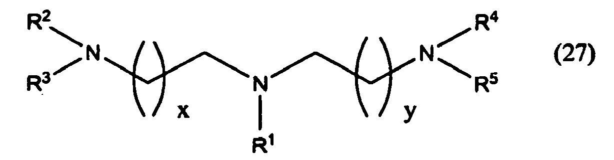 wherein R¹ is hydrocarbyl or substituted hydrocarbyl having from 1 to 30 carbon atoms; R², R³, R⁴ and R⁵ are independently hydrogen, hydrocarbyl or substituted hydrocarbyl having from 1 to 30 carbon atoms, or -(R⁸)ₛ(R⁷O)ₙR⁶; R⁶ is hydrogen or a linear or branched alkyl group having from 1 to 4 carbon atoms, R⁷ in each of the n (R⁷O) groups is independently C₂-C₄ alkylene; R⁸ is hydrocarbylene or substituted hydrocarbylene having from 1 to 6 carbon atoms, n is an average number from 1 to 10, s is 0 or 1, and x and y are independently an integer from 1 to 4.

2. The aqueous pesticidal composition of claim 1 wherein the glyphosate is predominantly in the form of the potassium, monoammonium, diammonium, sodium, monoethanolamine, n-propylamine, isopropylamine, ethylamine, ethylenediamine, hexamethylenediamine or trimethylsulfonium salt thereof.

3. The aqueous pesticidal composition of claim 2 wherein the glyphosate is predominantly in the form of the potassium, monoammonium, diammonium, sodium, monoethanolamine, n-propylamine, ethylamine, ethylenediamine, hexamethylenediamine or trimethylsulfonium salt thereof.

4. The aqueous pesticidal composition of claim 1 wherein said composition is a concentrate.

5. The aqueous pesticidal composition of claim 3 wherein the glyphosate is predominantly in the form of the potassium salt.

6. The aqueous pesticidal composition of claim 3 wherein said composition is a concentrate.

7. The aqueous pesticidal concentrate composition of claim 6 wherein the glyphosate is in solution in an aqueous medium in an amount of in excess of 300 grams acid equivalent per liter of the composition and the composition comprises from 20 to 300 grams per liter of the cationic surfactant composition.

8. The aqueous pesticidal concentrate composition of claim 7 wherein the cationic surfactant composition is in a stable emulsion.

9. The aqueous pesticidal concentrate composition of claim 7 wherein the cationic surfactant composition is in a stable suspension.

10. The aqueous pesticidal concentrate composition of claim 7 wherein the cationic surfactant composition is in a stable dispersion.

11. The aqueous pesticidal concentrate composition of claim 7 wherein the cationic surfactant composition is in a solution.

12. The aqueous pesticidal concentrate composition of claim 7 wherein the cationic surfactant composition is selected such that the composition has a cloud point not lower than 50°C.

13. The aqueous pesticidal concentrate composition of claim 7 having a viscosity of less than 1000 centipoise at 0°C at 45/s shear rate.

14. The aqueous pesticidal concentrate composition of claim 13 having a viscosity of less than 700 centipoise at 0°C at 45/s shear rate.

15. The aqueous pesticidal concentrate composition of claim 14 having a viscosity of less than 400 centipoise at 0°C at 45/s shear rate.

16. The aqueous pesticidal concentrate composition of Claim 15 having a viscosity of less than 225 centipoise at 0°C at 45/s shear rate.

17. The aqueous pesticidal concentrate composition of claim 7 comprising glyphosate predominantly in the form of the potassium salt thereof in solution in said aqueous medium in an amount of 310 to 600 grams of acid equivalent per liter of the composition.

18. The aqueous pesticidal concentrate composition of claim 17 comprising glyphosate predominantly in the form of the potassium salt thereof in solution in said aqueous medium in an amount of 360 to 600 grams of acid equivalent per liter of the composition.

19. The aqueous pesticidal concentrate composition of claim 18 comprising glyphosate predominantly in the form of the potassium salt thereof in solution in said aqueous medium in an amount of 400 to 600 grams of acid equivalent per liter of the composition.

20. The aqueous pesticidal concentrate composition of claim 19 comprising glyphosate predominantly in the form of the potassium salt thereof in solution in said aqueous medium in an amount of 450 to 600 grams of acid equivalent per liter of the composition.

21. The aqueous pesticidal concentrate composition of claim 19 comprising glyphosate predominantly in the form of the potassium salt thereof in solution in said aqueous medium in an amount of 500 to 600 grams of acid equivalent per liter of the composition.

22. The aqueous pesticidal concentrate composition of claim 19 comprising glyphosate predominantly in the form of the potassium salt thereof in solution in said aqueous medium in an amount of 480 to 600 grams of acid equivalent per liter of the composition.

23. The aqueous pesticidal concentrate composition of claim 19 comprising glyphosate predominantly in the form of the potassium salt thereof in solution in said aqueous medium in an amount of 480 to 580 grams of acid equivalent per liter of the composition.

24. The aqueous pesticidal concentrate composition of claim 19 comprising glyphosate predominantly in the form of the potassium salt thereof in solution in said aqueous medium in an amount of 540 to 600 grams of acid equivalent per liter of the composition.

25. The aqueous pesticidal concentrate composition of claim 7 wherein the total amount of cationic surfactant composition is from 60 to 240 grams per liter of the pesticidal concentrate composition.

26. The aqueous pesticidal concentrate composition of claim 25 wherein the total amount of cationic surfactant composition is from 60 to 200 grams per liter of the pesticidal concentrate composition.

27. The aqueous pesticidal concentrate composition of claim 7 wherein the composition has a density of at least 1.210 grams/liter.

28. The aqueous pesticidal composition of claim 1 wherein the cationic surfactant composition comprises is an etheramine having the formula: 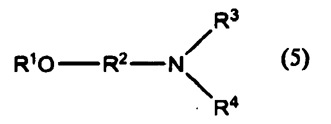 wherein R¹ is hydrogen or a hydrocarbyl or substituted hydrocarbyl having from 1 to 30 carbon atoms; R² is hydrocarbylene or substituted hydrocarbylene having from 2 to 30 carbon atoms; R³ and R⁴ are independently hydrogen, hydrocarbyl or substituted hydrocarbyl having from 1 to 30 carbon atoms, or - (R⁵O)ₓR⁶, R⁵ in each of the x (R⁵O) groups is independently C₂-C₄ alkylene, R⁶ is hydrogen, or a linear or branched alkyl group having from 1 to 4 carbon atoms, x is an average number from 1 to 50; and
a diamine having the formula: 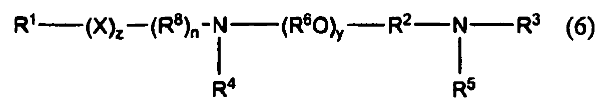 wherein R¹ and R³ are independently a linear or branched alkyl or linear or branched alkenyl group having from 8 to 22 carbon atoms, R² is a linear or branched alkylene group having from 2 to 25 carbon atoms, and R⁴ and R⁵ are each independently hydrogen, a linear or branched alkyl or alkenyl group having from 1 to 6 carbon atoms or -(R⁶O)xR⁷, R⁶ in each of the x (R⁶O) groups is independently C₂-C₄ alkylene, R⁷ is hydrogen or a linear or branched alkyl group having from 1 to 4 carbon atoms, x is an average number from 1 to 30, and n, y and z are 0.

29. A herbicidal method comprising diluting in a suitable volume of water a herbicidally effective amount of the aqueous pesticidal concentrate composition of claim 7 to form an application mixture, and applying the application mixture to foliage of a plant.

30. A herbicidal method comprising mixing the cationic surfactant composition of claim 28 with a herbicide to form a herbicidal composition, diluting in a suitable volume of water a herbicidally effective amount of the herbicidal composition to form an application mixture, and applying the application mixture to foliage of a plant or plants.

31. The aqueous pesticidal composition of claim 1 wherein the weight ratio of the first surfactant to the second surfactant is between 20:1 and 1:10.

32. The aqueous pesticidal composition of claim 31 wherein the weight ratio of the first surfactant to the second surfactant is between 10:1 1 and 1:4.

33. The aqueous pesticidal composition of claim 32 wherein the weight ratio of the first surfactant to the second surfactant is between 8:1 and 1:3.

34. The aqueous pesticidal composition of claim 28 wherein the weight ratio of the etheramine to the diamine is between 20:1 and 1:10.

35. The aqueous pesticidal composition of claim 34 wherein the weight ratio of the etheramine to the diamine is between 10:1 and 1:4.

36. The aqueous pesticidal composition of claim 35 wherein the weight ratio of the etheramine to the diamine is between 8:1 and 1:3.

## Patentansprüche

1. Wässrige Pestizidzusammensetzung, umfassend:
(a) Glyphosat oder ein Salz oder einen Ester hiervon; und
(b) eine landwirtschaftlich nützliche Menge einer kationischen Tensidzusammensetzung, umfassend ein erstes Tensid, gewählt aus der Gruppe bestehend aus:
(a) dialkoxylierten Aminen oder quaternären Ammoniumsalzen der Formeln: 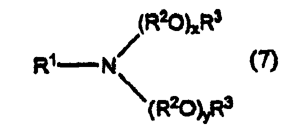 oder 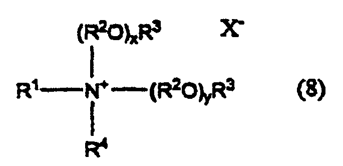 worin R¹ und R⁴ unabhängig voneinander Wasserstoff oder Hydrocarbyl oder substituiertes Hydrocarbyl mit 1 bis 30 Kohlenstoffatomen, -R⁵SR⁶ oder -(R²O)_{z}R³ bedeuten, R² in allen x (R²O)-, y (R²O)- und z (R²O)-Cruppen unabhängig ein C₂-C₄-Alkylen ist, R³ Wasserstoff oder eine lineare oder verzweigte Alkylgruppe mit 1 bis 22 Kohlenstoffatomen ist, R⁵ eine lineare oder verzweigte Alkylgruppe mit 6 bis 30 Kohlenstoffatomen ist, R⁶ eine lineare oder verzweigte Alkylgruppe mit 4 bis 15 Kohlenstoffatomen ist, x, y und z unabhängig voneinander eine durchschnittliche Zahl von 1 bis 40 sind, und X- ein landwirtschaftlich annehmbares Anion ist;
(b) aminierten alkoxylierten Alkoholen der Formeln: 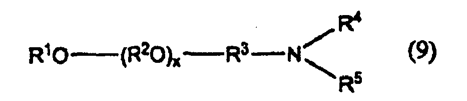 oder 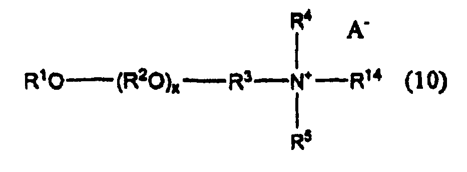 worin R¹ Wasserstoff oder Hydrocarbyl oder substituiertes Hydrocarbyl mit 1 bis 30 Kohlenstoffatomen bedeutet, R² in allen x (R²O)- und y (R²O)-Gruppen unabhängig ein C₂-C₄-Alkylen ist, R³ und R⁶ jeweils unabhängig Hydrocarbylen oder substituiertes Hydrocarbylen mit 1 bis 6 Kohlenstoffatomen bedeuten, R⁴ Wasserstoff, Hydrocarbyl oder substituiertes Hydrocarbyl mit 1 bis 30 Kohlenstoffatomen, Hydroxy-substituiertes Hydrocarbyl, -(R⁶)ₙ-(R²O)_{y}R⁷, -C(=NR¹¹)-NR¹²R¹³, -C(=O)NR¹²R¹³ oder -C(=S)NR¹²R¹³ bedeutet, R⁵ -(R⁶)ₙ-(R₂O)_{y}R⁷ ist, R⁷ Wasserstoff oder eine lineare oder verzweigte Alkylgruppe mit 1 bis 4 Kohlenstoffatomen ist, R¹¹, R¹² und R¹³ Wasserstoff, Hydrocarbyl oder substituiertes Hydrocarbyl bedeuten, R¹⁴ Wasserstoff, Hydrocarbyl oder substituiertes Hydrocarbyl mit 1 bis 30 Kohlenstoffatomen, Hydroxy-substituiertes Hydrocarbyl, -(R⁶)ₙ-(R²O)_{y}R⁷, -C(=NR¹¹)NR¹²R¹³, -C(=C)NR¹²R¹³ oder -C(=S)NR¹²R¹³ bedeutet, n 0 oder 1 ist, x und y unabhängig voneinander eine durchschnittliche Zahl von 1 bis 60 sind, und A' ein landwirtschaftlich annehmbares Anion ist;
(c) Etheraminen oder quaternären Etherammoniumsalzen der Formeln: 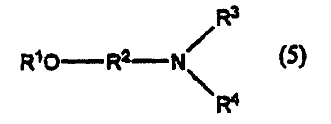 oder 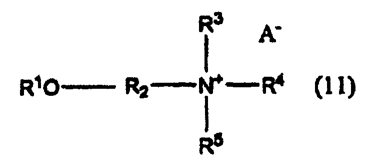 worin R¹ Wasserstoff oder ein Hydrocarbyl oder substituiertes Hydrocarbyl mit 1 bis 30 Kohlenstoffatomen ist, R² Hydrocarbylen oder substituiertes Hydrocarbylen mit 2 bis 30 Kohlenstoffatomen ist, R³, R⁴ und R⁵ unabhängig voneinander Wasserstoff, Hydrocarbyl oder substituiertes Hydrocarbyl mit 1 bis 30 Kohlenstoffatomen oder -(R⁶O)ₓR⁷ bedeuten, R⁶ in allen x (R⁶O)-Gruppen unabhängig ein C₂-C₄-Alkylen ist, R⁷ Wasserstoff oder eine lineare oder verzweigte Alkylgruppe mit 1 bis 4 Kohlenstoffatomen ist, x eine durchschnittliche Zahl von 1 bis 50 ist, und A⁻ ein landwirtschaftlich annehmbares Anion ist;
(d) monoalkoxylierten Aminen oder quaternären Ammoniumsalzen der Formeln: 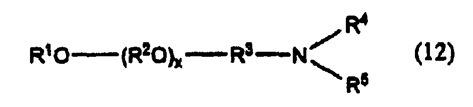 oder 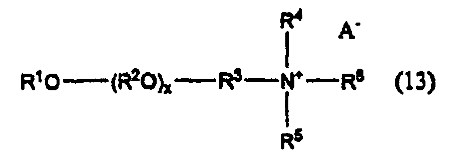 worin R¹ Wasserstoff oder Hydrocarbyl oder substituiertes Hydrocarbyl mit 1 bis 30 Kohlenstoffatomen ist, R² in allen x (R²O)- und y (R²O)-Gruppen unabhängig ein C₂-C₄-Alkylen ist, R³ Hydrocarbylen oder substituiertes Hydrocarbylen mit 2 bis 30 Kohlenstoffatomen ist, R⁴, R⁵ und R⁸ jeweils unabhängig Wasserstoff, Hydrocarbyl oder substituiertes Hydrocarbyl mit 1 bis 30 Kohlenstoffatomen oder -(R⁶)ₙ-(R²O)_{y}R⁷ bedeuten, oder R⁴ und R⁵ zusammen mit dem Stickstoffatom, woran sie gebunden sind, einen cyclischen oder heterocyclischen Ring bilden, R⁶ Hydrocarbylen oder substituiertes Hydrocarbylen mit 1 bis 30 Kohlenstoffatomen ist, R⁷ Wasserstoff oder eine lineare oder verzweigte Alkylgruppe mit 1 bis 4 Kohlenstoffatomen ist, n 0 oder 1 ist, x und y unabhängig voneinander eine durchschnittliche Zahl von 1 bis 60 sind, und A⁻ ein landwirtschaftlich annehmbares Anion ist;
(e) alkoxylierten Poly(hydroxyalkyl)aminen der Formel: 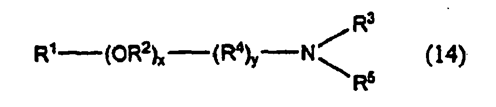 worin R¹ und R³ unabhängig voneinander Wasserstoff, Hydrocarbyl oder substituiertes Hydrocarbyl mit 1 bis 30 Kohlenstoffatomen bedeuten, R² in allen x (R²O)-Gruppen unabhängig ein C₂-C₄-Alkylen ist, R⁴ Hydrocarbylen oder substituiertes Hydrocarbylen mit 1 bis 30 Kohlenstoffatomen ist, R⁵ Hydroxyalkyl, Polyhydroxyalkyl oder Poly(hydroxyalkyl)alkyl ist, x eine durchschnittliche Zahl von 0 bis 30 ist, und y 0 oder 1 ist;
(f) monoalkoxylierten Aminen der Formel: 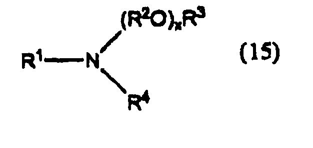 worin R¹ und R⁴ unabhängig voneinander Hydrocarbyl- oder substituierte Hydrocarbylgruppen mit 1 bis 30 Kohlenstoffatomen oder -R⁵SR⁶ bedeuten, R² in allen x (R²O)-Gruppen unabhängig ein C₂-C₄-Alkylen ist, R³ Wasserstoff oder eine lineare oder verzweigte Alkylgruppe mit 1 bis 4 Kohlenstoffatomen ist, R⁵ eine lineare oder verzweigte Alkylgruppe mit 6 bis 30 Kohlenstoffatomen ist, R⁶ eine Hydrocarbyl- oder substituierte Hydrocarbylgruppe mit 4 bis 15 Kohlenstoffatomen ist, und x eine durchschnittliche Zahl von 1 bis 60 ist;
(g) monoalkoxylierten quaternären Ammoniumsalzen der Formel: 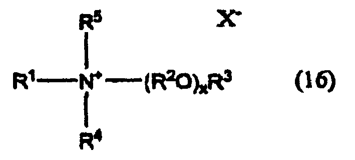 worin R¹ und R⁵ unabhängig voneinander Wasserstoff oder Hydrocarbyl oder substituiertes Hydrocarbyl mit 1 bis 30 Kohlenstoffatomen bedeuten, R⁴ Hydrocarbyl oder substituiertes Hydrocarbyl mit 1 bis 30 Kohlenstoffatomen ist, R² in allen x (R²O)-Gruppen unabhängig ein C₂-C₄-Alkylen ist, R³ Wasserstoff oder eine lineare oder verzweigte Alkylgruppe mit 1 bis 30 Kohlenstoffatomen ist, x eine durchschnittliche Zahl von 1 bis 60 ist, und X⁻ ein landwirtschaftlich annehmbares Anion ist; und
(h) Aminen der Formeln: 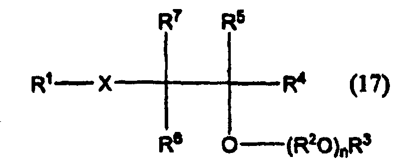 oder 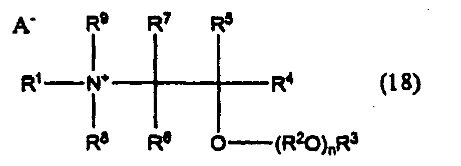 oder 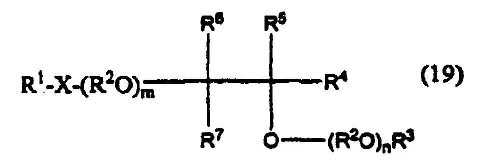 oder 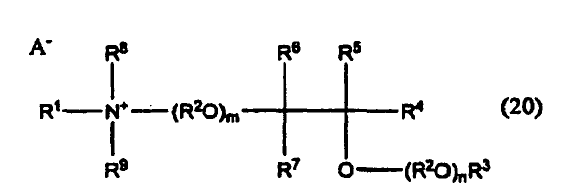 worin R¹ und R⁹ unabhängig voneinander Hydrocarbyl oder substituiertes Hydrocarbyl mit 1 bis 30 Kohlenstoffatomen oder -(R²O)ₚR¹³ bedeuten, R² in allen m (R²O)-, n (R²O)-, p (R²O)- und q (R²O)-Gruppen unabhängig ein C₂-C₄-Alkylen ist, R³, R⁸, R¹³ und R¹⁵ unabhängig voneinander Wasserstoff oder ein Hydrocarbyl oder substituiertes Hydrocarbyl mit 1 bis 30 Kohlenstoffatomen bedeuten, R⁴ -(CH₂)_{y}OR¹³ oder -(CH₂)_{y}O(R²O)_{q}R³ bedeutet, R⁵, R⁶ und R⁷ unabhängig voneinander Wasserstoff, Hydrocarbyl oder substituiertes Hydrocarbyl mit 1 bis 30 Kohlenstoffatomen oder R⁴ bedeuten, R¹⁴ Wasserstoff, Hydrocarbyl oder substituiertes Hydrocarbyl mit 1 bis 30 Kohlenstoffatomen oder -(CH₂)_{z}O(R²O)ₚR³ bedeutet, m, n, p und q unabhängig voneinander eine durchschnittliche Zahl von 1 bis 50 sind, X -N(R¹⁴)-, -N(R¹⁵)C(O)- oder -C(O)N(R¹⁵) bedeutet, A⁻ ein landwirtschaftlich annehmbares Anion ist, und y und z unabhängig voneinander eine ganze Zahl von 0 bis 30 sind; und
ein zweites Tensid, gewählt aus der Gruppe bestehend aus:
(a) alkoxylierten Diaminen der Formel: 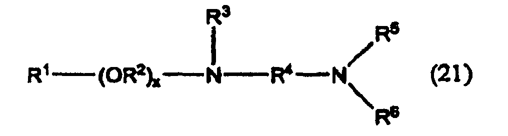 worin R¹ Hydrocarbyl oder substituiertes Hydrocarbyl mit 8 bis 30 Kohlenstoffatomen ist, R² in allen x (R²O)-Gruppen und y (R²O)-Gruppen unabhängig ein C₂-C₄-Alkylen ist, R³, R⁵ und R⁶ unabhängig voneinander Wasserstoff, Hydrocarbyl oder substituiertes Hydrocarbyl mit 1 bis 30 Kohlenstoffatomen oder -(R²O)_{y}R⁷ bedeuten, R⁴ Hydrocarbylen oder substituiertes Hydrocarbylen mit 2 bis 6 Kohlenstoffatomen, -C(=NR¹¹)NR¹²R¹³-, -C(=O)NR¹²R¹³-, -C(=S)NR¹²R¹³-, -C(=NR¹²)-, -C(S)- oder -C(O)- bedeutet, R⁷ Wasserstoff oder eine lineare oder verzweigte Alkylgruppe mit 1 bis 4 Kohlenstoffatomen ist, R¹¹, R¹² und R¹³ Wasserstoff, Hydrocarbyl oder substituiertes Hydrocarbyl mit 1 bis 30 Kohlenstoffatomen bedeuten, x 0 oder eine durchschnittliche Zahl von 1 bis 30 ist, und y eine durchschnittliche Zahl von 1 bis 50 ist;
(b) Diaminen der Formel: 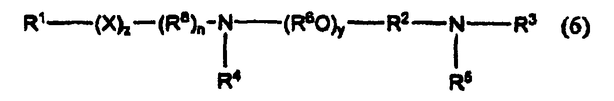 worin R¹ und R³ unabhängig voneinander eine lineare oder verzweigte Alkyl- oder lineare oder verzweigte Alkenylgruppe mit 8 bis 22 Kohlenstoffatomen bedeuten, R² eine lineare oder verzweigte Alkenylgruppe mit 2 bis 25 Kohlenstoffatomen ist, und R⁴ und R⁵ jeweils unabhängig Wasserstoff, eine lineare oder verzweigte Alkyl- oder Alkenylgruppe mit 1 bis 6 Kohlenstoffatomen oder -(R⁶O)ₓR⁷ bedeuten, R⁶ in allen x (R⁶O)-Gruppen unabhängig ein C₂-C₄-Alkylen ist, R⁷ Wasserstoff oder eine lineare oder verzweigte Alkylgruppe mit 1 bis 4 Kohlenstoffatomen ist, x eine durchschnittliche Zahl von 1 bis 30 ist, und n, y und z 0 sind;
(c) Diaminen der Formel: 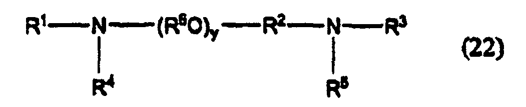 worin R¹, R³, R⁴ und R⁵ unabhängig voneinander Wasserstoff, Hydrocarbyl oder substituiertes Hydrocarbyl mit 1 bis 30 Kohlenstoffatomen oder -(R⁶O)ₓR⁷ bedeuten, R² Hydrocarbylen oder substituiertes Hydrocarbylen mit 2 bis 30 Kohlenstoffatomen ist, R⁶ in allen x (R⁶O)- und y (R⁶O)-Gruppen unabhängig ein C₂-C₄-Alkylen ist, R⁷ Wasserstoff oder eine lineare oder verzweigte Alkylgruppe mit 1 bis 30 Kohlenstoffatomen ist, x eine durchschnittliche Zahl von 1 bis 30 ist, und y eine durchschnittliche Zahl von 3 bis 60 ist;
(d) Diaminen der Formel: 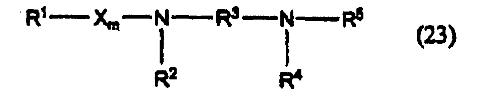 worin R¹, R² und R⁵ unabhängig voneinander Wasserstoff oder Hydrocarbyl oder substituiertes Hydrocarbyl mit 1 bis 30 Kohlenstoffatomen oder -R⁸(OR⁹)ₙOR¹⁰ bedeuten, R³ Hydrocarbylen oder substituiertes Hydrocarbylen mit 2 bis 18 Kohlenstoffatomen ist, R⁸ und R⁹ jeweils Hydrocarbylen oder substituiertes Hydrocarbylen mit 2 bis 4 Kohlenstoffatomen bedeuten, R⁴ und R¹⁰ unabhängig voneinander Wasserstoff oder Hydrocarbyl oder substituiertes Hydrocarbyl mit 1 bis 30 Kohlenstoffatomen bedeuten, m 0 oder 1 ist, n eine durchschnittliche Zahl von 0 bis 40 ist, und X -C(O)- oder SO₂- bedeutet;
(e) Diaminen der Formel: 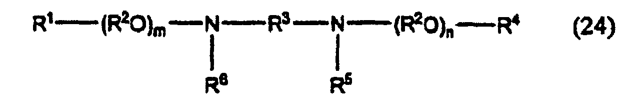 worin R¹, R⁴, R⁵ und R⁶ unabhängig voneinander Wasserstoff oder Hydrocarbyl oder substituiertes Hydrocarbyl mit 1 bis 30 Kohlenstoffatomen bedeuten, R² in allen m (R²O)- und n (R²O)-Gruppen unabhängig ein C₂-C₄-Alkylen ist, R³ Hydrocarbylen oder substituiertes Hydrocarbylen mit 2 bis 6 Kohlenstoffatomen oder -(R²O)ₚR⁷- bedeutet, m und n jeweils eine durchschnittliche Zahl von 0 bis 50 sind, und p eine durchschnittliche Zahl von 0 bis 60 ist;
(f) Dipoly(hydroxyalkyl)aminen der Formel: 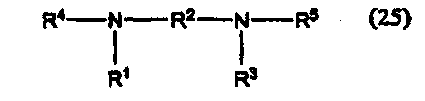 worin R¹ und R³ unabhängig voneinander Wasserstoff oder Hydrocarbyl oder substituiertes Hydrocarbyl mit 1 bis 22 Kohlenstoffatomen bedeuten, R² Hydrocarbylen oder substituiertes Hydrocarbylen mit 2 bis 18 Kohlenstoffatomen ist, R⁴ und R⁵ unabhängig voneinander Hydroxyalkyl, Polyhydroxyalkyl oder Poly-(hydroxyalkyl)alkyl bedeuten; und
(g) alkoxylierten Triaminen der Formel: 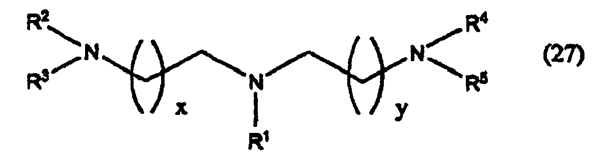 worin R¹ Hydrocarbyl oder substituiertes Hydrocarbyl mit 1 bis 30 Kohlenstoffatomen ist, R², R³, R⁴ und R⁵ unabhängig voneinander Wasserstoff, Hydrocarbyl oder substituiertes Hydrocarbyl mit 1 bis 30 Kohlenstoffatomen oder -(R⁸)ₛ(R⁷O)ₙR⁶ bedeuten, R⁶ Wasserstoff oder eine lineare oder verzweigte Alkylgruppe mit 1 bis 4 Kohlenstoffatomen ist, R⁷ in allen n (R⁷O)-Gruppen unabhängig ein C₂-C₄-Alkylen ist, R⁸ Hydrocarbylen oder substituiertes Hydrocarbylen mit 1 bis 6 Kohlenstoffatomen ist, n eine durchschnittliche Zahl von 1 bis 10 ist, s 0 oder 1 ist, und x und y unabhängig voneinander eine ganze Zahl von 1 bis 4 sind.

2. Wässrige Pestizidzusammensetzung nach Anspruch 1, wobei das Glyphosat vorwiegend in Form des Kalium-, Monoammonium-, Diammonium-, Natrium-, Monoethanolamin-, n-Propylamin-, Isopropylamin-, Ethylamin-, Ethylendiamin-, Hexamethylendiamin- oder Trimethylsulfoniumsalzes hiervon vorliegt.

3. Wässrige Pestizidzusammensetzung nach Anspruch 2, wobei das Glyphosat vorwiegend in Form des Kalium-, Monoammonium-, Diammonium-, Natrium-, Monoethanolamin-, n-Propylamin-, Ethylamin-, Ethylendiamin-, Hexamethylendiamin- oder Trimethylsulfoniumsalzes hiervon vorliegt.

4. Wässrige Pestizidzusammensetzung nach Anspruch 1, wobei die Zusammensetzung ein Konzentrat ist.

5. Wässrige Pestizidzusammensetzung nach Anspruch 3, wobei das Glyphosat vorwiegend in Form des Kaliumsalzes vorliegt.

6. Wässrige Pestizidzusammensetzung nach Anspruch 3, wobei die Zusammensetzung ein Konzentrat ist.

7. Wässrige Pestizidkonzentratzusammensetzung nach Anspruch 6, wobei das Glyphosat in Lösung in einem wässrigen Medium in einer Menge von mehr als 300 Gramm Säureäquivalent pro Liter der Zusammensetzung vorliegt, und wobei die Zusammensetzung 20 bis 300 Gramm pro Liter der kationischen Tensidzusammensetzung umfasst.

8. Wässrige Pestizidkonzentratzusammensetzung nach Anspruch 7, wobei die kationische Tensidzusammensetzung in Form einer stabilen Emulsion vorliegt.

9. Wässrige Pestizidkonzentratzusammensetzung nach Anspruch 7, wobei die kationische Tensidzusammensetzung in Form einer stabilen Suspension vorliegt.

10. Wässrige Pestizidkonzentratzusammensetzung nach Anspruch 7, wobei die kationische Tensidzusammensetzung in Form einer stabilen Dispersion vorliegt.

11. Wässrige Pestizidkonzentratzusammensetzung nach Anspruch 7, wobei die kationische Tensidzusammensetzung in Form einer Lösung vorliegt.

12. Wässrige Pestizidkonzentratzusammensetzung nach Anspruch 7, wobei die kationische Tensidzusammensetzung derart gewählt ist, dass die Zusammensetzung einen Trübungspunkt von nicht niedriger als 50°C aufweist.

13. Wässrige Pestizidkonzentratzusammensetzung nach Anspruch 7, welche eine Viskosität von weniger als 1000 Centipoise bei 0°C und 45/s Scherrate aufweist.

14. Wässrige Pestizidkonzentratzusammensetzung nach Anspruch 13, welche eine Viskosität von weniger als 700 Centipoise bei 0°C und 45/s Scherrate aufweist.

15. Wässrige Pestizidkonzentratzusammensetzung nach Anspruch 14, welche eine Viskosität von weniger als 400 Centipoise bei 0°C und 45/s Scherrate aufweist.

16. Wässrige Pestizidkonzentratzusammensetzung nach Anspruch 15, welche eine Viskosität von weniger als 225 Centipoise bei 0°C und 45/s Scherrate aufweist.

17. Wässrige Pestizidkonzentratzusammensetzung nach Anspruch 7, umfassend Glyphosat, welches vorwiegend in Form des Kaliumsalzes hiervon in Lösung in dem wässrigen Medium in einer Menge von 310 bis 600 Gramm Säureäquivalent pro Liter der Zusammensetzung vorliegt.

18. Wässrige Pestizidkonzentratzusammensetzung nach Anspruch 17, umfassend Glyphosat, welches vorwiegend in Form des Kaliumsalzes hiervon in Lösung in dem wässrigen Medium in einer Menge von 360 bis 600 Gramm Säureäquivalent pro Liter der Zusammensetzung vorliegt.

19. Wässrige Pestizidkonzentratzusammensetzung nach Anspruch 18, umfassend Glyphosat, welches vorwiegend in Form des Kaliumsalzes hiervon in Lösung in dem wässrigen Medium in einer Menge von 400 bis 600 Gramm Säureäquivalent pro Liter der Zusammensetzung vorliegt.

20. Wässrige Pestizidkonzentratzusammensetzung nach Anspruch 19, umfassend Glyphosat, welches vorwiegend in Form des Kaliumsalzes hiervon in Lösung in dem wässrigen Medium in einer Menge von 450 bis 600 Gramm Säureäquivalent pro Liter der Zusammensetzung vorliegt.

21. Wässrige Pestizidkonzentratzusammensetzung nach Anspruch 19, umfassend Glyphosat, welches vorwiegend in Form des Kaliumsalzes hiervon in Lösung in dem wässrigen Medium in einer Menge von 500 bis 600 Gramm Säureäquivalent pro Liter der Zusammensetzung vorliegt.

22. Wässrige Pestizidkonzentratzusammensetzung nach Anspruch 19, umfassend Glyphosat, welches vorwiegend in Form des Kaliumsalzes hiervon in Lösung in dem wässrigen Medium in einer Menge von 480 bis 600 Gramm Säureäquivalent pro Liter der Zusammensetzung vorliegt.

23. Wässrige Pestizidkonzentratzusammensetzung nach Anspruch 19, umfassend Glyphosat, welches vorwiegend in Form des Kaliumsalzes hiervon in Lösung in dem wässrigen Medium in einer Menge von 480 bis 580 Gramm Säureäquivalent pro Liter der Zusammensetzung vorliegt.

24. Wässrige Pestizidkonzentratzusammensetzung nach Anspruch 19, umfassend Glyphosat, welches vorwiegend in Form des Kaliumsalzes hiervon in Lösung in dem wässrigen Medium in einer Menge von 540 bis 600 Gramm Säureäquivalent pro Liter der Zusammensetzung vorliegt.

25. Wässrige Pestizidkonzentratzusammensetzung nach Anspruch 7, wobei die Gesamtmenge der kationischen Tensidzusammensetzung 60 bis 240 Gramm pro Liter der Pestizidkonzentratzusammensetzung beträgt.

26. Wässrige Pestizidkonzentratzusammensetzung nach Anspruch 25, wobei die Gesamtmenge der kationischen Tensidzusammensetzung 60 bis 200 Gramm pro Liter der Pestizidkonzentratzusammensetzung beträgt.

27. Wässrige Pestizidkonzentratzusammensetzung nach Anspruch 7, wobei die Zusammensetzung eine Dichte von mindestens 1,210 Gramm/Liter aufweist.

28. Wässrige Pestizidzusammensetzung nach Anspruch 1, wobei die kationische Tensidzusammensetzung umfasst: ein Etheramin der Formel: 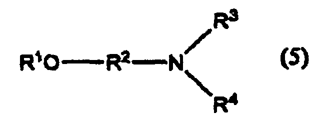 worin R¹ Wasserstoff oder ein Hydrocarbyl oder substituiertes Hydrocarbyl mit 1 bis 30 Kohlenstoffatomen ist, R² Hydrocarbylen oder substituiertes Hydrocarbylen mit 2 bis 30 Kohlenstoffatomen ist, R³ und R⁴ unabhängig voneinander Wasserstoff, Hydrocarbyl oder substituiertes Hydrocarbyl mit 1 bis 30 Kohlenstoffatomen oder -(R⁵O)ₓR⁶ bedeuten, R⁵ in allen x (R⁵O)-Gruppen unabhängig ein C₂-C₄-Alkylen ist, R⁶ Wasserstoff oder eine lineare oder verzweigte Alkylgruppe mit 1 bis 4 Kohlenstoffatomen ist, und x eine durchschnittliche Zahl von 1 bis 50 ist; und
ein Diamin der Formel: 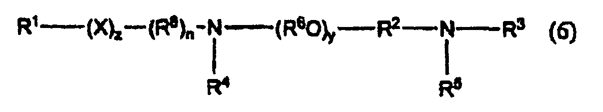 worin R¹ und R³ unabhängig voneinander eine lineare oder verzweigte Alkyl- oder lineare oder verzweigte Alkenylgruppe mit 8 bis 22 Kohlenstoffatomen bedeuten, R² eine lineare oder verzweigte Alkylengruppe mit 2 bis 25 Kohlenstoffatomen ist, und R⁴ und R⁵ jeweils unabhängig Wasserstoff, eine lineare oder verzweigte Alkyl- oder Alkenylgruppe mit 1 bis 6 Kohlenstoffatomen oder -(R⁶O)ₓR⁷ bedeuten, R⁶ in allen x (R⁶O)-Gruppen unabhängig ein C₂-C₄-Alkylen ist, R⁷ Wasserstoff oder eine lineare oder verzweigte Alkylgruppe mit 1 bis 4 Kohlenstoffatomen ist, x eine durchschnittliche Zahl von 1 bis 30 ist, und n, y und z 0 sind.

29. Herbizides Verfahren, umfassend das Verdünnen einer herbizid wirksamen Menge der wässrigen Pestizidkonzentratzusammensetzung nach Anspruch 7 in einem geeigneten Volumen an Wasser, um eine Anwendungsmischung zu bilden, und das Aufbringen der Anwendungsmischung auf die Blätter einer Pflanze.

30. Herbizides Verfahren, umfassend das Vermischen der kationischen Tensidzusammensetzung nach Anspruch 28 mit einem Herbizid, um eine herbizide Zusammensetzung zu bilden, das Verdünnen einer herbizid wirksamen Menge der herbiziden Zusammensetzung in einem geeigneten Volumen an Wasser, um eine Anwendungsmischung zu bilden, und das Aufbringen der Anwendungsmischung auf die Blätter einer Pflanze oder mehrerer Pflanzen.

31. Wässrige Pestizidzusammensetzung nach Anspruch 1, wobei das Gewichtsverhältnis des ersten Tensids zu dem zweiten Tensid zwischen 20:1 und 1:10 liegt.

32. Wässrige Pestizidzusammensetzung nach Anspruch 31, wobei das Gewichtsverhältnis des ersten Tensids zu dem zweiten Tensid zwischen 10:1 1 und 1:4 liegt.

33. Wässrige Pestizidzusammensetzung nach Anspruch 32, wobei das Gewichtsverhältnis des ersten Tensids zu dem zweiten Tensid zwischen 8:1 und 1:3 liegt.

34. Wässrige Pestizidzusammensetzung nach Anspruch 28, wobei das Gewichtsverhältnis des Etheramins zu dem Diamin zwischen 20:1 und 1:10 liegt.

35. Wässrige Pestizidzusammensetzung nach Anspruch 34, wobei das Gewichtsverhältnis des Etheramins zu dem Diamin zwischen 10:1 1 und 1:4 liegt.

36. Wässrige Pestizidzusammensetzung nach Anspruch 35, wobei das Gewichtsverhältnis des Etheramins zu dem Diamin zwischen 8:1 und 1:3 liegt.

## Revendications

1. Composition pesticide aqueuse comprenant
(a) du glyphosate ou un sel ou un ester de celui-ci ; et
(b) une quantité utile du point de vue agricole d'une composition d'agents tensioactifs cationiques comprenant un premier agent tensioactif choisi parmi le groupe consistant en :
(a) des amines dialcoxylées ou des sels ammonium quaternaires ayant les formules : 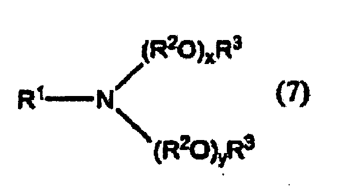 ou 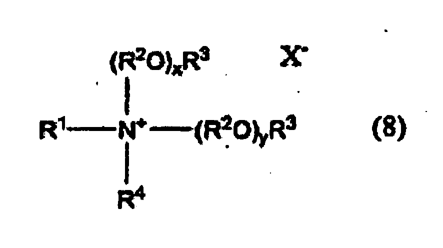 dans lesquelles R¹ et R⁴ sont indépendamment un hydrogène ou un hydrocarbyle ou un hydrocarbyle substitué ayant de 1 à 30 atomes de carbone, -R⁵SR⁶, ou - (R²O)_{z}R³, R² dans chacun des x groupes (R²O) y groupes (R²O) et z groupes (R²O) est indépendamment un alkylène en C₂-C₄, R³ est un hydrogène, ou un groupe alkyle linéaire ou ramifié ayant de 1 à 22 atomes de carbone, R⁵ est un groupe alkyle linéaire ou ramifié ayant de 6 à 30 atomes de carbone, R⁶ est un groupe alkyle linéaire ou ramifié ayant de 4 à 15 atomes de carbone, x, y et z sont indépendamment un nombre moyen de 1 à 40, et X⁻ est un anion acceptable du point de vue agricole ;
(b) des alcools alcoxylés aminés ayant les formules : 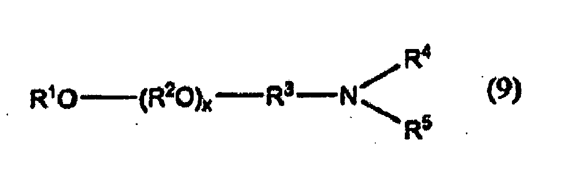 ou 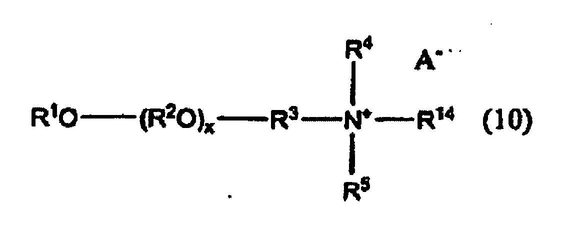 dans lesquelles R¹ est un hydrogène ou un hydrocarbyle ou un hydrocarbyle substitué ayant de 1 à 30 atomes de carbone ; R² dans chacun des x groupes (R²O) et y groupes (R²O) est indépendamment un alkylène en C₂-C₄ ; R³ et R⁶ sont chacun indépendamment un hydrocarbylène ou un hydrocarbylène substitué ayant de 1 à 6 atomes de carbone ; R⁴ est un hydrogène, un hydrocarbyle ou un hydrocarbyle substitué ayant de 1 à 30 atomes de carbone, un hydrocarbyle substitué avec un hydroxy, un groupe - (R⁶)ₙ-(R²O)_{y}R⁷, -C(=NR¹¹)NR¹²R¹³, -C(=O)NR¹²R¹³, ou -C(=S)NR¹²R¹³; R⁵ est -(R⁶)ₙ-(R²O)_{y}R⁷; R⁷ est un hydrogène ou un groupe alkyle linéaire ou ramifié ayant de 1 à 4 atomes de carbone ; R¹¹, R¹² et R¹³ sont un hydrogène, un hydrocarbyle ou un hydrocarbyle substitué, R¹⁴ est un hydrogène, un hydrocarbyle ou un hydrocarbyle substitué ayant de 1 à 30 atomes de carbone, un hydrocarbyle substitué avec un hydroxy, un groupe -(R⁶)ₙ-(R²O)_{y}R⁷, -C(=NR¹¹)NR¹²R¹³, -C(=O)NR¹²R¹³, ou -C(=S)NR¹²R¹³, n est 0 ou 1, x et y sont indépendamment un nombre moyen de 1 à 60, et A⁻ est un anion acceptable du point de vue agricole ;
(c) des étheramines ou des sels ammonium quaternaires d'éther ayant les formules : 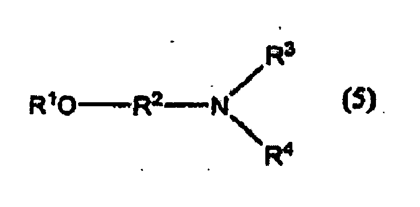 ou 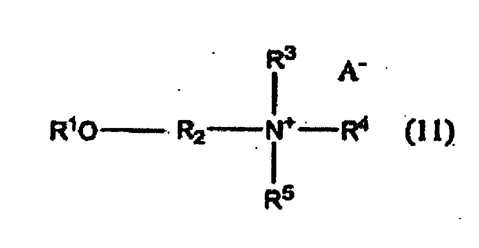 dans lesquelles R¹ est un hydrogène ou un hydrocarbyle ou un hydrocarbyle substitué ayant de 1 à 30 atomes de carbone ; R² est un hydrocarbylène ou un hydrocarbylène substitué ayant de 2 à 30 atomes de carbone ; R³, R⁴ et R⁵ sont indépendamment un hydrogène, un hydrocarbyle ou un hydrocarbyle substitué ayant de 1 à 30 atomes de carbone, ou un groupe -(R⁶O)ₓR⁷, R⁶ dans chacun des x groupes (R⁶O) est indépendamment un alkylène en C₂-C₄, R⁷ est un hydrogène, ou un groupe alkyle linéaire ou ramifié ayant de 1 à 4 atomes de carbone, x est un nombre moyen de 1 à 50, et A⁻ est un anion acceptable du point de vue agricole ;
(d) des amines monoalcoxylées ou des sels ammonium quaternaires ayant les formules : 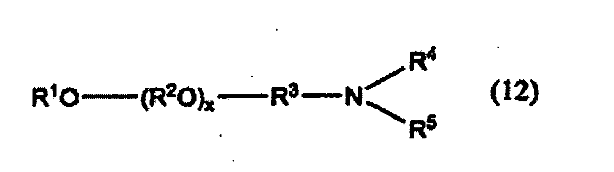 ou 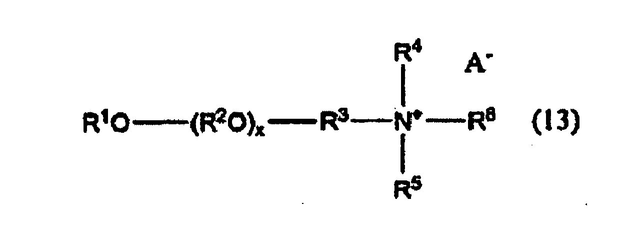 dans lesquelles R¹ est un hydrogène ou un hydrocarbyle ou un hydrocarbyle substitué ayant de 1 à 30 atomes de carbone ; R² dans chacun des x groupes (R²O) et y groupes (R²O) est indépendamment un alkylène en C₂-C₄ ; R³ est un hydrocarbylène ou un hydrocarbylène substitué ayant de 2 à 30 atomes de carbone ; R⁴, R⁵ et R⁸ sont indépendamment un hydrogène, un hydrocarbyle ou un hydrocarbyle substitué ayant de 1 à 30 atomes de carbone, ou un groupe -(R⁶)ₙ(R²O)_{y}R⁷, ou R⁴ et R⁵, avec l'atome d'azote auquel ils sont attachés, forment un cycle ou un hétérocycle ; R⁶ est un hydrocarbylène ou un hydrocarbylène substitué ayant de 1 à 30 atomes de carbone ; R⁷ est un hydrogène ou un groupe alkyle linéaire ou ramifié ayant 1 à 4 atomes de carbone, n est 0 ou 1, x et y sont indépendamment un nombre moyen de 1 à 60, et A⁻ est un anion acceptable du point de vue agricole ;
(e) des poly(hydroxyalkyl)amines alcoxylées ayant la formule : 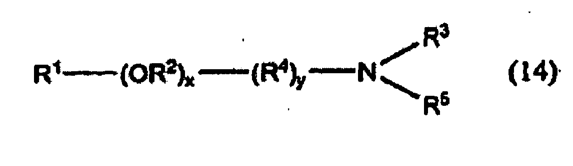 dans laquelle R¹ et R³ sont indépendamment un hydrogène, un hydrocarbyle ou un hydrocarbyle substitué ayant de 1 à 30 atomes de carbone, R² dans chacun des x groupes (R²O) est indépendamment un alkylène en C₂-C₄ ; R⁴ est un hydrocarbylène ou un hydrocarbylène substitué ayant de 1 à 30 atomes de carbone, R⁵ est un hydroxyalkyle, un polyhydroxyalkyle, ou un poly(hydroxyalkyl)alkyle ; x est un nombre moyen de 0 à 30, et y est 0 ou 1 ;
(f) des amines monoalcoxylées ayant la formule : 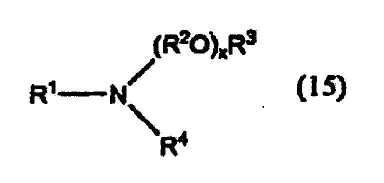 dans laquelle R¹ et R⁴ sont indépendamment un hydrocarbyle ou un hydrocarbyle substitué ayant de 1 à 30 atomes de carbone ou un groupe -R⁵SR⁶, R² dans chacun des x groupes (R²O) est indépendamment un alkylène en C₂-C₄, R³ est un hydrogène, ou un groupe alkyle linéaire ou ramifié ayant 1 à 4 atomes de carbone, R⁵ est un groupe alkyle linéaire ou ramifié ayant 6 à 30 atomes de carbone, R⁶ est un hydrocarbyle ou un hydrocarbyle substitué ayant de 4 à 15 atomes de carbone et x est un nombre moyen de 1 à 60 ;
(g) des sels ammonium quaternaires monoalcoxylés ayant la formule : 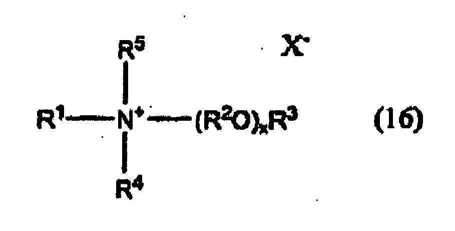 dans laquelle R¹ et R⁵ sont indépendamment un hydrogène ou un hydrocarbyle ou un hydrocarbyle substitué ayant de 1 à 30 atomes de carbone, R⁴ est un hydrocarbyle ou un hydrocarbyle substitué ayant de 1 à 30 atomes de carbone, R² dans chacun des x groupes (R²O) est indépendamment un alkylène en C₂-C₄, R³ est un hydrogène, ou un groupe alkyle linéaire ou ramifié ayant 1 à 30 atomes de carbone, x est un nombre moyen de 1 à 60, et X⁻ est un anion acceptable du point de vue agricole ; et
(h) des amines ayant les formules : 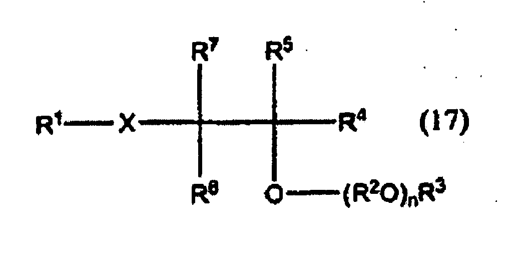 ou 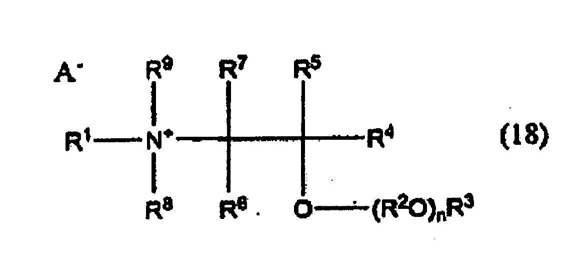 ou 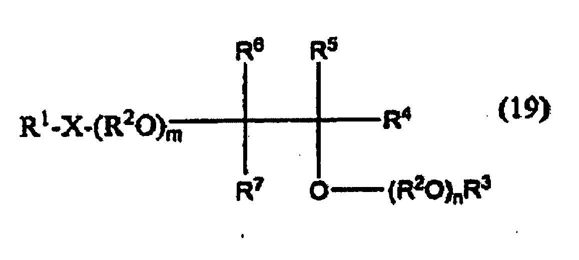 ou 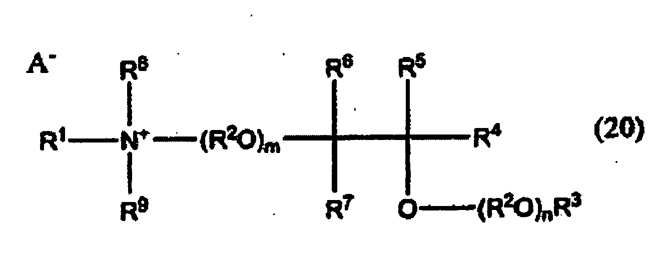 dans lesquelles R¹ et R⁹ sont indépendamment un hydrocarbyle ou un hydrocarbyle substitué ayant de 1 à 30 atomes de carbone, ou un groupe -(R²O)ₚR¹³; R² dans chacun des m groupes (R²O), n groupes (R²O), p groupes (R²O) et q groupes (R²O) est indépendamment un alkylène en C₂-C₄ ; R³, R⁸, R¹³ et R¹⁵ sont indépendamment un hydrogène, ou un hydrocarbyle ou un hydrocarbyle substitué ayant de 1 à 30 atomes de carbone ; R⁴ est un groupe -(CH₂)_{y}OR¹³ ou -(CH₂)_{y}O(R²O)_{q}R³; R⁵, R⁶ et R⁷ sont indépendamment un hydrogène, un hydrocarbyle ou un hydrocarbyle substitué ayant de 1 à 30 atomes de carbone, ou R⁴; R¹⁴ est un hydrogène, un hydrocarbyle ou un hydrocarbyle substitué ayant de 1 à 30 atomes de carbone, ou un groupe -(CH₂)_{z}O(R²O)ₚR³; m, n, p et q sont indépendamment un nombre moyen de 1 à 50 ; X est un groupe -N(R¹⁴)-, -N(R¹⁵)C(O)- ou -C(O)N(R¹⁵)- ; A⁻ est un anion acceptable du point de vue agricole ; et y et z sont indépendamment un entier de 0 à 30 ; et
un deuxième agent tensioactif choisi parmi le groupe consistant en :
(a) des diamines alcoxylées ayant la formule : 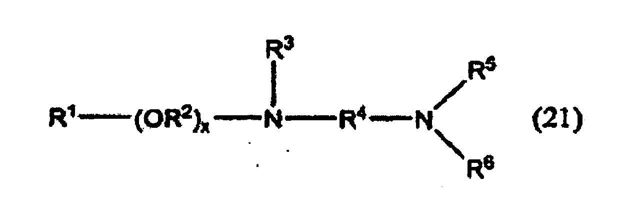 dans laquelle R¹ est un hydrocarbyle ou un hydrocarbyle substitué ayant de 8 à 30 atomes de carbone ; R² dans chacun des x groupes (R²O) et des y groupes (R²O) est indépendamment un alkylène en C₂-C₄ ; R³, R⁵ et R⁶ sont indépendamment un hydrogène, un hydrocarbyle ou un hydrocarbyle substitué ayant de 1 à 30 atomes de carbone, ou un groupe -(R²O)_{y}R⁷; R⁴ est un hydrocarbylène ou un hydrocarbylène substitué ayant de 2 à 6 atomes de carbone, un groupe -C(=NR¹¹)NR¹²R¹³-, -C(=O)NR¹²R¹³-, -C(=S)NR¹²R¹³-, -C(=NR¹²)-, -C(S)-, ou -C(O)- ; R⁷ est un hydrogène, ou un groupe alkyle linéaire ou ramifié ayant 1 à 4 atomes de carbone ; R¹¹, R¹² et R¹³ sont un hydrogène, un hydrocarbyle ou un hydrocarbyle substitué ayant de 1 à 30 atomes de carbone, x est 0 ou un nombre moyen de 1 à 30 ; et y est un nombre moyen de 1 à 50 ;
(b) des diamines ayant la formule : 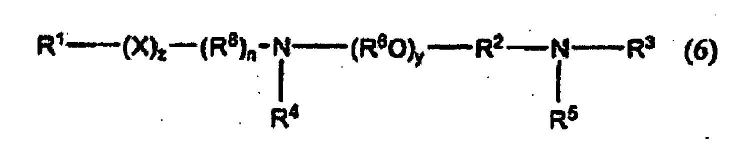 dans laquelle R¹ et R³ sont indépendamment un groupe alkyle linéaire ou ramifié ou un groupe alcényle linéaire ou ramifié ayant de 8 à 22 atomes de carbone, R² est un groupe alcylène linéaire ou ramifié ayant de 2 à 25 atomes de carbone, et R⁴ et R⁵ sont chacun indépendamment un hydrogène, un groupe alkyle ou un groupe alcényle linéaire ou ramifié ayant de 1 à 6 atomes de carbone ou un groupe -(R⁶O)ₓR⁷, R⁶ dans chacun des x groupes (R⁶O) est indépendamment un alkylène en C₂-C₄, R⁷ est un hydrogène ou un groupe alkyle linéaire ou ramifié ayant de 1 à 4 atomes de carbone, x est un nombre moyen de 1 à 30, et n, y et z sont 0 ;
(c) des diamines ayant la formule : 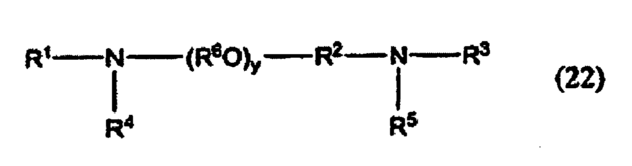 dans laquelle R¹, R³, R⁴ et R⁵ sont indépendamment un hydrogène, un hydrocarbyle ou un hydrocarbyle substitué ayant de 1 à 30 atomes de carbone, ou un groupe -(R⁶O)ₓR⁷, R² est un hydrocarbylène ou un hydrocarbylène substitué ayant de 2 à 30 atomes de carbone, R⁶ dans chacun des x groupes (R⁶O) et y groupes (R⁶O) est indépendamment un alkylène en C₂-C₄, R⁷ est un hydrogène, ou un groupe alkyle linéaire ou ramifié ayant de 1 à 30 atomes de carbone, x est un nombre moyen de 1 à 30 et y est un nombre moyen de 3 à 60 ;
(d) des diamines ayant la formule : 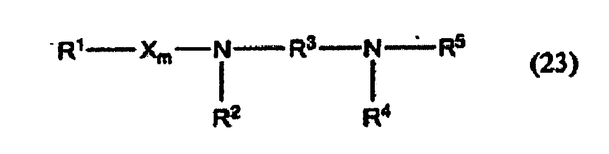 dans laquelle R¹, R² et R⁵ sont indépendamment un hydrogène ou un hydrocarbyle ou un hydrocarbyle substitué ayant de 1 à 30 atomes de carbone, ou un groupe -R⁸(OR⁹)ₙOR¹⁰, R³ est un hydrocarbylène ou un hydrocarbylène substitué ayant de 2 à 18 atomes de carbone, R⁸ et R⁹ sont individuellement un hydrocarbylène ou un hydrocarbylène substitué ayant de 2 à 4 atomes de carbone, R⁴ et R¹⁰ sont indépendamment un hydrogène ou un hydrocarbyle ou un hydrocarbyle substitué ayant de 1 à 30 atomes de carbone, m est 0 ou 1, n est un nombre moyen de 0 à 40, X est un groupe -C(O)- ou -SO₂- ;
(e) des diamines ayant la formule : 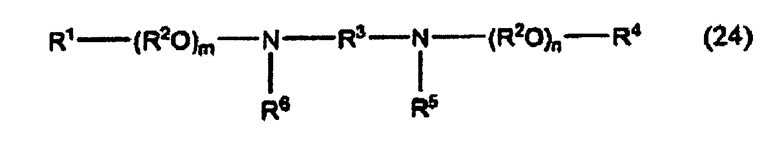 dans laquelle R¹, R⁴, R⁵ et R⁶ sont indépendamment un hydrogène ou un hydrocarbyle ou un hydrocarbyle substitué ayant de 1 à 30 atomes de carbone, R² dans chacun des m groupes (R²O) et n groupes (R²O) et R⁷ sont indépendamment un alkylène en C₂-C₄, R³ est un hydrocarbylène ou un hydrocarbylène substitué ayant de 2 à 6 atomes de carbone ou un groupe -(R²O)ₚR⁷-, m et n sont individuellement un nombre moyen de 0 à 50, et p est un nombre moyen de 0 à 60 ;
(f) des di-poly(hydroxyalkyl)amines ayant la formule : 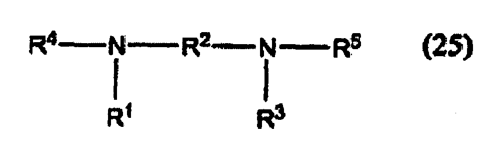 dans laquelle R¹ et R³ sont indépendamment un hydrogène ou un hydrocarbyle ou un hydrocarbyle substitué ayant de 1 à 22 atomes de carbone, R² est un hydrocarbylène ou un hydrocarbylène substitué ayant de 2 à 18 atomes de carbone, R⁴ et R⁵ sont indépendamment un hydroxyalkyle, un polyhydroxyalkyle ou un poly(hydroxyalkyl)alkyle ; et
(g) des triamines alcoxylées ayant la formule : 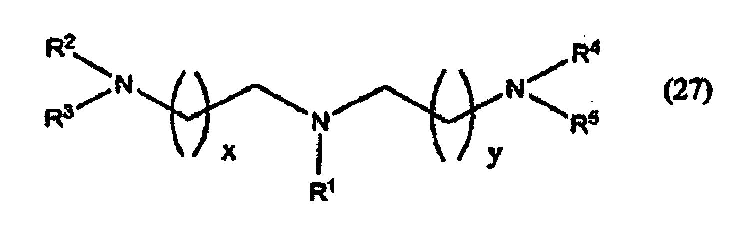 dans laquelle R¹ est un hydrocarbyle ou un hydrocarbyle substitué ayant de 1 à 30 atomes de carbone ; R², R³, R⁴ et R⁵ sont indépendamment un hydrogène, un hydrocarbyle ou un hydrocarbyle substitué ayant de 1 à 30 atomes de carbone, ou un groupe -(R⁸)ₛ(R⁷O)ₙR⁶ ; R⁶ est un hydrogène ou un groupe alkyle linéaire ou ramifié ayant 1 à 4 atomes de carbone, R⁷ dans chacun des n groupes (R⁷O) est indépendamment un alkylène en C₂-C₄ ; R⁸ est un hydrocarbylène ou un hydrocarbylène substitué ayant de 1 à 6 atomes de carbone, n est un nombre moyen de 1 à 10, s est 0 ou 1, et x et y sont indépendamment un entier de 1 à 4.

2. Composition pesticide aqueuse selon la revendication 1 dans laquelle le glyphosate est de façon prédominante sous la forme du sel potassium, monoammonium, diammonium, sodium, monoéthanolamine, n-propylamine, isopropylamine, éthylamine, éthylènediamine, hexaméthylènediamine ou triméthylsulfonium de celui-ci.

3. Composition pesticide aqueuse selon la revendication 2 dans laquelle le glyphosate est de façon prédominante sous la forme du sel potassium, monoammonium, diammonium, sodium, monoéthanolamine, n-propylamine, éthylamine, éthylènediamine, hexaméthylènediamine ou triméthylsulfonium de celui-ci.

4. Composition pesticide aqueuse selon la revendication 1 dans laquelle ladite composition est un concentré.

5. Composition pesticide aqueuse selon la revendication 3 dans laquelle le glyphosate est de façon prédominante sous la forme du sel potassium.

6. Composition pesticide aqueuse selon la revendication 3 dans laquelle ladite composition est un concentré.

7. Composition concentrée pesticide aqueuse selon la revendication 6 dans laquelle le glyphosate est en solution dans un milieu aqueux dans une quantité de plus de 300 grammes d'équivalent acide par litre de la composition et la composition comprend de 20 à 300 grammes par litre d'agents tensioactifs cationiques.

8. Composition concentrée pesticide aqueuse selon la revendication 7 dans laquelle la composition d'agents tensioactifs cationiques est en une émulsion stable.

9. Composition concentrée pesticide aqueuse selon la revendication 7 dans laquelle la composition d'agents tensioactifs cationiques est en une suspension stable.

10. Composition concentrée pesticide aqueuse selon la revendication 7 dans laquelle la composition d'agents tensioactifs cationiques est en une dispersion stable.

11. Composition concentrée pesticide aqueuse selon la revendication 7 dans laquelle la composition d'agents tensioactifs cationiques est en une solution.

12. Composition concentrée pesticide aqueuse selon la revendication 7 dans laquelle la composition d'agents tensioactifs cationiques est choisie de telle sorte que la composition a un point de trouble non inférieur à 50°C.

13. Composition concentrée pesticide aqueuse selon la revendication 7 ayant une viscosité de moins de 1 000 centipoises à 0°C à un taux de cisaillement de 45/s.

14. Composition concentrée pesticide aqueuse selon la revendication 13 ayant une viscosité de moins de 700 centipoises à 0°C à un taux de cisaillement de 45/s.

15. Composition concentrée pesticide aqueuse selon la revendication 14 ayant une viscosité de moins de 400 centipoises à 0°C à un taux de cisaillement de 45/s.

16. Composition concentrée pesticide aqueuse selon la revendication 15 ayant une viscosité de moins de 225 centipoises à 0°C à un taux de cisaillement de 45/s.

17. Composition concentrée pesticide aqueuse selon la revendication 7 comprenant du glyphosate de façon prédominante sous la forme du sel potassium de celui-ci en solution dans ledit milieu aqueux dans une quantité de 310 à 600 grammes d'équivalent acide par litre de la composition.

18. Composition concentrée pesticide aqueuse selon la revendication 17 comprenant du glyphosate de façon prédominante sous la forme du sel potassium de celui-ci en solution dans ledit milieu aqueux dans une quantité de 360 à 600 grammes d'équivalent acide par litre de la composition.

19. Composition concentrée pesticide aqueuse selon la revendication 18 comprenant du glyphosate de façon prédominante sous la forme du sel potassium de celui-ci en solution dans ledit milieu aqueux dans une quantité de 400 à 600 grammes d'équivalent acide par litre de la composition.

20. Composition concentrée pesticide aqueuse selon la revendication 19 comprenant du glyphosate de façon prédominante sous la forme du sel potassium de celui-ci en solution dans ledit milieu aqueux dans une quantité de 450 à 600 grammes d'équivalent acide par litre de la composition.

21. Composition concentrée pesticide aqueuse selon la revendication 19 comprenant du glyphosate de façon prédominante sous la forme du sel potassium de celui-ci en solution dans ledit milieu aqueux dans une quantité de 500 à 600 grammes d'équivalent acide par litre de la composition.

22. Composition concentrée pesticide aqueuse selon la revendication 19 comprenant du glyphosate de façon prédominante sous la forme du sel potassium de celui-ci en solution dans ledit milieu aqueux dans une quantité de 480 à 600 grammes d'équivalent acide par litre de la composition.

23. Composition concentrée pesticide aqueuse selon la revendication 19 comprenant du glyphosate de façon prédominante sous la forme du sel potassium de celui-ci en solution dans ledit milieu aqueux dans une quantité de 480 à 580 grammes d'équivalent acide par litre de la composition.

24. Composition concentrée pesticide aqueuse selon la revendication 19 comprenant du glyphosate de façon prédominante sous la forme du sel potassium de celui-ci en solution dans ledit milieu aqueux dans une quantité de 540 à 600 grammes d'équivalent acide par litre de la composition.

25. Composition concentrée pesticide aqueuse selon la revendication 7 dans laquelle la quantité totale de composition d'agents tensioactifs cationiques est de 60 à 240 grammes par litre de la composition concentrée pesticide.

26. Composition concentrée pesticide aqueuse selon la revendication 25 dans laquelle la quantité totale de composition d'agents tensioactifs cationiques est de 60 à 200 grammes par litre de la composition concentrée pesticide.

27. Composition concentrée pesticide aqueuse selon la revendication 7 dans laquelle la composition a une densité d'au moins 1,210 gramme/litre.

28. Composition pesticide aqueuse selon la revendication 1 dans laquelle la composition d'agents tensioactifs cationiques comprend une étheramine ayant la formule : 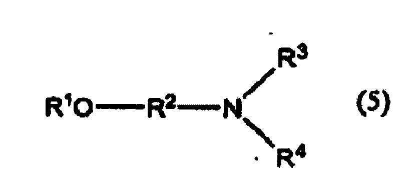 dans laquelle R¹ est un hydrogène ou un hydrocarbyle ou un hydrocarbyle substitué ayant de 1 à 30 atomes de carbone ; R² est un hydrocarbylène ou un hydrocarbylène substitué ayant de 2 à 30 atomes de carbone ; R³ et R⁴ sont indépendamment un hydrogène, un hydrocarbyle ou un hydrocarbyle substitué ayant de 1 à 30 atomes de carbone, ou un groupe -(R⁵O)ₓR⁶, R⁵ dans chacun des x groupes (R⁵O) est indépendamment un alkylène en C₂-C₄, R⁶ est un hydrogène ou un groupe alkyle linéaire ou ramifié ayant de 1 à 4 atomes de carbone, x est un nombre moyen de 1 à 50 ; et
une diamine ayant la formule : 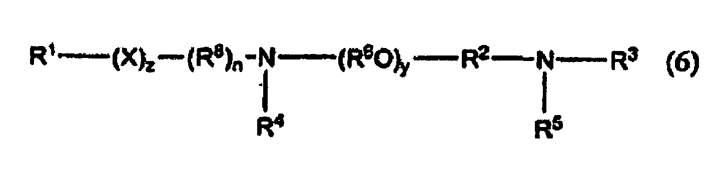 dans laquelle R¹ et R³ sont indépendamment un groupe alkyle linéaire ou ramifié ou alcényle linéaire ou ramifié ayant de 8 à 22 atomes de carbone, R² est un groupe alkylène linéaire ou ramifié ayant de 2 à 25 atomes de carbone, et R⁴ et R⁵ sont chacun indépendamment un hydrogène, un groupe alkyle ou alcényle linéaire ou ramifié ayant de 1 à 6 atomes de carbone ou un groupe -(R⁶O)ₓR⁷, R⁶ dans chacun des x groupes (R⁶O) est indépendamment un alkylène en C₂-C₄, R⁷ est un hydrogène ou groupe alkyle linéaire ou ramifié ayant de 1 à 4 atomes de carbone, x est un nombre moyen de 1 à 30, et n, y et z sont 0.

29. Procédé herbicide comprenant la dilution dans un volume approprié d'eau d'une quantité herbicidement efficace de la composition concentrée pesticide aqueuse selon la revendication 7 pour former un mélange d'application, et l'application du mélange d'application au feuillage d'une plante.

30. Procédé herbicide comprenant le mélangeage de la composition d'agents tensioactifs cationiques selon la revendication 28 avec un herbicide pour former une composition herbicide, la dilution dans un volume approprié d'eau d'une quantité herbicidement efficace de la composition herbicide pour former un mélange d'application, et l'application du mélange d'application au feuillage d'une plante ou de plantes.

31. Composition pesticide aqueuse selon la revendication 1 dans laquelle le rapport en poids du premier agent tensioactif sur le deuxième agent tensioactif est entre 20:1 et 1:10.

32. Composition pesticide aqueuse selon la revendication 31 dans laquelle le rapport en poids du premier agent tensioactif sur le deuxième agent tensioactif est entre 10:1 et 1:4.

33. Composition pesticide aqueuse selon la revendication 32 dans laquelle le rapport en poids du premier agent tensioactif sur le deuxième agent tensioactif est entre 8:1 et 1:3.

34. Composition pesticide aqueuse selon la revendication 28 dans laquelle le rapport en poids de l'étheramine sur la diamine est entre 20:1 et 1:10.

35. Composition pesticide aqueuse selon la revendication 34 dans laquelle le rapport en poids de l'étheramine sur la diamine est entre 10:1 et 1:4.

36. Composition pesticide aqueuse selon la revendication 35 dans laquelle le rapport en poids de l'étheramine sur la diamine est entre 8:1 et 1:3.
